(19) Europäisches Patentamt / European Patent Office / Office européen des brevets

(11) **EP 2 028 843 B1**

(12) **EUROPEAN PATENT SPECIFICATION**

(45) Date of publication and mention
of the grant of the patent:
**23.10.2013 Bulletin 2013/43**

(51) Int Cl.:
***H04N 5/232*** *(2006.01)*

(21) Application number: **08252773.0**

(22) Date of filing: **21.08.2008**

(54) **Focusing device and imaging apparatus using the same**

Fokussiervorrichtung und Bilderzeugungsvorrichtung damit

Dispositif de mise au point et appareil d'imagerie l'utilisant

(84) Designated Contracting States:
**DE FR GB**

(30) Priority: **21.08.2007 JP 2007214650**
**14.09.2007 JP 2007240278**
**17.03.2008 JP 2008067326**

(43) Date of publication of application:
**25.02.2009 Bulletin 2009/09**

(73) Proprietor: **Ricoh Company, Ltd.**
**Tokyo 143-8555 (JP)**

(72) Inventor: **Kitajima, Tatsutoshi**
**Tokyo 143-8555 (JP)**

(74) Representative: **Leeming, John Gerard**
**J A Kemp**
**14 South Square**
**Gray's Inn**
**London WC1R 5JJ (GB)**

(56) References cited:
**WO-A2-2007/092545    JP-A- 2007 011 314**
**JP-A- 2007 184 716    US-A1- 2001 017 649**

**Description**

The present invention relates to, for example, an imaging apparatus such as a digital camera to form a field image in a light-receiving part of an image pickup device via an imaging optical system, a focusing information obtaining device to obtain information for focus, and a focusing device for such a focus, as well as an imaging method in which such a focus is performed, a focusing method, and a method to obtain information for focus.

The present invention also relates to a focal length detection device which is used to image a field image by an image pickup device formed by an assembly of a plurality of pixels, and a camera having the same, in particular, a focal length detection device, an imaging apparatus, an imaging method and a camera, which can speed up the detection of focusing information and can realize a smaller-sized and lower-cost apparatus in its entirety.

Conventionally, an imaging apparatus such as a digital camera or the like to form a field image by a light-receiving part of an image pickup device via an imaging optical system and having an imaging system to obtain image data of a field is known. Such an imaging apparatus, generally, includes a function of automatically focusing the imaging optical system to a subject, that is, AF functions for focusing, that is, automatic focusing control function. In an AF (automatic focusing control) method used for automatic focusing (AF), because an image pickup device is built- in an image apparatus of this kind, a contrast value (focusing evaluation value) is calculated from image data of the image pickup device. Generally, a so- called climbing method is used to detect focusing by setting the lens position in which the contrast value is highest as the most focused position of contrast values obtained by shifting the position of a focusing lens (main lens) for focusing, that is, the position of a focusing, which is constituted from at least a portion of the imaging lens. When adopting such a climbing method, by dividing an imaging visual field into a plurality of areas and obtaining contrast values as focusing information whilst the imaging lens is reeled out, a peak position at a close- in side larger than a predetermined threshold value is set as a focus position, when photographing, the imaging lens is also performed driving in correspondence to the focus position.

The climbing method is a method to find out the focus by actually driving the main lens (focusing lens) for focusing (focus adjustment) use, time required for automatic focusing control is inclined to become longer, especially in a long focal point lens, the drive amount of the main lens increases so that time required for automatic focusing control becomes remarkably longer.

A triangular distance measuring method and a phase difference method are already known as AF methods other than such a climbing method.

A conventional triangular distance measuring method is a method to perform triangular survey to measure distance using an optical system disposed separately from the imaging lens of the imaging apparatus. A focus position of the main lens is calculated from the distance measuring information of a subject without moving the main lens so that the main lens can be driven at high speed to the focusing position. According to this triangular distance measuring method, specifically, for example, subject images are respectively formed in left and right light-receiving sensor arrays in left and right separate optical systems, misalignment of positions of the formed images are calculated, and subject distance is calculated based on the focusing information. With respect to a distance measuring sensor, a product that performs distance measuring of a plurality of areas of the imaging visual field using such a triangular distance method is sold on the market.

In such a way, in the triangular distance measuring method, the focusing position of a subject can be determined without actually moving the imaging lens. However, the precision of the triangular distance measuring method in principle decreases at a far distance side so that there is a problem in that the triangular distance measuring method is not suitable to be used in an imaging apparatus using an imaging lens with large zoom magnification or a telephoto lens.

Therefore, for example, in JP2004-279688A and so on, an AF method combining the climbing method and the triangular distance measuring method is disclosed. However, an AF method using the triangular distance measuring method requires a separate parts, such as an optical system, an elemental device, and the like for measuring or the like other than the imaging lens for taking an image including a main lens for focus alignment so that it is expensive and a small sized imaging apparatus cannot be realized.

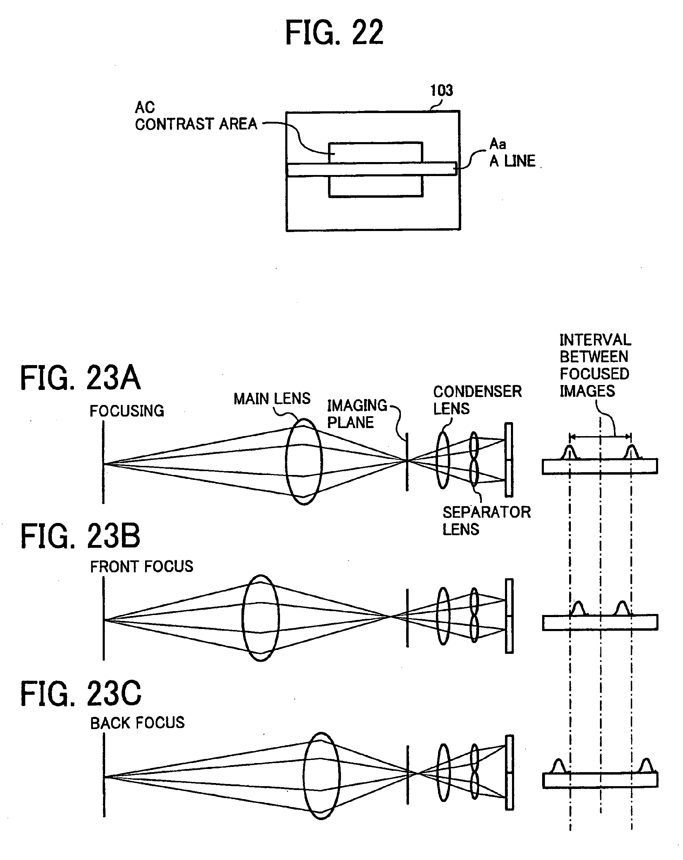

In addition, the phase difference method is, conventionally, mainly used in a single-lens reflex type camera, for example, as illustrated in U.S. Patent No. 4,185,191 and so on, in which light beams of a main lens for focusing adjustment are lead by a half mirror to an optical system for focusing detection prepared separately and misalignment of the focus of the main lens is detected by a line sensor which is a one dimensional image pickup device for focusing detection disposed separately from an image pickup device for image generation. That is, specifically, as illustrated in FIGs. 23A to 23C, two light beams passing through peripheral parts of an imaging lens (representatively illustrated by a main lens) when focusing are imaged on an imaging position equivalent surface, and then are separated to respectively enter separator lenses via condenser lenses. The entering light beams are imaged on a line sensor for AF, for example, a one dimensional CCD solid-state image sensor by these separator lenses. When focusing, two images with a regular interval as illustrated in FIG. 23A are formed. In a state where an image is imaged in front of an imaging area that is, in a state of a so-called front focus, as illustrated in FIG. 23B, the interval of the two images is in a narrower state than when focusing. In a state where an image is imaged behind an imaging area, that is, in a state of a so-called back focus, as illustrated in FIG. 23C, the interval of the two images is in a narrower state than when focusing. Based on the above image interval and the difference thereof, the misalignment direction and misalignment amount of focus are detected. However, these condenser lenses and separator lenses or the like for AF use cannot be disposed on an image pickup device for image photographing in which focal point should be determined, and an optical system member is disposed between the image pickup device and the main lens for separating and deflecting a portion of the imaging light beams as light beams for AF by a reflection mirror or the like and inputting the separated light beams for AF to a liner sensor for AF.

Misalignment direction and misalignment amount can also be detected by such a phase difference method so that the main lens can be driven in high speed to a focusing position.

However, because condenser lenses and separator lenses for AF are disposed in such a phase difference method, an optical system member of a reflection mirror or the like is disposed between the image pickup device and  the main lens for separating and deflecting a portion of the imaging light beams in such a phase difference method so that the configuration becomes more complex, thereby the apparatus becomes large and there is a problem in that a compact imaging apparatus cannot be realized.

In addition, for example, in JP2004-279683A and so on, an AF method combining the climbing method and the triangular distance measuring method are disclosed. In JP2002-328293A and so on, an AF method combining the climbing method and the phase difference method is disclosed. However, these AF methods requires separate optical systems and elements for measuring or the like other than the main lens for focusing, and therefore, there is a problem in that they are expensive and a small sized imaging apparatus cannot be realized.

Furthermore, as an AF technology applying the phase difference method, for example, in JP2002- 165126A and so on, a method to perform pupil division of light against the imaging lens represented by the main lens by a microlens array and a pair of photo sensors under each microlens so that a focal point of the imaging lens is detected from the pupil division image is disclosed.

In JP2002- 165126A and so on, for the purpose of realizing focusing detection by the phase difference method in high precision and high speed, a photoelectric conversion part of one pixel disposed on one microlens performs imaging of a subject using an image pickup device including a pair of photoelectric conversion parts constituted from a first photoelectric conversion part to receive light passing through an area of an imaging optical system and a second photoelectric conversion part to receive light passing through another area of the imaging optical system. A configuration of an imaging apparatus in which focus position detection is performed utilizing outputs of the first and second photoelectric conversion parts that receive  light passing through differing exit pupil positions is disclosed.

In the AF method illustrated in JP2002- 165126A, AF operation time is short, little space is needed and the number of parts is few. However, it is necessary to divide desired pupil positions from the main lens corresponding to photo sensors over which the microlens array is disposed and focal point detection is performed from those images. With respect to this point, an AF method illustrated in JP2002- 166126A, in the case where there is positional change of lens due to zoom operation of imaging lens, focus operation or the like or in the case where the position of the main lens varies individually for each apparatus or the like, the photo sensors under the microlenses cannot receive light from the desired pupil positions of the imaging lens represented by the main lens and correct focal point detection cannot be performed.

In such an imaging apparatus of JP2002- 165126A, by an image pickup device of a special constitution, imaging of a subject image and AF by the phase difference method can be performed. However, because the phase difference method detects focus misalignment by positional misalignments of a one dimensional image by light passing through an exit pupil position of the imaging lens, appropriate focus misalignment detection cannot be performed if the exit pupil position used for focus misalignment detection is blocked off by an aperture. Thereby, in the imaging apparatus of JP2002- 165126A, in order to correspond to different aperture values of the imaging lens, for example, pixels with different interval between the first photoelectric conversion part and the second photoelectric conversion part are prepared in advance and used separately corresponding to aperture values, the first photoelectric conversion part and the second photoelectric conversion part receive light passing through differing exit pupil position.

Against such the conventional technologies, the applicant provided an application beforehand as Japanese Patent Application No.2007-214650 of  the following method.

That is, in an imaging apparatus comprising an image pickup device including a light receiving part having a plurality of pixels that perform photoelectric conversion respectively, an imaging optical system to form a field image in the light- receiving part of the image pickup device and an image generation device to generate the field image using pixel data obtained from pixels of the image pickup device, a microlens array having a plurality of microlenses arrayed one dimensionally on a light receiving surface of the light receiving part of the image pickup device is disposed. Each microlens respectively covers a plurality of pixels of the light receiving part of the image pickup device. A configuration in which light is guided to the plurality of pixels corresponding to the exit pupil positions of the imaging optical system is adopted. Then for each micro lens of the micro lens array, within the plurality of pixels, pixels corresponding to each exit pupil position with respect to a plurality of predetermined exit pupil positions of the imaging optical system are selected and extracted across a plurality of microlenses. Using pixel data of the extracted pixels, a plurality of one dimensional field images obtained by reconstituting a plurality of one dimensional field images corresponding to the plurality of different exit pupil positions are compared. Focusing information of a subject is obtained based on misalignment of one dimensional field images with respect to a plurality of different exit pupil positions. Based on the focusing information obtained in such a way, the imaging optical system is focused to a subject and the image generation device generates a field image using pixel data of pixels which are not covered with the micro lens of the image pickup device.

In this case, in a case where there are changes of opening diameters or positions of lenses due to zoom operation or focus operation of the imaging lens or in a case where the position of the imaging lens varies for each apparatus, pixels to be selectively extracted corresponding to exit pupil positions are desirably changed according to the above changes or variations from pixels of the image pickup device corresponding to each micro lens.

In the above application, in order to handle the changes of opening diameters or positions of such an imaging lens or variations in the positions of the imaging lens for each apparatus, information with respect to the pixels to be selectively extracted corresponding to exit pupil positions from each pixel of the image pickup device corresponding to each microlens is preliminarily stored in the system as a table or obtained by a calculation method corresponding to provided information of changes or variations. Therefore, in the case the number of types of changes or variations is large, a large number of tables need to be stored or a large amount of calculations need to be performed.

In addition, in an imaging apparatus of JP2002-165126A described above, because an exit pupil position in which focus misalignment is detected is limited to a specific exit pupil position determined by an interval between the first photoelectric conversion part and the second photoelectric conversion part, the exist pupil position in which focus misalignment is detected can not correspond to zooming or large changes of aperture value (F value) and can not be moved within a surface to which the light axis intersects perpendicularly. In addition, the image pickup device requires microfabrication, a portion of two pixels used for focus misalignment detection of the image pickup device is in actual used as one pixel used for imaging, pixel density contributing to imaged image formation becomes half of the pixel density in the image pickup device structure.

In addition, in the image pickup device disclosed in JP2002-165126A, the structure of the image pickup device needs to be changed. The image pickup device has a different structure with an image pickup device having general versatility so that the manufacturing cost thereof becomes inconveniently high.

In addition, in a camera having a focal length detection function (focusing detection function), a characteristic part of a subject is detected, in order to focus the characteristic part, a configuration to perform control of the main lens is adopted but in a state where the image is largely blurred, the detection of the characteristic part of the subject also becomes difficult.

JP- A- 2007- 011314 discloses an imaging device comprising a microlens array arranged at a distance from the focus plane of an image formation optical system. The microlens array has a plurality of micro lenses arrayed at a predetermined pitch. A light reception array, having a plurality of light reception parts corresponding to the microlenses of the microlens array, receives an image from the focal plane via each of the microlenses.

WO- A- 2007/092545 discloses an imaging apparatus in which light passing through a main lens is directed to photosensors via a plurality of micro lenses.

JP- A- 2007- 184716 discloses an imaging device wherein imaging pixels and focus detection pixels are arranged on the same substrate. The pixels for imaging and the pixels for focus detection are intermingled.

An object of the present invention is to provide an imaging apparatus, a focusing device and an imaging apparatus in which an image pickup device which is used for imaging a field image is also used for focusing control with a simple configuration to perform highly precise auto focusing control according to various imaging condition.

According to the present invention there is provided a focusing device and an imaging apparatus in accordance with the appended claims.

FIG.1 is a perspective view schematically illustrating a configuration of a main part to explain a principle of focusing control of an imaging apparatus according to an embodiment of the present invention.

FIG.2 is a sectional view illustrating an example of a specific configuration of an imaging lens used in an imaging apparatus according to an embodiment of the present invention.

FIG.3 is a perspective view schematically illustrating an example of layout configuration of a microlens array used in an imaging apparatus according to an embodiment of the present invention in relation to a light-receiving surface of an image pickup device.

FIG.4 is a schematic view illustrating an example of a specification of each microlens of a microlens array used in an imaging apparatus according to an embodiment of the present invention.

FIG.5 is a schematic view illustrating a relationship between an imaging lens, each microlens, and pixels corresponding to each microlens to explain a principle of focusing control method using a microlens array in an imaging apparatus according to an embodiment of the present invention.

FIG.6 is a schematic view conceptually illustrating a relationship between each pixel of an image pickup device and each microlens of a microlens array to explain a principle of a focusing control method using a microlens array in an imaging apparatus according to an embodiment of the present invention.

FIG.7A is a schematic view illustrating a relationship between an imaging lens, each microlens, and pixels corresponding to the microlens to explain light passing a point a of the imaging lens.

FIG.7B is a diagram illustrating a corresponding relationship between a microlens and pixels.

FIG.8A is a schematic view illustrating a relationship between an imaging lens, each microlens, and pixels corresponding to the microlens to explain light passing a point b in the imaging lens.

FIG.8B is a diagram illustrating a corresponding relationship between a microlens and pixels.

FIG.9 is a schematic view illustrating a relationship between a field, an imaging lens, each microlens, and pixels corresponding to the microlens to explain a principle of focusing control method using a microlens array in an imaging apparatus according to an embodiment of the present invention.

FIG.10 is a schematic view illustrating a relationship between an imaging lens, each microlens, and pixels corresponding to the microlens to explain a principle of focusing control method using a microlens array in an imaging apparatus according to an embodiment of the present invention.

FIG.11 is a schematic view illustrating a relationship between an imaging lens, each microlens, and pixels corresponding to the microlens to explain a principle of focusing control method using a microlens array in an imaging apparatus according to an embodiment of the present invention.

FIG.12A is a schematic view illustrating a relationship between a field, an imaging lens, each microlens, and pixels corresponding to the microlens to explain a principle of focusing control method using a microlens array in an imaging apparatus according to an embodiment of the present invention.

FIG.12B is a view illustrating a positional relationship between a point-a image, a point-b image, and a point-c image with respect to a near field point.

FIG.12C is a view illustrating a positional relationship between a point-a image, a point-b image, and a point-c image with respect to a focused field point.

FIG.12D is a view illustrating a positional relationship between a point-a image, a point-b image, and a point-c image with respect to a far field point.

FIG.13A is a schematic view illustrating a relationship between a field, an imaging lens, each microlens, and pixels corresponding to the microlens in a case of light from a point disposed on a left side of the field to explain a principle of focusing control method using a microlens array in an imaging apparatus according to an embodiment of the present invention.

FIG.13B is a view illustrating a positional relationship between a point-a image, a point-b image, and a point-c image with respect to a near field point in a case of light from a point disposed on a left side of the field.

FIG.13C is a view illustrating a positional relationship between a poilnt-a image, a point-b image, and a point-c image with respect to a focused field point in a case of light from a point disposed on a left side of the field.

FIG.13D is a view illustrating a positional relationship between a point-a image, a point-b image, and a point-c image with respect to a far field point in a case of light from a point disposed on a left side of the field.

FIG.14 is a schematic view illustrating another example of a relationship between a microlens and pixels corresponding to the microlens.

FIG.15 is a schematic view illustrating another example of a relationship between a microlens and pixels corresponding to the microlens.

FIG.16 is a schematic view illustrating a relationship between a microlens group and pixels of an image pickup device.

FIG.17 is a schematic view illustrating a method to obtain pixel data corresponding to pixels covered with a microlens for focus control by interpolating.

FIG.18 is a schematic view illustrating a method to obtain pixel data corresponding to pixels covered with a microlens for focus control by integrally moving an image pickup device with a microlens array.

FIG.19 is a block diagram schematically illustrating a configuration of a main part of a digital camera as an imaging apparatus using a focus control method according to an embodiment of the present invention.

FIG.20 is a schematic flowchart illustrating a processing to control when recording an imaged image in a digital camera.

FIG.21 is a schematic timing chart illustrating an operating timing of each part when recording an imaged image in a digital camera.

FIG.22 is a schematic view illustrating an area corresponding to a microlens on an A line of a pixel screen of an image pickup device provided with a microlens array in a focus control operation when recording an imaged image in a digital camera and a contrast area to obtain contrast information.

FIG.23A is a principle of a detection of focus misalignment in a focused state in a conventional phase difference method.

FIG.23B is a principle of a detection of focus misalignment in a front focused state in a conventional phase difference method.

FIG.23C is a principle of a detection of focus misalignment in a back focused state in a conventional phase difference method.

FIG.24 is a schematic view illustrating a relationship an imaging lens, each microlens, and pixels corresponding to the microlens in a case where a position of the imaging lens is moved.

FIG.25 is a schematic view illustrating a relationship between an imaging lens, each microlens, and pixels corresponding to the microlens in a within / without opening determination of the imaging lens.

FIG.26 is a schematic view illustrating an imaging lens, each microlens, and pixels corresponding to the microlens in a within. / without opening determination of the imaging lens in a case where the imaging lens is far from the microlens.

FIG.27 is a schematic view illustrating a relationship between an imaging lens, F value of each microlens, and pixels corresponding to each microlens in a determination of within / without opening of the imaging lens.

FIG.28 is a schematic view illustrating a relationship between an imaging lens, F value of each microlens, and pixels corresponding to the microlens in a determination of within / without opening of the imaging lens.

FIG.29 is a schematic flowchart illustrating a processing to control when recording an imaged image in a digital camera.

FIG.30 is a schematic view illustrating a first microlens group to explain a focusing principle according to an embodiment of the present invention.

FIG.31 is a schematic view illustrating a second microlens group to explain a focusing principle according to an embodiment of the present invention.

FIG.32 is a perspective view illustrating an example of a specific shape of a microlens array used in an imaging apparatus according to an embodiment of the present invention and layout configuration of the microlens array in relation to a light-receiving surface of an image pickup device.

FIG.33 is a schematic view illustrating a focusing principle according to an embodiment of the preset invention.

FIG.34 is a schematic view illustrating a focusing principle according to an embodiment of the present invention.

FIG.35 is a schematic flowchart specifically illustrating AF processing in processing of recording an imaged image in a digital camera.

FIG.36 is a schematic view illustrating an operation of an aperture to explain AF processing in processing of recording an imaged image in a digital camera.

FIG.37 is an external view illustrating an example of a camera according to an embodiment of the present invention.

FIG.38 is a block circuit diagram illustrating an example of a system circuit built-in a camera according to an embodiment of the present invention.

FIG.39 is a flowchart illustrating a outline of a main processing in a camera according to an embodiment of the present invention.

FIG.40 is a schematic view illustrating an imaging optical system of a camera according to an embodiment of the present invention.

FIG.41 is a optical diagram illustrating an example of a main lens.

FIG.42A is a schematic view illustrating a relationship between a main lens and light beams entering the main lens to enter pixels.

FIG.42B is a plan view illustrating a relationship between one microlens and one pixel area.

FIG.43 is a schematic view illustrating a principle according to an embodiment of the present invention.

FIG.44 is an explanatory view illustrating a relationship between a field and a field image.

FIG.45 is a corresponding table illustrating a relationship between a microlens and an incident light beam entering via the microlens.

FIG.46 is an explanatory view illustrating a relationship between light beams and pixels passing via the microlens in a case where a main lens is in a focused state.

FIG.47 is an explanatory view illustrating a relationship between light beams and pixels passing via the microlens in a case where a main lens is in a non-focused state.

FIG.48 is a schematic view illustrating a relationship between light beams and pixels passing via the microlens in a case where a main lens is in a non-focused state on a subject.

FIG.49 is a schematic view illustrating a state where a light beam passing a lens main point of a microlens enters across a plurality of pixels adjacent to each other.

FIG.50 is a graph illustrating a curve line of a focusing evaluation value obtained using assumed focused images according to an example of the present invention.

FIG.51 is a flowchart of a focal length detection processing according to an example of the present invention.

FIG.52 is a graph illustrating a curve line of a focusing evaluation value obtained using assumed focused images according to an example of the present invention.

FIG.53 is a flowchart of a focal length detection processing according to an example of the present invention.

FIG.54A is a schematic view illustrating a principle of a characteristic part detection processing of a subject, according to an example of the present invention.

FIG.54B is a schematic view illustrating a principle of a characteristic part detection processing of a subject, according to an example of the present invention.

FIG.54C is a schematic view illustrating a principle of a characteristic part detection processing of a subject, according to an example of the present invention.

FIG.55 is a flowchart illustrating a focal length detection processing according to an example of the present invention.

FIG.56 is a flowchart illustrating a focal length detection processing according to an example of the present invention.

FIG.57 is a schematic view illustrating a configuration of an imaging optical system according to an example of the present invention.

FIG.58 is a perspective view illustrating a microlens array plate according to an example of the present invention.

FIG.59 is a schematic view illustrating a corresponding relationship between a microlens array and a pixel area according to an example of the present invention.

FIG.60 is a schematic view illustrating a display screen divided state into a plurality of areas.

FIG.61 is a graph illustrating a curve line of a focusing evaluation value obtained using assumed focused images according to an example of the present invention.

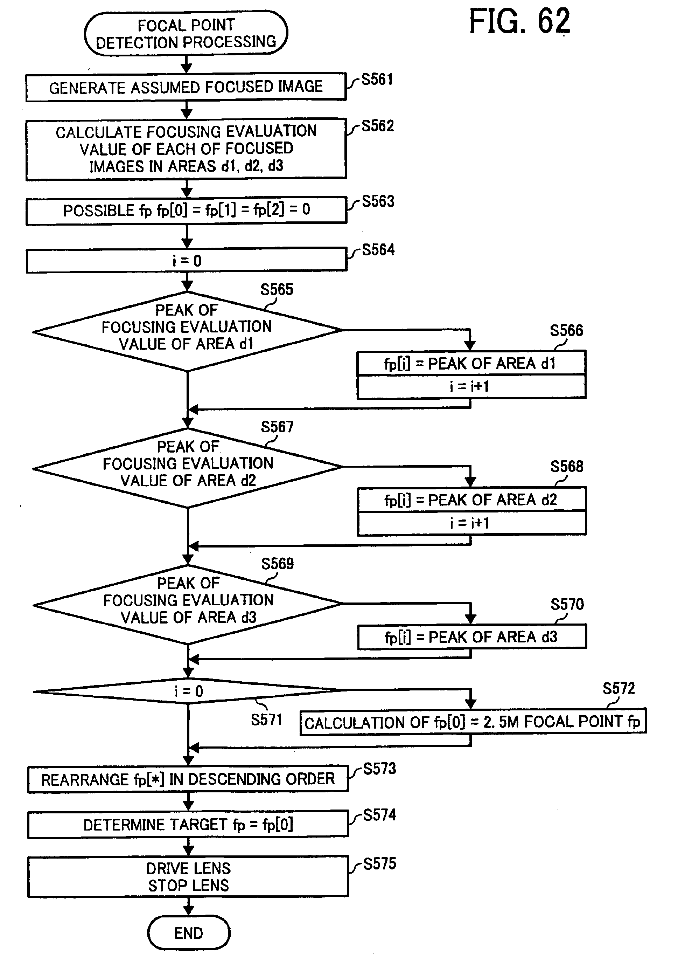

FIG.62 is a flowchart of a focal length detection processing according to an example of the present invention.

FIG.63 is an explanatory view illustrating a positional relationship between a display screen and a main subject.

FIG.64 is a flowchart illustrating an image compensation processing according to an example of the present invention.

FIG.65 is an explanatory view illustrating a divided display screen according to an example of the present invention.

FIG.66 is an explanatory view illustrating an example of curves of focusing evaluation values obtained when a focused state of the J line shown in FIG.66 is evaluated.

FIG.67 is a view illustrating a digital filter used in an image compensation processing according to an example of the present invention.

FIG.68A is an explanatory view illustrating an assumed focused image according to an example of the present invention.

FIG.68B is an explanatory view illustrating an assumed focused image according to an example of the present invention.

Preferred embodiments of an imaging apparatus, a focusing device, an imaging method, a focusing method, a device to obtain focusing information, a method to obtain focusing information, focal length detection device, and the like are described in detail hereinbelow with reference to the accompanying drawings.

The focusing device according to an embodiment of the present invention can be used in an imaging apparatus.

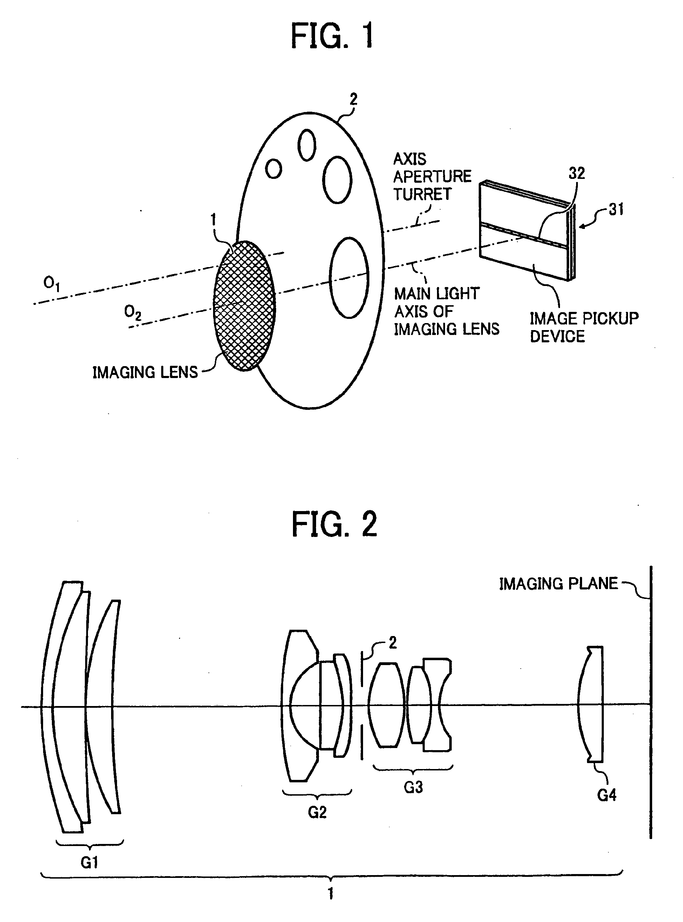

FIGs.1 to 5 illustrate a configuration of a main part of the imaging apparatus according to a first embodiment of the present invention. FIG.1 is a schematic view illustrating a configuration of the main part of the imaging apparatus. The focusing device according to an embodiment of the present invention includes an image pickup device 3 which has a light-receiving part 31 such as an image pickup body having a plurality of pixels each configured to perform photoelectric conversion of incident light to obtain pixel data and to output the pixel data, a focusing information obtaining device served as a function of the later-described CPU 108 to obtain focusing information of a field image based on the pixel data output from the image pickup device 3, and an optical element array member 32 such as a microlens array having a plurality of optical elements such as a plurality of microlenses which are provided on a light-receiving surface of the image pickup body 31 of the image pickup device 3. Each of the plurality of mirolenses covers predetermined plural pixels of the image pickup body 31 of the image pickup device 3. The focusing information obtaining device is configured to obtain the focusing information of the field image based on the pixel data of a part of the covered predetermined plural pixels.

The focusing device may further include an imaging optical system such as an imaging lens 1 configured to image the field image onto the light-receiving part of the image pickup device 3.

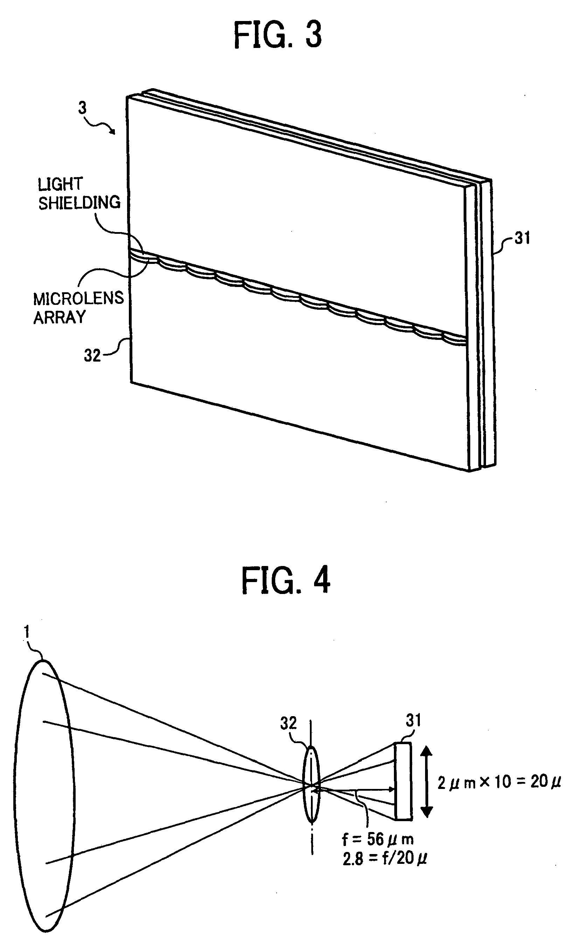

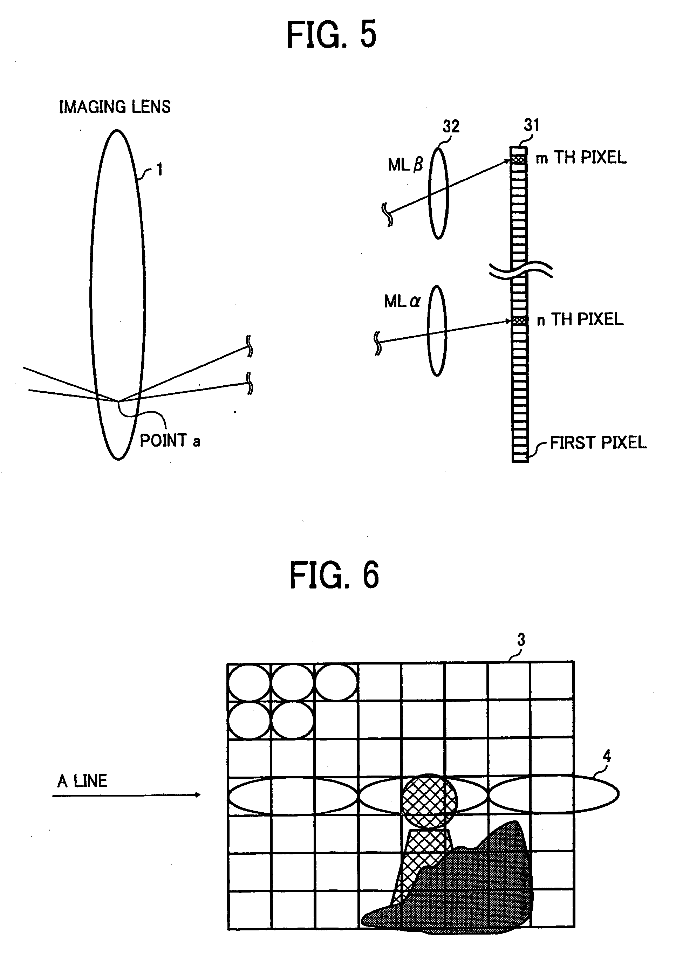

FIG.2 is a cross-sectional view illustrating an example of a specific configuration of the imaging lens 1 as the imaging optical system for imaging used in the imaging apparatus of FIG.1. FIG.3 is a perspective view illustrating an example of a specific configuration of the optical element array member such as a microlens array 32 used in the imaging apparatus of FIG.1. That is, the optical element array member is the microlens array 32 having a plurality of microlenses as the plurality of optical elements which are disposed so as to cover only a part of the pixels of the image pickup body 31 of the image pickup device 3. Each of the microlenses of the microlens array 32 is configured to lead the incident light to the pixels of the image pickup device, which are covered with the corresponding microlens, in accordance with an exit pupil position of the imaging optical system. FIG.4 is a schematic view illustrating an example of the specifications of each microlens which constitutes the microlens array used in the imaging apparatus of FIG.1. FIG.5 is a schematic view illustrating a relationship of a main lens, microlenses of the microlens array and a group of pixels of an image pickup device in an imaging apparatus of FIG.1.

With reference to FIGs.1 to 5, a general outline of an AF method of an imaging apparatus according to this embodiment of the present invention is described. In the AF method, only the image pickup body 31 and the microlens array 32 are used to image an image in the imaging apparatus so that the imaging apparatus can be a compact, and misalignment amount in focus can be determined with TTL method. In addition, in this method, focusing information and pixel data to form an image can be obtained from the single image pickup device 3 only by providing, in addition to the conventional configurations of the conventional imaging lens and the conventional image pickup device, the plurality of microlenses on a front surface side of the image pickup body 31, that is, a subject side or a light-receiving surface side of the image pickup body 31,

The imaging apparatus illustrated in FIGs.1 to 5 includes an imaging lens 1, an aperture 2 and the image pickup device 3 having the image pickup body 31 and the microlens array 32 provided with the image pickup body 31.

In the imaging apparatus of FIG.1, the imaging lens 1 is specifically, for example, an imaging optical system constituted by a plurality of lenses as shown in FIG.2. For easy understanding, in FIG. 1 and so on, the imaging optical system is illustrated as the imaging lens 1 constituted from one representative main lens of the plurality of lenses shown in FIG. 2.

The imaging lens 1 illustrated in FIG. 2 is, for example, constituted as a zoom lens which is configured to change a focusing length as desired. As illustrated hereby, the imaging lens 1 is constituted by disposing sequentially from an object side, a first lens group G1, a second lens group G2, a third lens group G3 and a fourth lens group G4. The first lens group G1 is constituted by sequentially disposing from the object side a cemented lens, in which a minus meniscus lens having a convex surface directed toward the object side is closely-attached to a plus meniscus lens having a convex surface directed toward the object side, as well as a plus meniscus lens having a convex surface directed toward the object side and thereby the first lens group G1 functions as a first zoom group. The second lens group G2 is constituted by sequentially disposing from the object side a minus meniscus lens having a convex surface directed toward the object side as well as a cemented lens in which.a plus lens constituted by a plane-convex lens having a convex surface directed toward an imaging surface side is closely-attached to a minus meniscus lens having a convex surfaces directed toward the imaging surface side, and thereby the second lens group G2 functions as a second zoom group. The third lens group G3 is constituted by sequentially disposing from the object side a plus lens constituted by a double-convex lens as well as a cemented lens in which a plus lens constituted by a double-convex lens is closely-attached to a minus lens constituted by a double-concave lens, and thereby the third lens group G3 functions as a focus group for focus adjustment. The fourth lens group G4 is constituted by one plus lens. The plus lens is constituted by a convex lens having a convex surface directed toward the object side. The plus lens may be constituted by a double-convex lens having one convex surface with a stronger curvature than the other convex surface, which is directed to the object side. The aperture 2 is disposed so as to be inserted between the second lens group G2 and the third lens group G3. The imaging surface, that is, an imaging area of the image pickup device 3 is formed at a side of a surface of the fourth lens group G4, which is far away from the object.

The imaging lens illustrated in FIG. 2 performs zooming by moving the first lens group G1 and the second lens group G2, which are the first and second zoom groups, and performs focus slide by moving the third lens group G3 which is the focus group.

In FIG. 1, the aperture 2 is schematically illustrated as a so-called aperture turret in a turret method where a plurality of openings with different bore diameters are disposed on a same circumference of a disk-shaped douser rotatably disposed about an aperture turret axis approximately parallel to a light axis of the imaging lens 1 (main light axis) as a center. In the turret method, one of the aperture openings is inserted onto the light axis of the imaging lens 1 (main light axis) by rotational manipulations to select the required bore diameter. Although the aperture 2 is schematically illustrate as the aperture turret, of course, the aperture 2 can be constituted by a general aperture mechanism in which an aperture opening is adjusted by opening and closing manipulations of a plurality of impeller blades.

The image pickup device 3 is formed by the image pickup body 31 constituted from a solid-state image sensing device such as an image sensor constituted by a CMOS (complementary metal-oxide semiconductor), a CCD (charge-coupled device) or the like and a microlens array 32 disposed in the front surface side of the image pickup body 31.

The microlens array 32, specifically, for example, as illustrated in FIG. 3, is disposed on an incidence side of a light-receiving surface of the image pickup body 31. In the microlens array 32, a plurality of microlenses each having the same size and shape are, for example, linearly arrayed along a horizontal direction in relation to a vertical direction of an image screen of the image pickup device 3 on a flat plate-like and light-transmissive body which is formed similarly to a cover glass covering the light-receiving surface of the image pickup device 3. In this case, in the microlens array 32, the microlenses each formed in a semi- or partially- cylindrical form with an axis direction which is perpendicular to the arrayed direction are closely arrayed in the horizontal direction so as to be very short and spindly lenticular lens. Each microlens of the microlens array 32 is formed in a short dimension corresponding to a single pixel line or a plurality of pixel lines in the axial direction of the partially-cylindrical microlenses, and formed in a dimension corresponding to a plurality of pixels in the arrayed direction. Each partially-cylindrical microlens of the microlens array 32 is configured to appropriately provide light shielding to both end surfaces of the partially-cylindrical microlens, that is, to illustrated upper and lower - surfaces of the microlenses so that light other than the light emitted from the microlens is prevented from entering the pixel line(s).

The above described plurality of microlenses may be disposed one-dimensionally on the light-receiving surface of the light-receiving part of the image pickup body 31 and each microlens may be configured to cover exclusively a plurality of pixels consecutive to each other. That is to say, a pixel is covered by only one lens but not a plurality of microlenses. The pixels in line corresponding to the linearly arrayed microlenses are used for the AF operation according to an embodiment of the present invention, pixels of the image pickup body 31 other than the above pixels in line can be used for forming to fulfill the original function of imaging.

An example of the specific specifications of each microlens of the microlens array 32 is described with reference to the schematic view illustrated in FIG. 4. In FIG. 4, in the microlens array 32, only a microlens positioned on the light axis of the imaging lens 1 is schematically illustrated by an ellipsoid. As the image pickup body 31, only a pixel group corresponding to the aforementioned microlens is schematically illustrated by a rectangle.

A case where a pixel pitch of the image pickup body 31 is set to 2 $\mu$m, a pixel number corresponding to one microlens of the microlens array 32 is set to 10 pixels, and an F value of the imaging lens 1 is set to F2.8 is explained.

Since the pixel number of the image pickup device 3 corresponding to one microlens is set to 10 pixels, a length corresponding to one pixel line is obtained as follows:

$$2\ \mu\mathrm{m} \times 10 = 20\ \mu\mathrm{m}.$$

A focusing length f of one microlens is obtained as follows:

$$f\ /\ 20\ \mu = 2.8,$$

that is,

$$f = 56\ \mu\mathrm{m}.$$

Therefore, one microlens of the microlens array 32 has a lens diameter of 20 $\mu$m in a longitudinal direction, that is, in the arrayed direction of the microlenses and the focusing length of 56 $\mu$m.

When performing the AF processing, even if the F value of the imaging lens 1 is F 2.8, there are cases in which image performance at both ends near an outer circumference of the imaging lens 1 is not particularly good so that pixels of an inside area corresponding to F4 are used as a pixel group of the image pickup device 3 for AF processing.

Next, principles of the imaging apparatus according to the first embodiment of the present invention, in particular, principles of the AF method in a digital camera as the imaging apparatus are described in detail.

First, referring to FIG. 5, a fundamental configuration of the imaging apparatus according to the present embodiment, in particular, a fundamental configuration of the AF system in the digital camera is described.

In FIG. 5, the imaging lens 1 illustrated as a representative of a main lens, one microlenses ML$\alpha$ and another microlens ML$\beta$ of the microlens array 32, and pixel parts of the image pickup body 31, which correspond respectively to the microlens ML$\alpha$ and microlens ML$\beta$ are schematically illustrated. In this case, as shown in FIG. 5, when lens systems, such as the imaging lens 1 constituted by the plurality of lenses and each individual microlens having a plane- convex lens shape, which constitutes the microlens array 32 are schematically illustrated as ellipsoids regardless the shapes thereof in cross- section.

In FIG. 5, an n th pixel situated within the pixel part corresponding to the one microlens ML$\alpha$ and an m th pixel situated within the pixel part corresponding to the another microlens ML$\beta$ are- respectively configured to receive light from a point "a" of the imaging lens 1 by microlenses ML$\alpha$ and ML$\beta$.

There are pixels which receives light from the point a with regard to microlens other than microlenses ML$\alpha$ and ML$\beta$. By appropriately selecting those pixel data for array, an image of a field can be constituted by the light passing through the point a of the imaging lens 1. In the same way, corresponding to each microlens, by selecting for array pixel data of each pixel that receives light passing through a corresponding position of the imaging lens 1, an image of a field can be constituted by the light passing through each position of the imaging lens 1.

In this way, an act of forming an image of the field according to an exit pupil position of the imaging lens 1 based on the pixel data of pixels that receive the light from the imaging lens 1 corresponding to each microlens of the microlens array 32 is referred to as a re-constitution of an image.

The AF processing according to the first embodiment of the present invention is performed by such a system.

Although the AF method, in principle, has a compact configuration in which only the image pickup body 31 for imaging a field image and the microlens array 32 constituted by arraying microlenses are used, a TTL (Through the Lens) method is adopted to determine a misalignment amount of focus. To complement further, in addition to the configuration of the conventional imaging lens and the image pickup device for imaging a field image, only a microlens array in a front surface of the image pickup body 31 is disposed so that information for focus slide and pixel data for forming a field image can be obtained from the single image pickup device.

As schematically illustrated in FIG. 6, in the image pickup device 3, represented by a CMOS image sensor and a CCD image sensor, pixels are constituted by light receiving elements disposed in a matrix form. Hereby, the image pickup device 3 is covered with the microlens array 32 where the plurality of microlenses, each of which is illustrated as an ellipsoidal shape in FIG.6 and is disposed across a plurality of pixels along the pixel line shown by an A line, are arrayed. In addition, in some types of a light receiving element of the image pickup device such as a CMOS image sensor or a CCD image sensor or the like, microlenses for light collecting are disposed for each individual pixel, and these microlenses for every pixel are disposed to complement light quantity shortage due to a smaller light receiving area per pixel in association to higher resolution and higher pixel number. The microlens array 32 according to an embodiment of the present invention differs from the above microlenses for each individual pixel.

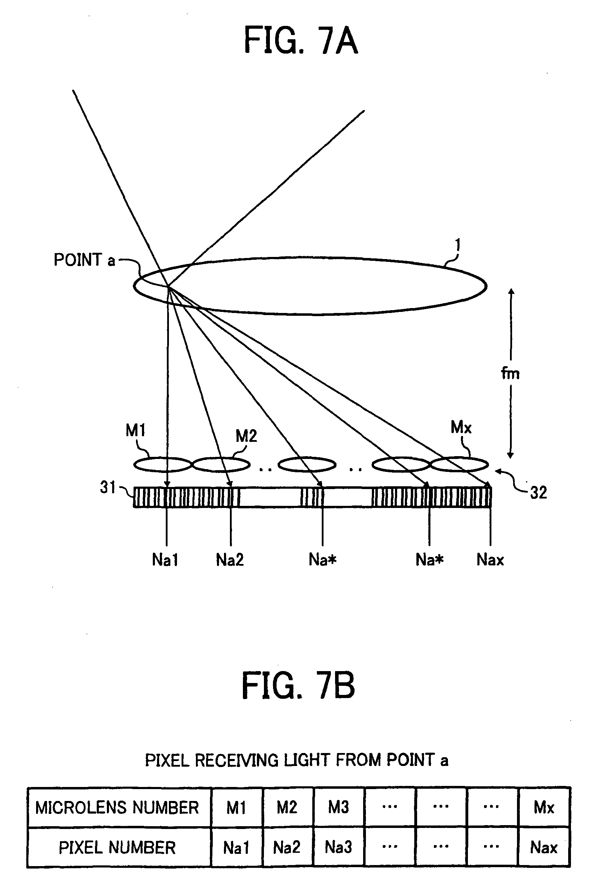

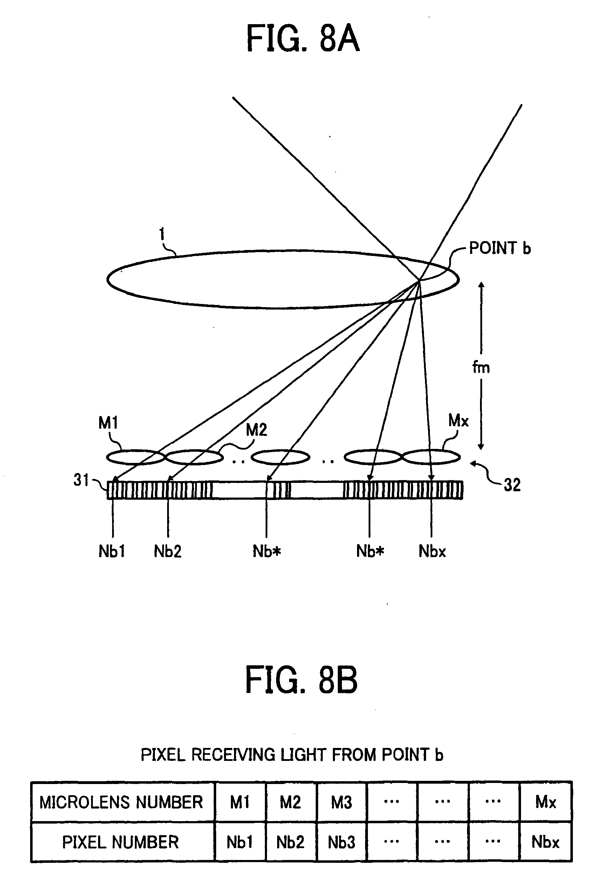

FIGs. 7A, 7B, 8A and 8B illustrate conceptually the principles of the AF method according to an imaging apparatus of the present embodiment.

As shown in FIGs. 7A and 8A, the microlens array 32 in which a plurality of microlenses M1, M2 ··· Mx are closely arrayed adjacent to the front surface (light-receiving surface) of the image pickup body 31 is disposed hereby. Each of the microlenses M1 to Mx of the microlens array 32 respectively covers a plurality of pixels of the image pickup device 3. In addition, hereby for easy understanding, dimensions of pixels of the image pickup device 3 are described to be infinitesimally small.

In the case the microlens array 32 is not provided, light from a whole surface (exit pupil) of the imaging lens 1 is emitted to each pixel of the image pickup device 3, but in this case, as shown in FIG.7B, because the microlens array 32 is provided, pixels Na1, Na2, ··· Nax of the image pickup device 3 receive light rays each emitted from the point a of the imaging lens 1 by each microlens in a distance fm between the microlens array 32 and the imaging lens 1 (main lens). FIG. 7B shows a corresponding relationship between the pixels Na1 to Nax and.the microlenses M1 to Mx that receive the light from the point a. That is to say, when an image is re-constituted by extracting image data of only the pixels Na1 to Nax from the image pickup device 3, one dimensional information of an image of a field viewed from the point a of the imaging lens 1, which is obtained along the arrayed direction of the microlens array 32 can be obtained.

In the same way, in FIG. 8A, in a distance fm between the microlens array 32 and the imaging lens 1, pixels Nb1, Nb2, ··· Nbx of the image pickup device 3 receive light rays each emitted from the point b of the image lens 1. In FIG. 8B, a corresponding relationship between the pixels Nb1 to Nbx and the microlenses M1 ~ Mx that receive light from the point b is illustrated. Therefore, when an image is re-constituted by extracting image data of only the pixels Nb1 to Nbx from the image pickup device 3, one-dimensional information of the image of the field viewed from the point b of the imaging lens 1, which is obtained along the arrayed direction of the microlens array 32 can be obtained. Furthermore, although not illustrated in FIGs. 7A, 7B, 8A and 8B, pixels Nc1, Nc2, ··· Ncx for creating an image of a field viewed from a center point c of the imaging lens 1 can also be determined.

As described above, if the image is re-constituted in the distance fm using the respective preliminarily-determined pixels Na1, Na2, ··· Nax, Nb1, Nb2, ··· Nbx, Nc1, Nc2, ··· Ncx, field images viewed from the respective points a, b and c of the imaging lens 1 with mutual parallax difference can be obtained. In principle, the focusing information corresponding to the focused state (focusing, front focus, back focus) of a subject can be calculated from the images with such parallax difference.

In addition, in the above descriptions, dimensions of the pixels of the image pickup device 3 are set to be infinitesimally small, but in actual, each pixel has a limited size (area) so that each of the points a, b and c of the imaging lens 1 also has an area of some extent.

Hereby, in a distance measuring focusing system of a distance measuring method, for example, a method other than the TTL method, that is, the distance measuring method using ultrasonic sound or a triangular distance measuring method or the like where information does not go through an imaging optical system, the information corresponding to a distance to the subject, which is referred to as distance measuring information, can be obtained. In contrast, in the distance measuring focusing system of the TTL method where the information is obtained through the imaging optical system as describe above, the information corresponding to the focused state of focusing, front focus, back focus and the degree of these and so on against the subject is referred to as focusing information.

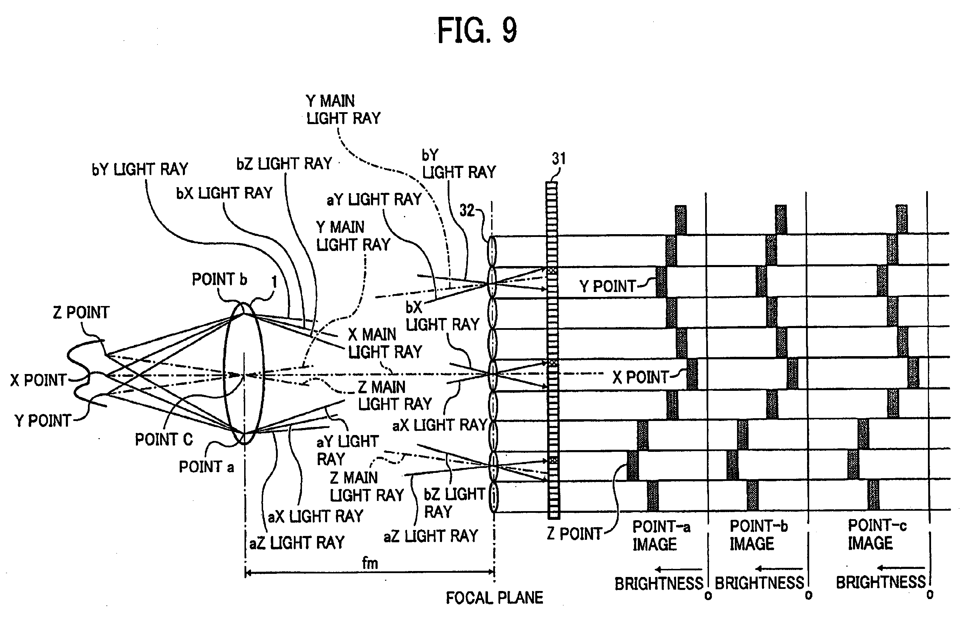

The principles of the AF method of the focusing device according to the first embodiment of the present invention described above are described in further detail with reference to FIGs. 9 to 11 which illustrate focusing determinations of a general subject.

FIG. 9 illustrates the case where the subject is in a precisely-focused state on the microlens array 32.

Of light from a point X of the subject, light passing through the point a and light passing through the point b of the imaging lens (main lens) are respectively set as an aX light ray and a bX light ray. In the same way, Of light from a point Y and a point Z, light passing through the point a and light passing through the point b are respectively set as aY and aZ light rays and bY and bZ light rays. In addition, main light rays from the points X, Y and Z are respectively set as X, Y, and Z main light rays. These X, Y, and Z main light rays respectively enter different microlenses of the microlens array 32.

Hereby, since the subject is in a precisely-focused state on the microlens array 32, the aX and aY main light rays enter the microlens to which the X main light ray enter, and these light rays are received by different pixels under the microlens. In addition, in the case where the distance between the imaging lens 1 and the microlens array 32 is fm, these pixels are recognized preliminarily in the system of the device as the pixels that receive the light from the points a and b. In the same way, the Y and Z main light rays enter microlenses, the light from the points a and b enter the microlenses, and are respectively received by the different pixels under the microlenses.

The pixels which are disposed under each microlens in the distance fm between the imaging lens 1 receive the light rays from the points a and b. Brightness, that is, luminance of the pixels receiving the light ray from the point a and that from the point b are obtained and compared so that a contrast image of the subject viewed from the point a and that viewed from the point b, which are referred to as a point-a image and a point-b image, respectively, are obtained. In the point-a image and the point-b image, black filled parts represent pixels of the subject image, and an illustrated lateral position, that is, a deviation from a base line "0" represents brightness on the extracted pixels disposed under each microlens. When the subject image is in a precisely-focused state on the microlens array 32, as illustrated hereby, the position of point-a image and the point-b image becomes the same.

As described above, the fact that the imaging lens 1 is precisely focused on the microlens array 32 can be known by the positions of the point-a image and point-b image.

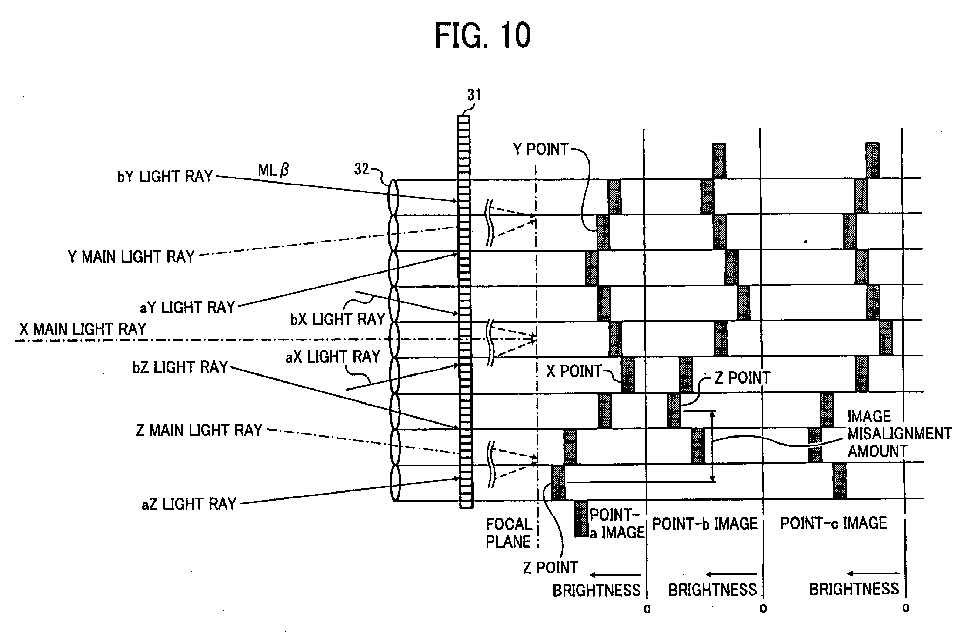

FIG. 10 illustrates the case in which the focus of the subject is out of alignment by the imaging lens 1 in a backward direction from the microlens array 32 (to a side of the image pickup device 3).

In this case, the aX, bX, aY, bY, aZ, and bZ light rays respectively enter different separate microlenses before intersection therebetween. As a result, the point-a image and the point-b image mutually occur image deviation or image misalignment.

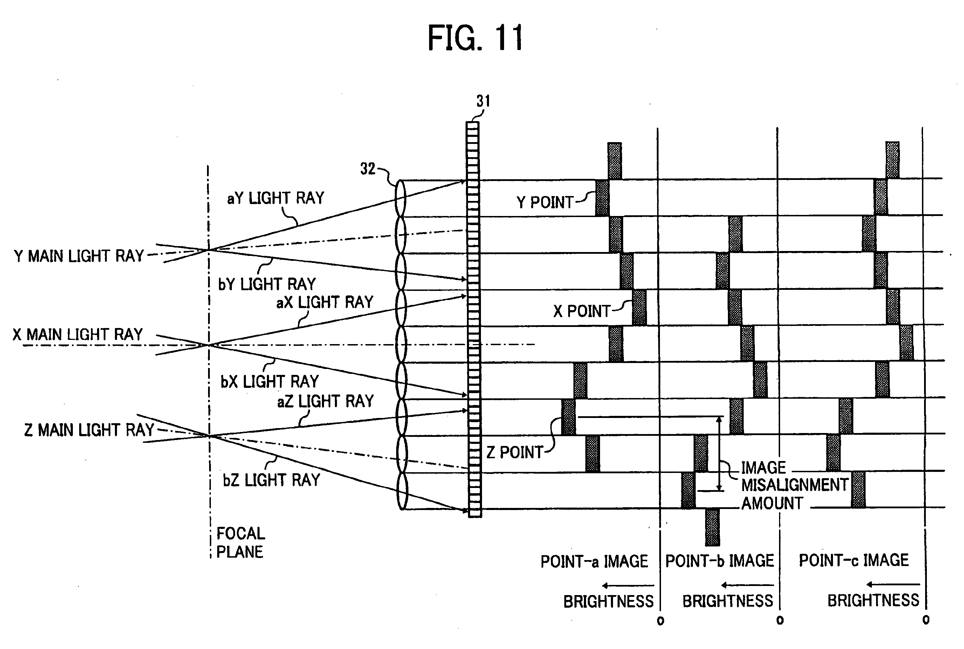

In addition, FIG. 11 illustrates the case in which the focus of the subject is out of alignment in a forward direction from the microlens array 32 (to the side of the object).

In this case, the aX, bX, aY, bY, aZ, and bZ light rays respectively enter different separate microlenses after intersection therebetween. As a result, the point-a image and the point-b image mutually occur image misalignment.

In addition, the directions of the image misalignment in FIGs.10 and 11 are mutually reversed. It can be known whether the focus of the imaging lens 1 is either in a posterior part or an anterior part of the microlens array 32. Therefore, the image misalignment can be used as focusing information that illustrates the focused state, focus misalignment state, and the like.

In addition, if an image formed on the microlens receiving the main light ray, such as the X main light ray, the Y main light ray, or the X main light ray, which is projected from the center of the imaging lens 1, is referred to as a point-c image, the point-c image illustrated in FIGs. 9 to 11 is imaged on the same position, regardless of whether a focus surface of the subject image imaged by the imaging lens 1 is positioned on the microlens array 32 or positioned in the posterior part or the anterior part of the microlens array 32. Therefore, when the point-c image is used as a reference, the direction and amount of the focus misalignment can be easily determined.

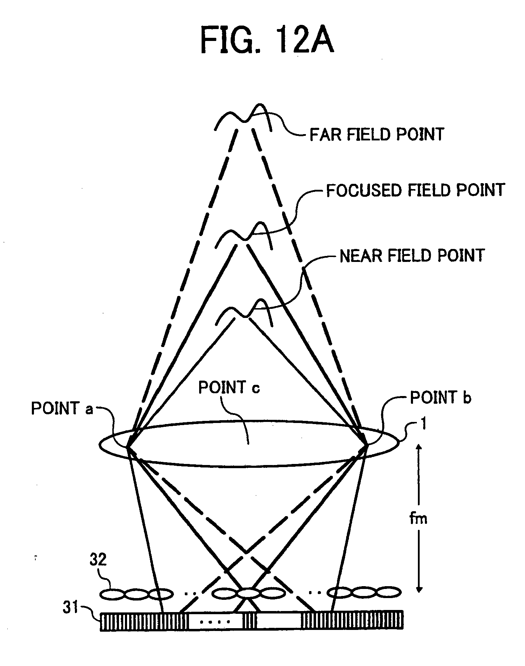

Next, specific examples of focusing determination are described with reference to FIGs. 12A to 13D.

As illustrated in FIG. 12A, in the images obtained by the light passing through the points a, b and c of the imaging lens 1, an image of the subject on the precisely-focused field point is imaged on the microlens array 32, that of the subject on a near field point which is closer than the precisely-focused field point is imaged on a point farther than the microlens array 32 from the imaging lens 1 and that of the subject on a far field point which is farther than the focused field point is imaged on an intermediate position between the imaging lens 1 and the microlens array 32.

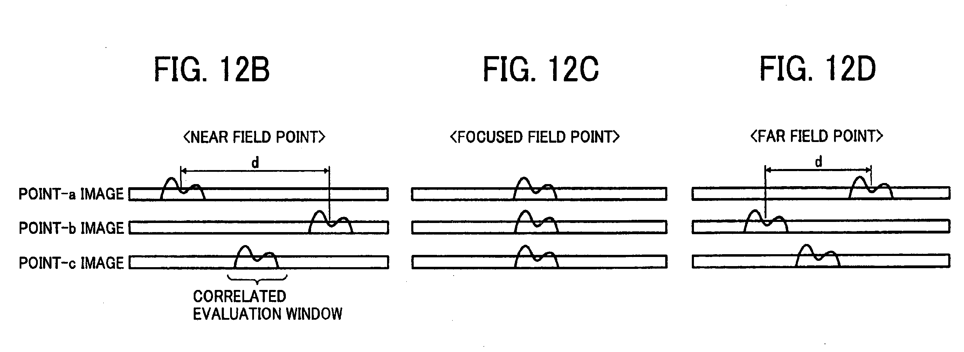

As described above, when the images obtained by the light passing through the points a, b and c, that is, the point-a image, the point-b image and the point-c image are formed by reconstitution, the point-a image, the point b image and the point c image as illustrated in FIG. 12B for the near field point, in FIG. 12C for the focused field point, FIG. 12D for the far field point are respectively formed.

Hereby, a correlated evaluation window is defined near a center part of the point-c image. If an image is positioned at a center area of the point-c image, the image is the subject image on a vertically extending main light axis of the imaging lens 1. An image position having a strong correlation with a contrast image in the correlated evaluation window, that is, a position of an image that approximately matches the contrast image is searched within the point-a image and the point-b image.

That is, a calculation method includes the steps of comparing an image in the correlated evaluation window to evaluate correlation set in the point-c image with the point-a image of the point-b image in the same width in the window while shifting the image position and of calculating the correlation, that is, the image position with high correlation. An integration value of a difference of pixel data of the windows to be compared is calculated and it is found that the degree of matching is high when the value is small.

If, in the matching images of the point- c image, the point- a image and the point- b image, as shown in FIG. 12B, the point- c image is positioned at a  center, the point- a image is on a left side of the point- c image, the point- b image is on a right side of the point- c image, the image is focused at the near field point (Near field point) closer than a target subject image and it is determined that the focused state is in a so- called front focus state. If, in the matching images of the point- c image, the point- a image and the point- b image, as shown in FIG. 12C, the point- c image, the point- a image and the point- b images all match each other, it is determined that the focused state is in the precisely focused state. In addition, if, in matching images of the point c- image, the point- a image and the point- b image, as shown in FIG. 12D, the point- c image is at a center, the point- a image is on a right side position to the center, and the point b image is on a left side position to the center, the subject image is at a far field point farther than the target subject image and it is determined that the focused state is in a so- called back focus state.

In addition, as shown in FIGs. 12b to 12d, the method may include a step using only the point- a image and the point- b image, and sequentially evaluating the matching degree of the image in the window while deviating the correlated evaluation window in a reverse direction from the center of each image. Accordingly, image positions with high correlation can be calculated and focus misalignment can be detected. However, by adding the point- c image as illustrated hereby, correlations of the three images can be evaluated and matching images can be detected more precisely.

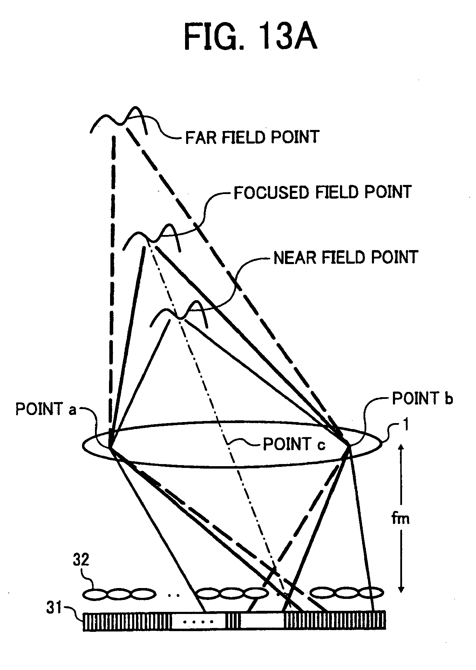

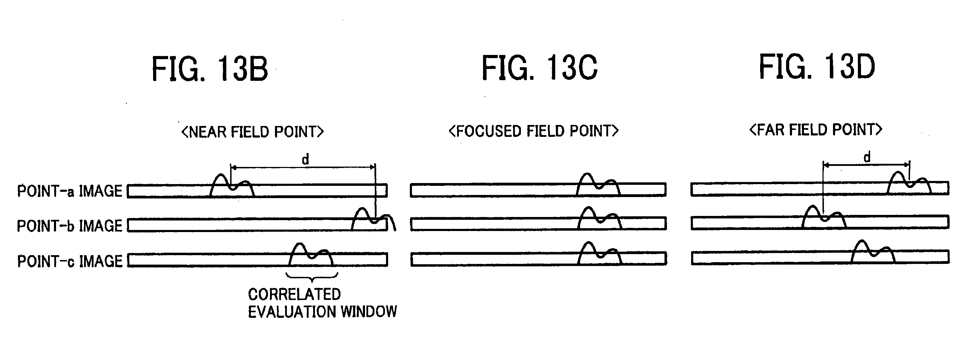

FIG. 13 illustrates an example in which the correlated evaluation window of the point-c image is positioned in a position other than the vicinity of the center. FIG. 13A illustrates.an optical geometrical relationship of the imaging lens 1, the pixel line of the image pickup body 31, the microlens array 32, the subject on the focused field point of the field, the subject on the near field point and the subject on the far field point. FIG. 13B illustrates  the near field point, FIG. 13C illustrates the focused field point of the field, FIG. 13D illustrates the far field point in which the point-a image, the point-b image and the point-c image are formed respectively.

In this case, too, the point-a image or the point-b image are compared with an image within the correlated evaluation window set by the point c image while shifting, with the same window width, the image positions of the point-a image or the point-b image as well as an image within the correlated evaluation window set by the point c image, to calculate image positions with high matching degree. If, as shown in FIG. 13B, the point-c image is disposed a little to the right from the center, the point-a image is disposed at a left side position of the point-c image, and the point-b image is disposed at a right side position of the point-c image, it can be determined that the focused state is in a front focus state where the subject image is focused at the near field point (Near field point) which is closer than the target subject. As shown in FIG. 13C, if the point-c image is in a position a little to the right, and the point-a image and the point-b image all match each other, it can be determined that the focused state is in the precisely-focused state. In addition, as shown in FIG. 13D, if the point-c image is disposed a little to the right as the center, the point-a image is disposed at a right side position, and the point-b image is disposed at a left side position, it can be determined that the focused state is in the back focus state where the subject image is focused at the far field point (Far field point) farther than the target subject.

In addition, using only the point-a image and the point-b image as shown in FIGs. 13B to 13D, the matching degree of the images in the window is sequentially evaluated while shifting the correlated evaluation windows of each image in a reverse direction from the center of each image to calculate image positions with high correlation and focus misalignment can be detected. However, by adding the point-c image as illustrated hereby, correlations of three images can be evaluated and matching images can be more precisely detected.

In such a way, not only the focused state of the subject other than the subject on the main light axis of the imaging lens 1 can be detected but also each state of focus misalignment of the front focus and the back focus can be detected. Because the directions of misalignment of the point-a image and the point-b image in back focus and front focus are mutually inverse, the directions of focus misalignment can also be determined. If such a state of focus misalignment is detected, for example, by moving the imaging lens (main lens) 1 in an inverse direction to the focus misalignment direction and controlling until the precisely-focused state is obtained, the focused state can be set after the above control is completed. In addition, an approximate distance of the subject can be calculated from the distance fm between the imaging lens (main lens) 1 and the microlens array 32 and a difference of image positions of the point-a image and the point-b image.

In addition, as clear from the above descriptions, by a setting position of the correlated evaluation window of the point-c image, focus information of the subject existing on different light rays out of the light rays on the axis of the imaging lens 1 can be obtained so that it is possible to perform focusing control of the subject not only on the center of a screen but also on edge parts of the screen. That is, in FIG. 13, in order to detect the focus of a part deviated toward the left side of the field, the position of the correlated evaluation window of the point-c image is set to a position to the right from the center. In addition, in FIG. 12, in order to detect the focus in the vicinity of the center of the field, the position of the correlated evaluation ... window of the point-c image is set to a position near the center.

In the above descriptions, the case in which the image pickup device 3 is monochrome, that is, a single color image pickup device or the like is used, and singular rightness information is set as pixel data is described. In such a case, in order to reconstitute the point-a image and the point-b image by extracting pixel data passing through the microlenses, as described above, it is only necessary to simply extract the corresponding pixels of pertinent positions.

However, in the case of a color image pickup device in which a plurality of color information is distributed and disposed via a pixel filter or the like, in order to receive no influence by color, it is necessary to use pixel data of the same color or pixel data of a plurality of colors of the same combination. That is, in such a color image pickup device, in order to reconstitute the point-a image or the point-b image by extracting pixel data passing through the microlenses, the pixel data of the same color need to be extracted.

Therefore, in the case a general color image pickup device in which a plurality of color information is distributed and disposed is directly used, pixel data of particular color information is extracted and all of the pixels cannot be utilized for AF use and high resolution capability cannot be obtained. In such a case, in the pixels corresponding to each microlens of the microlens array 32 for AF use, by removing a color filter or the like, the pixels are turned monochrome so that all of the pixels can be set as the targets for extraction and high resolution capability can be obtained.

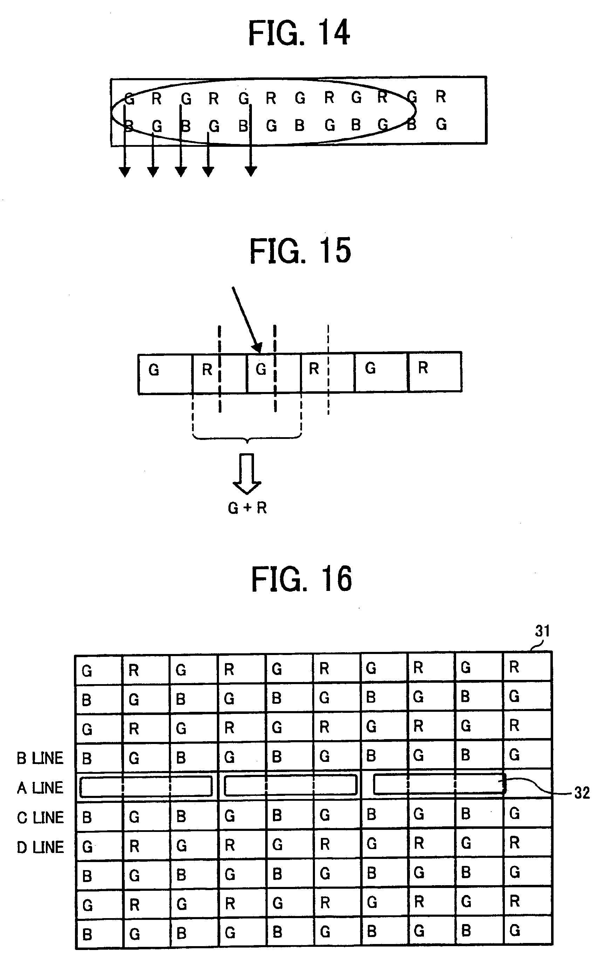

Alternatively, as illustrated in FIG. 14, in a color image pickup device in which pixels of R (red), B (blue) and G (green) are distributed in so-called Bayer array, two pixel lines (two levels) of a portion of the color image pickup device are covered with each microlens of the microlens array 32 for AF use, for example, by setting the pixel data of G of two levels, that is, up and down levels to extraction targets for AF, the resolution capability of image reconstitution is secured.

Furthermore, in a color image pickup device in which pixels of R, B and G are distributed in so-called Bayer array, in the case a pixel line of a portion of one line (one level) of the color image pickup device is covered with each microlens of the microlens array 32 for AF use, as illustrated in FIG. 15, for example, image reconstitution is performed by setting pixel data of R + G as a unit and as extraction targets for AF.

In a case where automatic focusing is performed in such a way, a pixel part of the image pickup body 31 other than the parts corresponding to each microlens of the microlens array 32 needs to be devoted at least to either the display or the recording as an imaged image of a field image imaged by the imaging lens 1. However, as shown by the A line illustrated in FIG. 6 and FIG. 16, data of pixels passing through a microlens group of the microlens array 32 which is an optical system for AF use differs from general pixel data that constitutes a field image other than the data of pixels so that the field image including the A line cannot be generated.

The imaging apparatus according to this embodiment of the present invention includes an image generating section which is formed by, for example, the CPU 108 or the like, and is configured to generate the field image by use of pixel data of pixels which are uncovered with the microlenses. The image generating section includes a section configured to interpolate pixel data of the pixels covered with the microlenses by use of the pixel data of surrounding pixels which are uncovered with the microlens array 32.

That is, in recent years, the image pickup body 31 grew higher in pixel number so that in the case of monitoring or the like in an imaging apparatus such as a digital camera or the like in which imaging performance is less required, it is not necessary to use all pixel data, for example, image data can be generated without using the pixel data passing through the microlens group, in particular, the A line pixel data. In addition, in consideration of the fact that the image pickup device 3 grew higher in pixel number, pixel values of the pixels equal to the part passing through the microlens group of the microlens array 32 which is an optical system for AF use can be calculated, for example by interpolation processing or the like from the nearby peripheral pixel values of the B line, the C line or the like of FIG. 16.

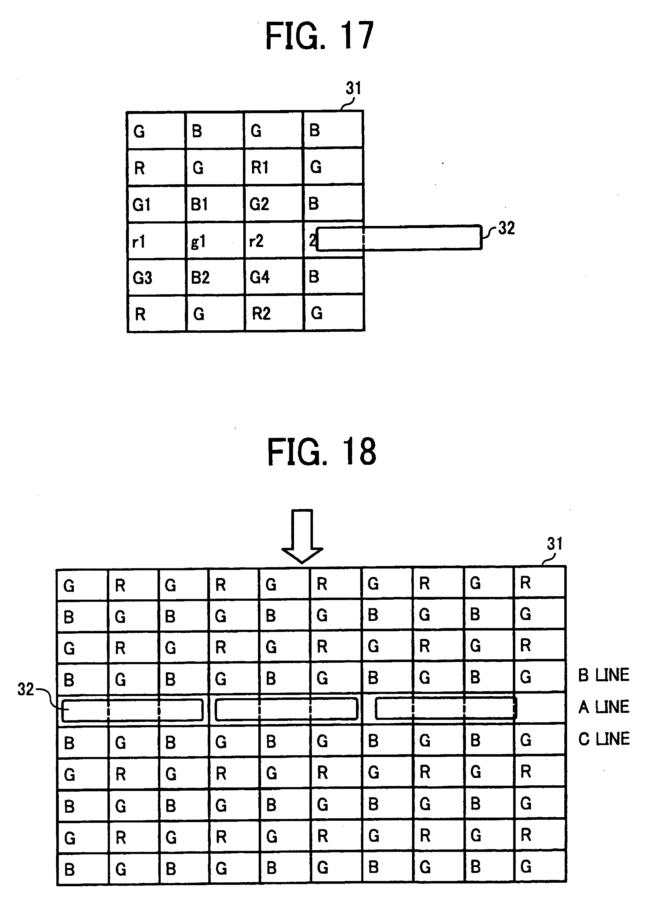

An example where the microlens array 32 for AF use is disposed on the image pickup body 31 of Bayer array is illustrated in FIG. 16. In such a case, with regard to the parts corresponding to the A line and in which Bayer data cannot be calculated, for example, as illustrated in FIG. 17, gl is calculated from G1, G2, G3 and G4 on the periphery thereof, and r2 can be calculated from R1 and R2 based on the degree of change of B1 and B2 as well as G2 and G4. That is, in the present invention, in order to generate an imaged image, the generation of an image without using the A line which is not necessary for resolution is the same to the case of an interpolation calculation based on the B line and the C line nearby in which the interpolation coefficient is set to zero and is an embodiment of an imaging apparatus according to the present invention.

In addition, as described above, it is not necessary to dispose color filters of R, G, and B or the like for the A line, photoelectric conversion efficiency is better without color filters so that the size of pixels can be smaller for only the parts of the A line. In such a case, it is possible to ignore the A line when generating an image and such an embodiment is within the scope of the present invention.

In addition, pixel data for generating an image can be obtained by displacing the position of the microlens array 32 as an optical system for AF use. In this case, it is possible to move only the microlens array 32 without moving the image pickup body 31, but position alignment between the pixel line of the image pickup body 31 and the microlens array 32 is not easy. In such a case, appropriate position alignment is performed for the image pickup body 31 and the microlens array 32 so that they are mutually fixed and moved as a whole.

Hereby, the case of performing position alignment for the image pickup body 31 and the microlens array 32 is described.

In the position alignment, the image pickup body 31 and the microlens array 32 are positioned and fixed to each other, and then the image pickup body 31 provided with the microlens array is displaced as a whole. That is, as illustrated in FIG. 16, the image pickup body 31 provided with the microlens group of the microlens array 32 for AF use, which is disposed on the A line, is moved in a downward direction by two pixels as illustrated in FIG. 18. In such a way, a pixel line which is disposed two lines above the A line corresponds to the original A line position and pixel data of G and R on the original A line can be obtained by this line. At the moment, the B line which is disposed one line above the A line corresponds to the C line one line below the original A line. The A line corresponds to the D line which is disposed two lines below the original A line.

As described above, a configuration including an image pickup device held in a substrate with a coil and a stage with a magnet that enables the substrate of the image pickup device to move vertically and horizontally can, for example, be used for a method of moving the image pickup device 3. At the moment, a Hall element for position detection can be disposed on the substrate of the image pickup device. By applying electrical current to the coil on the substrate of the image pickup device, electromagnetic force is operated between the coil and the magnet on the side of the stage so that the image pickup device can be moved on the stage. The movement amount can be detected by the Hall element so that it becomes possible to control the pixel number in movement. In addition, in the case where the image pickup device is moved a little erratically or roughly, correlations of each pixel are strengthened between the two images to be generated and the two pixels are superimposed so that pixel data of the pixel disposed on a position corresponding to a part of the microlens array 32 which is an optical system for AF use can mutually interpolate between both images.

In addition, the microlens array 32 as an optical system for AF use may be configured to relatively move against the image pickup device 3. During AF movement, the microlens array 32 for AF use is disposed on the A line on the image pickup device 3. After data for AF use is obtained, by moving the microlens array 32 for AF use from the position of the A line to the position of the B line, pixel data of G and R of the A line is obtained and used for image generation.

In addition, with regard to the movement of the microlens array 32, in the same way as described above, a stage with a magnet which is integrally provided with the image pickup body 31 and the microlens array 32 with a coil which is movably disposed on the stage are used or a stage with a coil which is integrally provided with the image pickup body 31 and the microlens array 32 with a magnet which is movably disposed on the stage are used, so that movement control can be performed by electromagnetic force in the same way described above.

Next, a second embodiment of the present invention is described in which the principles of focusing as described above is applied to an imaging apparatus such as a digital camera or the like.

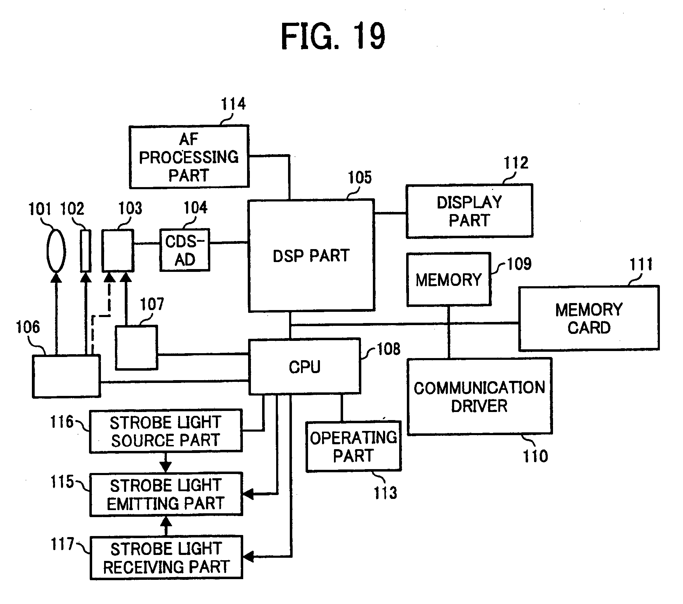

FIG. 19 illustrates a system configuration of the imaging apparatus, for example, the digital camera according to the second embodiment of the present invention.

The digital camera illustrated in FIG. 19 includes an imaging lens 101, an aperture-shutter unit 102, an image pickup device 103 with a microlens array, a CDS (correlated double sampling)-AD (A/D, analog-digital conversion) part 104, a DSP (digital signal processing) part 105, a mechanical driver 106, an image pickup device driving circuit 107, a CPU (central processing unit) 108, a memory part 109, a communication driver 110, a memory card 111, a display part 112, an operating part 113, an AF (automatic focusing control) processing part 114, a strobe light emitting part 115, a strobe power source part 116 and a strobe light-receiving part 117.

In the digital camera of FIG. 19, the imaging lens 101 is specifically, for example, as shown in FIG 2, an imaging optical system constituted by a plurality of lenses and is illustrated in FIG. 19, for easy understanding, as an imaging lens 101 constituted from one main lens representing the plurality of lenses of FIG. 2. The imaging lens 101 shown in FIG. 2 is constituted, for example, as a zoom lens which is configured to change or shift focal length as desired. The aperture-shutter unit 102 includes a shutter and a mechanical aperture equal to the aperture 2 illustrated in FIG. 2.

The image pickup device 103 with the microlens array is an image pickup body 31 constituted by using solid-state image sensing devices of a CMOS image pickup device or a CCD image pickup device or the like. As heretofore described, at the light-receiving surface side of the image pickup body 31, the microlens array such as the microlens array 32 for AF use according to the first embodiment of the present invention illustrated in FIG. 3 is provided.

The focusing device according to this embodiment may include a focal length changing section which is, for example, formed by zoom lenses included in the imaging lens 1, the AF processing part 114, the CPU 108 or the like, and be configured to set a predetermined focal length of the imaging optical system based on the focusing information obtained by the focusing information obtaining device and to change a focal length of the imaging optical system to the predetermined focal length. The imaging apparatus is configured to perform imaging at the focal length which is changed by the focal length changing section. The focusing information obtaining device may include a device configured to obtain contrast information of the image data obtained by the image generating section and is configured to obtain the focusing information of the subject based on the contrast information.

The CDS-AD part 104 performs a correlated double sampling to image signals obtained from the image pickup device 103 and further performs an A/D conversion so that analog data is converted into digital data. The DSP part 105 is a digital signal processing device that processes signals of the A/D converted digital data. For example, the DSP part 105 performs digital signal processing by converting RGB into YUV data including brightness Y, color difference U and color difference V and compresses the YUV data using, for example, JPEG (Joint Photographic Experts Group) format.

The mechanical driver 106 is a driver that drives a mechanical moving part and includes a lens driving part that drives the imaging lens 101 when focusing or zooming as well as a shutter driving part that performs the opening and closing movement of a shutter of the aperture-shutter unit 102. In addition, the lens driving part includes a lens position detection part that detects a lens position to accurately control to drive the lenses. The image pickup device driving circuit 107 actuates the image pickup device 103 and takes out image signals of a field image, which is formed on the light-receiving surface of the image pickup device through the imaging lens 101, from the image pickup device 103. The CPU (central processing part) 108 transfers signals between the above described DSP part 105, the mechanical driver 106 and the image pickup device driving circuit 107 as well as the memory part 109, the communication driver 110, the memory card 111, the operating part 113, the strobe light emitting part 115, the strobe power source part 116 and the strobe light-receiving part 117 and so on, and thereby controls the entire system of the digital camera.

The memory part 109, for example, is used to retain temporarily imaged image data and to read out image data from a file and is concurrently used as a work memory in relation to the actuation of the DSP part 105 and the CPU 108. The communication driver 110 is a communication driving part for performing external communications of the digital camera.

The memory card 111 is detachably disposed on the digital camera and records image data or the like obtained by the image pickup device and so on. The display part 112 includes an display such as an LCD (liquid crystal display) or the like and a display controller that converts screen image output signals from the DSP part 105 to signals able to be displayed on the display using the LCD or the like, and thereby converts screen image output signals from the DSP part 105 to signals able to be displayed by the display and then displays the image using the display. The operating part 113 includes operating buttons of various kinds of switches or the like or levers or the like for inputting various operating information to a system, when a user operates these operating buttons or levers, it is possible to input various operating information to the system. A release button, a power source button, a zoom button and the like are included in the operating part 113. The AF processing part 114 is disposed as necessary and performs an AF operation according to this embodiment of the present invention in combination with the AF operation in a non-TTL format, for example, the AF operation by a triangular distance measuring method, in which the AF operations are roughly performed.

The strobe light emitting part 115 is a light emitting part of strobe light and is able to control from the CPU 108 the start / stop of light emission of strobe light. The strobe power source part 116 is a power source used to emit strobe light and includes, for example, a main condenser or the like for use in strobe light emission. The charging voltage of the strobe power source part 116 can be detected from the CPU 108. The strobe light-receiving part 117 includes a light-receiving optical system that receives reflection light by a subject of strobe light by the strobe light emitting part 115 and a light sensor, when receiving an instruction to start light-receiving from the CPU 108, the strobe light-receiving part 117 starts light-receiving and performs integration of the light-receiving amount. The CPU 108 controls the strobe light emitting part 115 so that the strobe light emitting part 115 begins strobe light emission while the CPU 108 simultaneously provides an instruction to the strobe light receiving part 117 to start light-receiving. When the light-receiving integral amount thereafter reaches the predetermined setting amount set by the CPU 108, the strobe light-receiving part 117 provides stop signals of light emission to the strobe light emitting part 115 so that light emission can be stopped.

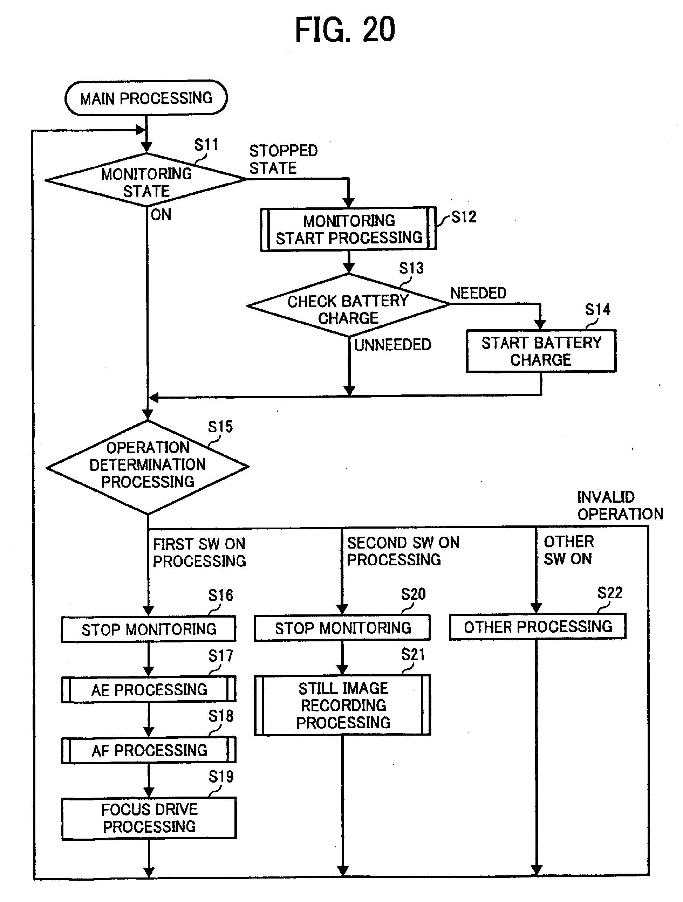

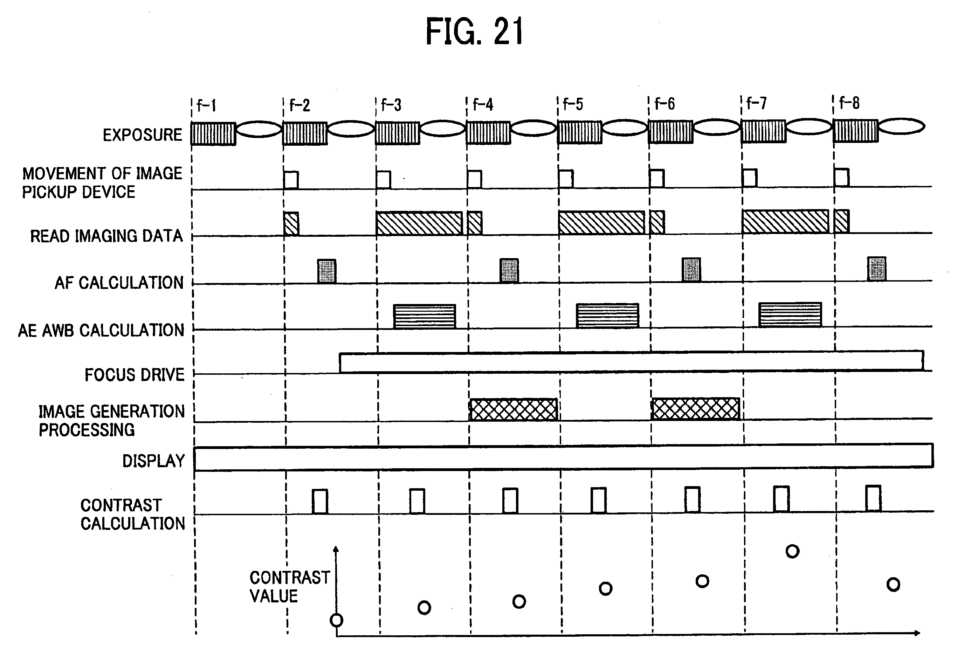

Next, the operation of each part of the digital camera of the above configuration is described with reference to a flowchart illustrated in FIG. 20 and a timing chart illustrated in FIG. 21.

FIG. 20 illustrates a main processing to perform control when recording an imaged image in the digital camera. In addition, although not illustrated in clarity, reading or the like of the state of the operating part 113 is processed by a parallel processing performed parallel to the main processing during power up of the main processing. The parallel processing is, for example, started up and processed by periodical timer interruption regardless of the state of main processing. Hereby, the case of recording a still image is described in detail as an example.

In a mode of recording an imaged image, when the power of the camera is turned on, although not illustrated in FIG. 20, initializations of hardwares in the camera and initial processing such as creating file information stored in the memory card 111 into the memory 109 are performed. Thereafter, the main processing of FIG. 20 of recording an imaged image is started.

In the main processing, at first, the state of monitoring is checked (step S11), if monitoring is in a stopped state, a processing to start monitoring is implemented (step S12). In addition, corresponding to whether an imaging mode which requires strobe light emission is selected or not and whether a main condenser of the strobe power source part 116 has sufficient battery charge or not, it is checked whether the main condenser of the strobe power source part 116 requires battery charge or not (step S 13). In the case where the imaging mode requiring strobe light emission is selected, the main condenser of the strobe power source part 116 has insufficient battery charge and the strobe light source part 116 needs to be charged, a charge processing is started (step S 14). In step S13, if the imaging mode requiring strobe light emission is not selected or when the imaging mode requiring strobe light emission is selected but the main condenser of the strobe light source part 116 has sufficient battery charge, it is not necessary to charge the strobe power source part 116 so that no processing is conducted (proceeds to the next step S15).

In the step S12 in which monitoring is started, the driving of the image pickup device 103 is started by the image pickup device driving circuit 107 and monitoring processing of parallel processing is activated. In addition, the processing of the above described step S12 to start monitoring is implemented also in the case of conducting the main processing at first time.

The monitoring processing in the above described parallel processing implements tracking processing of an AWB (automatic white balance) and an AE (automatic exposure) when a through image of the camera is displayed. In such a way, an image displayed on the display device of the camera can always be maintained to be in an appropriate brightness and a natural color.

Specifically, the CPU 108 obtains evaluation values of the AE and AWB respectivelyv in the DSP part 105 from image data obtained from the image pickup device 103 via the CDS-AD part 104 and an electronic shutter time (seconds) is set in the image pickup device driving circuit 107 so that the evaluation values become predetermined values. For an electronic shutter of the image pickup device 103, there are settable limits of a longest time and a shortest time. According to the brightness of the subject, in the case of the brightness under exposure or over exposure above limits, the CPU 108 changes an aperture diameter, that is, a F value of the aperture-shutter unit 102 and amplification factor of imaging signals in the part of the image pickup device 103. In addition, the CPU 108 also performs feed back control for adjusting an image processing color parameter in the DSP part 105.

The above parallel processing of the monitoring processing and the read processing of the state of the operating part 113, heretofore described, are implemented by, for example, a periodical timer interruption of 20ms.

In the case where the state of monitoring is determined as "on" in the step S11 in main processing or in the case where battery charge is determined as not necessary in step S13, or in the case where the battery charge is started in step S14, an operation determination processing that determines the state of operation of switches or the like of the operating part 113 is performed (step S15).

The operation determination processing of the step S15 of the main processing decides the operating information of inputted switches or the like by the above described periodical timer interruption processing of every 20 ms and performs processing corresponding to the operated switches or the like.

In step S15, if valid operating information is not detected, no processing is conducted and the processing returns to step S11 and repeats a loop that returns again to the operation determination processing of step S15. As describe above, only the processing for still images is described in this example.

Main processing operations corresponding to the operating information of FIG. 20 will be described with reference to FIG. 19. In the configuration illustrated in FIG. 19, the operating part 113 includes the shutter button for performing the release operation of the shutter.

When imaging a still image, a first switch that actuates when a shutter button is pushed halfway, that is, pushed for a first phase, is turned on, monitoring is stopped (step S 16) and an AE processing is performed (step S17). In the AE processing of step S17, imaging data is evaluated by the DSP part 105, an exposure time value of the image pickup device and an amplification factor of the image pickup device 103 set in the image pickup device driving circuit 107 corresponding to the time of photographing exposure are determined.

Next, the AF processing is performed (step S18). Hereby, an AF operation including the above described AF operation in the method employed in the embodiment of the present invention is performed. First, a general climbing method is described as an example.

The CPU 108, while moving a focus of the imaging lens 101 by the mechanical driver 106, detects a sharp-pointed degree (color definition) of imaging data as a focusing evaluation value. The imaging lens 101 is moved to a focused position where the detection amount reaches a peak by the CPU 108 to perform the AF operation by the climbing method that moves the imaging lens 101 (step S19), and then the processing goes back to step S11.

In a state where the first switch is on, if a second switch that actuates when the shutter button is fully pushed, that is, pushed for a second phase, is turned on, monitoring is stopped (step S20) and still image recording processing is performed (step S21). In the still image recording processing of step S21, imaging data is loaded to the memory part 109, required screen image signal processing such as processing to convert the imaging data to brightness and color difference signals or JPEG compression processing or the like are processed in the DSP part 105. The image data to which such a processing is applied is written into the memory card 111 as a file. Thereafter, the processing returns to step S11.

In addition, other operations are performed in the operating part 113, and when it is determined that the other operations are detected in the step S15, processing corresponding to the aforemetnioned operations is performed, then the processing returns to step S11.

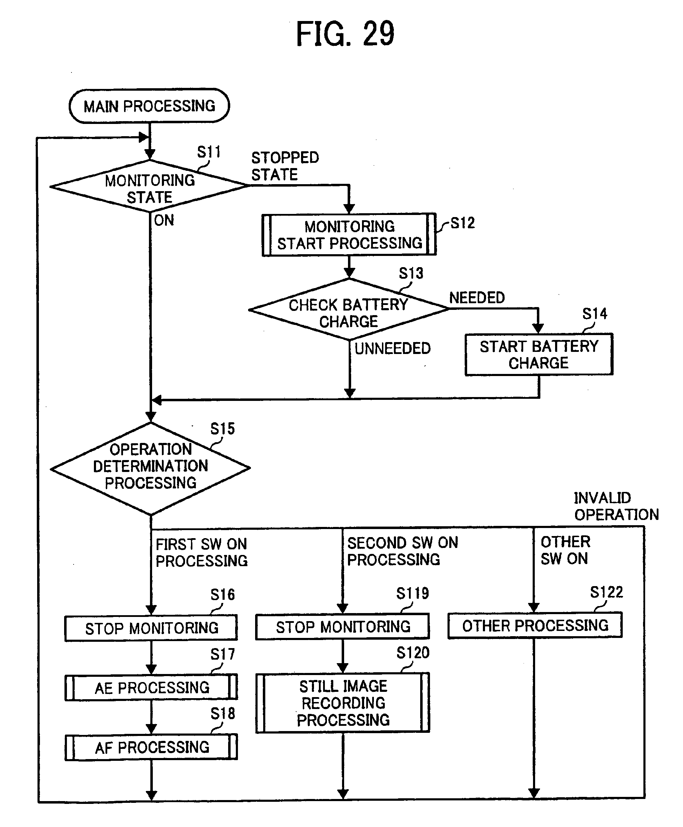

In addition, as illustrated in FIG. 29, an AF operation including the AF operation by the AF method according to the above embodiment of the present invention described above is performed, but the AF operation can be combined with an AF operation by a general climbing method.

The focusing device according to this embodiment may include a pixel selecting section formed by a function served by the CPU 108, or the like, to select a pixel in accordance with a predetermined exit pupil position from the covered pixels with respect to each microlens. The focusing information obtaining device may be configured to obtain focusing information of a subject based on deviations of subject images of different plural exit pupil positions by use of pixel data of pixels selected by the pixel selecting section. The focusing device may have a driving section configured to focus the imaging optical system on the subject by use of the focusing information.

In addition, the focusing device according to this embodiment may include a section configured to determine whether each of the covered pixels receives light from the imaging optical system and a pixel selecting section configured to select a pixel in accordance with a predetermined exit pupil position from the pixels which are covered with the corresponding microlens and are determined by the determining section such that the pixels receive the light from the imaging optical system. The focusing information obtaining device may be configured to obtain the focusing information of the field image by use of output from the pixels selected by the pixel selecting section.

In this case, the CPU 108, first drives the image pickup device (image pickup body 31) via the image pickup device driving circuit 107, and determines whether each pixel in a pixel line covered by each microlens of the microlens array 32 corresponds to one of pixels in a valid opening or out of the valid opening. The CPU 108 then select a pixel corresponding to each of at least two different predetermined exit pupil positions based on the determination results and then takes out the outputs of these pixels with respect to each microlens to reconstitute an image so that an image corresponding to each exit pupil position is formed. A positional deviation or positional deviations between these images are determined to determine a focused state and an image misaligned state. Based on focusing information / focus misalignment information determined as described above, the CPU 108 moves the focus position of the imaging lens 101 in a direction which is reverse to the misaligned direction, and controls until the focused state is obtained to realize the substantially focused state.

Furthermore, after the above focusing operation, in combination to the focusing operation, a further fine spun AF operation is performed by the climbing method. That is, the CPU 108 detects a sharp-pointed degree (sharpness) of imaged data as a focusing evaluation value while moving the focus position of the imaging lens 101 by the mechanical driver 106 and an AF operation by a climbing method in which the imaging lens 101 is moved and stopped at a focus position where the detection amount reaches a peak is performed. Then the processing returns to step S11.

Then, in a state where the first switch is turned on, if a second switch that actuates when the shutter button is fully pushed, that is, pushed for a second phase, is turned on, monitoring is stopped (step S119) and still image recording processing is performed (step S120) . In the still image recording processing of step S120, imaged data is loaded to the memory part 109, required screen image signal processing such as processing to convert the imaged data to brightness and color difference signals or JPEG compression processing or the like are processed in the DSP part 105. Image data where such processing is applied is written into the memory card 111 as a file. Thereafter, the processing returns to step S11.

The climbing method is described above as an example of the AF processing in step S18, and the digital camera of this embodiment according to the present invention performs the AF processing including the AF operations according to this embodiment of the present invention. The AF processing is described hereinbelow.

The AF method according to this embodiment of the present invention, as heretofore described, is configured to determine the misalignment amount of focus using the compact image pickup device 103 where the TTL method is employed and which is provided with the microlens array as an image pickup device for imaging an image. For complementation, in addition to the generally-used conventional configuration of an imaging lens and an image pickup device for imaging an image, a microlens array with a plurality of microlenses arranged on a front surface of the image pickup device is disposed, so that focus misalignment information and pixel data for generating an image can be obtained using the single image pickup device.

The principles of the AF method according to this embodiment of the present invention are already described in relation to FIGs. 1 to 18 so that only a general outline is described hereby in brevity.

On the light-receiving surface of the image pickup device 103, a microlens array 32, where a plurality of microlenses are arranged along a predetermined pixel line (A line), is disposed (see FIGs. 3 and 6).

As illustrated in FIGs. 7A to 8B, the microlens array is disposed adjacent to the front surface of the image pickup device, corresponding to the predetermined pixel line, the plurality of microlenses M1 to Mx are closely arrayed in a straight line shape, each microlens covers a plurality of pixels adjacent to each other of the image pickup device.

If the microlens array is not disposed, light from a whole surface of the imaging lens is emitted to each pixel of the image pickup device. However, in this embodiment, because of microlenses, the pixels Na1 to Nax of the image pickup device receive light rays from the point a of the imaging lens. Therefore, as illustrated in FIG. 7, when an image is reconstituted by extracting only these pixels Na1 to Nax from the image pickup device, an image of a field viewed from the point a of the imaging lens is obtained.

In the same way, as illustrated in FIG. 8, when an image is reconstituted by extracting only the pixels Nb1 to Nbx, an image of the field viewed from the point b of the imaging lens is obtained.

Furthermore, although not illustrated hereby, in order to create an image of the field viewed from the center point c of the imaging lens, the pixels Nc1 to Ncx can also be determined.

In such a way, in the distance fm between the imaging lens and the microlens array, by the focusing information obtaining device to obtain focusing information hereby serving as a function of the CPU 108, when images are reconstituted respectively by the predetermined pixels of Na1 to Nax, Nb1 to Nbx and Nc1 to Ncx, field images viewed from the respective points a, b and c of the imaging lens with mutual parallax difference can be obtained. In principle, distance information of a subject can be calculated from images with parallax difference.

That is, as shown in FIG. 12A, in the images each obtained by light passing through the points a, b and c, respectively, of the imaging lens, a subject on a focused field point is imaged on the microlens array, a subject on a Near field point which is closer than the focused field point is imaged in a position farther from the microlens array from the imaging lens and a subject on a Far field point which is farther than the focused field point is imaged in an intermediate position between the microlens array 32 and the imaging lens 1.

As described above, the images each obtained by light passing through the points a, b and c, respectively, that is, when the point-a image, the point-b image and the point-c image are formed by reconstitution, the point-a image, the point-b image and the point-c image are formed respectively in FIG. 12B on the Near field point, in FIG. 12C on the focused field point and in FIG. 12D on the Far field point.

When a correlated evaluation window is defined near the center of the point-c image, the image is a subject image on the main light axis of the imaging lens 1 extending straightforwardly and vertically. An image position where each image is approximately-matched with a contrast image within the correlated evaluation window is searched within the point-a image and the point-b image. Specifically, while shifting, using the same window width, image positions of the point-a image or the point-b image as well as an image within the correlated evaluation window set by the point-c image, images can be compared and image positions with high correlation, that is, high degree of matching can be calculated.

If, as shown in FIG. 12B, an image position of the point- c image is at a center, the point- a image is on a left side position to the center, the point- b image is on a right side position to the center, it comes into focus at a Near field point closer than the target subject and it is determined that the image is in a so- called front focus state. As shown in FIG. 12C, if image positions of the point- c image, the point- a and the point- b image are all matched with each other, it is determined that the image is in a precisely- focused state. In addition, as shown in FIG. 12D, if a position of the point- c image is at a center, the point- a image is on a right side position to the center, and the point- b image is on a left side position to the center, the image is in focus at a Far field point farther than the target subject and it is determined that the image is in a so- called back focus state.

Using only the point- a image and the point- b image illustrated in FIGs. 12B to FIG. 12D, by misaligning the correlated evaluation window in a reverse direction from the center of each image and sequentially evaluating the degree of matching of images within the window, image positions with high correlation can be calculated and focus misalignment can be detected. However, by adding the point- c image as illustrated hereby, correlations of three images can be evaluated and matching images can be detected more precisely.

FIG. 13A.. to 13D illustrate an example in which the correlated .. evaluation window of the point-c image is positioned in a position other than the vicinity of the center. FIG. 13A illustrates an optical geometrical relationship of the imaging lens 1, the pixel line of the image pickup device 3 and the microlens array 32 as well as a subject on a focused field point, a subject on a near field point and a subject on a far field point. FIG. 13B illustrates the near field point, FIG. 13C illustrates the focused field point of a field, FIG. 13D illustrates the far field point in which the point-a image, the point-b image and the point-c image are formed respectively.

In this case, too, while shifting, using the same window width, image positions of the point-a image or the point-b image as well as an image within a correlated evaluation window set by the point-c image, the images can be compared and image positions with high degree of matching can be calculated. As shown in FIG. 13B, in this case where the point-c image is disposed a little to the right, the point-a image is disposed at a left side position, and the point-b image is disposed at a right side position, it can be determined that the image is in the front focus state where the image is at the Near field point closer than the target subject. As shown in FIG. 13C, if the point c image is disposed in a position a little to the right, the point-a image and the point-b image are all matched, it can be determined that the image is in the focused state. In addition, as shown in FIG. 13D, with the position of the point-c image disposed a little to the right as the center, if the point-a image is disposed at a right side position, the point-b image is disposed at a left side position, it can be determined that the image is in the back focus state where the image is focused at the Far field point farther than the target subject.

In addition, using only the point-a image and the point-b image as shown in FIGs. 13B to 13D, by misaligning the correlated evaluation window in a reverse direction from the center of each image and sequentially evaluating the degree of matching of images within the window, image positions with high correlation can be calculated and focus misalignment can be detected. However, by adding the point-c image as illustrated hereby, correlations of the three images can be evaluated and the matching images can be detected more precisely.

In such a way, not only the focused state of the subject on a position other than a position on the main light axis of the imaging lens can be detected but also each state of focus misalignment of the front focus and the back focus can be detected. Because the directions of misalignment of the point-a image and the point-b image in back focus and front focus are mutually inverse, the directions of focus misalignment can also be determined. In the case where such a state of focus misalignment is detected, by moving the imaging lens in an inverse direction to the direction of the focus misalignment and controlling until the focused state is obtained, the focused state can be set. In addition, an approximate distance of a subject can be calculated from the distance fm between the imaging lens and the microlens array and a difference of image positions of the point-a image and the point-b image.

In addition, as clear from the above descriptions, by a setting position of the correlated evaluation window of the point-c image, focus information of a subject existing on different light rays which are out of the axis of the imaging lens 1 can be obtained so that it is possible to perform focusing control of a subject not only on a screen center but also on screen edges.

The AF processing in step S18 of FIG. 20, uses, in addition to the AF processing according to the above-described AF method of the embodiment of the present invention, an AF processing using the so-called contrast information. In addition, the AF processing in step S18 of FIG. 20 can use, in addition to the AF processing according to an AF method described above, the AF processing using so-called contrast information by the above-described climbing method or can perform only the AF processing according to the embodiment of the present invention described above.

If the image pickup device 103 is a color image pickup device in which a plurality of color information are distributed and disposed via a pixel filter or the like, in order to receive no influence by color, it is necessary to use pixel data of the same color or pixel data of a plurality of colors of the same combination. That is, in such a color image pickup device, in order to reconstitute the point-a image or the point-b image by extracting pixel data passing through the microlenses, pixel data of the same color needs to be extracted.

Therefore, in the case where a general color image pickup device, in which a plurality of color information is distributed and disposed, is directly used, pixel data of particular color information is extracted and all of the pixels cannot be utilized for AF use and high resolution capability cannot be obtained. In such a case, with respect to pixels corresponding to each microlens of the microlens array 32 for AF use, by removing a color filter or the like, the pixels are turned monochrome so that all of the pixels can be set as the targets for extraction and high resolution capability can be obtained.

In addition, in the case where the AF processing part 114 by a triangular distance measuring method as illustrated in FIG. 19 is disposed separately, prior to the above-described AF processing in step S18 of FIG. 20 including the method according to the above embodiment of the present invention, or the parallel processing by routine timer interruption, the AF operation of an active or passive triangular distance measuring method is performed. Before the AF processing in step S18 of FIG. 20, by adjusting the imaging lens 101 to the vicinity of the focused point position of a general subject in a center part or the like, a moving distance of the imaging lens 101 when performing the AF processing of step S18 can be sufficiently short so that it is possible to perform the AF operation with high speed and high precision. In the case where automatic focusing is performed in such a way, pixels of the image pickup device 3 other than the pixels corresponding to each microlens of the microlens array 32 needs to be devoted at least to either the display or the recording as an imaged image of a field image formed as an image by the imaging lens 1. However, as the A line illustrated in FIG. 6 and FIG. 16, pixels passing through the microlens group of the microlens array 32 as an optical system for AF use differs from other general pixels and cannot be utilized for image generation. Thereby, for example, an image generation device realized as a function of the CPU 108 moves the image pickup device 103 with the microlens array and calculates pixel values of the pixels equal to a part passing through the microlens group of the microlens array which is an optical system for AF use.

That is, as illustrated in FIG. 16, the image pickup device where the microlens group of the microlens array 32 for AF use which is disposed on the A line is moved downwardly by two pixels, as an example, illustrated in FIG. 18. In such a way, a line two lines above the A line is disposed on a position corresponding to the original A line and pixel data of G and R on the original A line can be obtained by this line. At this time, the B line one line above the A line corresponds to the C line one line below the original A line. The A line corresponds to the D line two lines below the original A line.

As described above, the configuration including the image pickup device held in a substrate with a coil and a stage with a magnet that enables the substrate of the image pickup device to move vertically and horizontally can for example, be used for a method of moving the image pickup device 3. At this time, a Hall element for position detection can be disposed on the substrate of the image pickup device. By applying electrical current to the coil on the substrate of the image pickup device, electromagnetic force is operated between the coil and the magnet on the side of a stage so that the image pickup device can be moved on the stage. The movement amount can be detected by the Hall element so that it becomes possible to control the pixel number in movement. In addition, in the case where the image pickup device is moved a little erratically, correlations of each pixel are strengthened between the two images generated and the two pixels are superimposed so that pixel data of positions corresponding to the part of the microlens array 32 which is an optical system for AF use can mutually interpolate between both images.

Of course, the image generation device realized as a function of the CPU 108, as described above, can calculate pixel data of a part equal to the A line from pixel data in the periphery thereof by interpolation.

Next, an example of a timing chart of the digital camera of the present embodiment is described with reference to FIG. 21.

In FIG. 21, with respect to exposure, closing of the electrical shutter and exposure are periodically repeated.

First, exposure is performed in a period f-1. This exposure is performed in a state of FIG. 16.

In a beginning of a period f-2, the image pickup device 103 is moved and the image pickup device is displaced as shown in FIG. 18 to perform exposure.

In this period f-2, pixel data of the A line exposed in the period f-1 is read out, focus misalignment is calculated by beam angle calculation, the imaging lens (focus lens) is started to be driven in a direction compensating the misalignment.

In a period f- 3, imaged data by exposure in the period f- 2 is read out If it is during monitoring, calculations of AE processing and AWB processing are performed from the read out imaged data.

In the exposure of the period f- 2, exposure is performed in a state of FIG. 18, that is, in a position misaligning by two pixels compared to the position of the exposure of the period f- 1 corresponding to FIG. 16.

In a period f-4, an image is generated using pixel data of the pixels exposed in the period f-2 and read out in the period f-3.

With regard to data of all pixels in the state of FIG. 18 read out in the period f-3 and the lacking A line data, an image is generated using the D line obtained in the period f-2 or the period f-4 already exposed in the state of FIG. 16 in the period f-1 or the period f-3.

The image is provided for display in a period f-5.

In addition, in association to the beginning of driving of the imaging lens, as illustrated in FIG. 22, a portion of the pixel part for generating an imaged image of the image pickup device 103 other than an A line part Aa is read out as a contrast area Ac and contrast information is obtained.

Contrast information is obtained in synchronization with the driving of the imaging lens, and a final lens position is set to a lens position where the imaged data having the largest contrast value is obtained.

In the case where the position where the image is precisely focused differs according to difference of optical properties between the imaging lens 101 and the microlens array disposed thereon, or in the case where the difference between the imaging lens 101 and the microlens array has variations between individual bodies of apparatuses, by combined usages of the above described contrast information, the imaging lens 101 can be controlled to the precisely focused lens position in an imaging area for imaging an image.

In the above descriptions, the imaging operation of the field image when monitoring is explained, but imaged data, which can be recorded and stored in an externally detachable memory card, can be generated in the  same way as described above.

By repeating the above-described operations, tracking processing of focus slide during monitoring and generation of a display image for use by user observation can be realized.

In addition, in a one-shot AF operation during monitoring, by freeze displaying a display image during the AF operation, (because update of image display is not necessary) so that movement of the image pickup device after the period f-3 in particular can not be performed.

In addition, as described above, as the pixel data for generating an image, in the case where the pixel data corresponding to the pixels on the A line can be ignored or in the case where the pixel data corresponding to the pixels on the A line can be calculated by interpolation of surrounding pixels in the periphery, movement of the image pickup device 103 can not be performed.

As the above image pickup device 103 with the microlens array, although the case where the positional relationship between the microlens array for AF use and the image pickup device is constant is described, it is possible that the microlens array for AF use is movably disposed without moving the image pickup device to obtain the pixel data of the pixels on the line A.

In addition, if the microlens array for obtaining focus information and the control method thereof described above are implemented with respect to a plurality of lines of the image pickup device (at least two times at different positions), the focus information can also be obtained at a plurality of points within a screen. The case where the microlens array is disposed corresponding to the pixel lines extending in a horizontal direction is explained but the microlens array can also be disposed corresponding to pixel lines extending in a vertical direction or an oblique direction.

The method which performs focusing detection of the imaging lens 1 (101) by reconstituting an image with parallax difference corresponding to a plurality of exit pupil positions from the output of predetermined pixels disposed under each microlens, the output varying corresponding to predetermined exit pupil positions of the imaging lens 1 (101), is described. Practically, however, a valid position and a valid opening diameter of the imaging lens of the imaging apparatus such as the digital camera or the like changes depending on zoom variable power. In addition, the valid position also changes for focusing. Furthermore, even for each digital camera (imaging apparatus) of the same model, due to installation errors or the like of each member or part in the manufacturing process, variations in the position of the imaging lens 1 (101) is possibly generated.

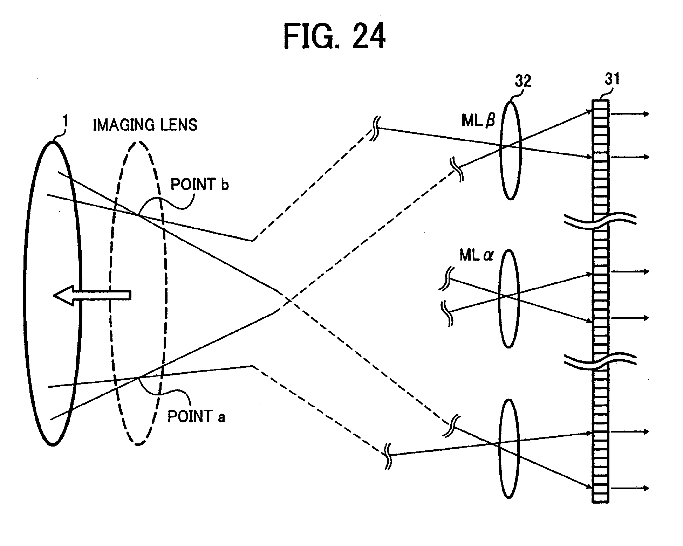

That is, referring to FIG. 24, the case in which the position of the imaging lens 1 (101) is shifted backwardly or forwardly as described above is described as an example.

FIG. 24 illustrates a case in which the position of the imaging lens 1 (101) is moved by zooming and focusing. Pixels viewing the point a and point b of the imaging lens 1 (101) from each microlens when the distance between the imaging lens 1 (101) and the microlens array 32 is in a state of a predetermined distance fm receive light from points other than the points a, b, and c if the distance between the imaging lens 1 (101) and the microlens array 32 changes. Accordingly the pixels cannot precisely form the point-a image, the point-b image, and the point-c image.

The position of the imaging-lens L (101) is controlled by the CPU 108 so that pixels selected when reconstituting an image can be changed based on information of positional changes from the distance fm. However, the processing receives influence of positional detection errors of the imaging lens 1 (101) or temperature changes of the optical systems and so on and complex processing becomes necessary.

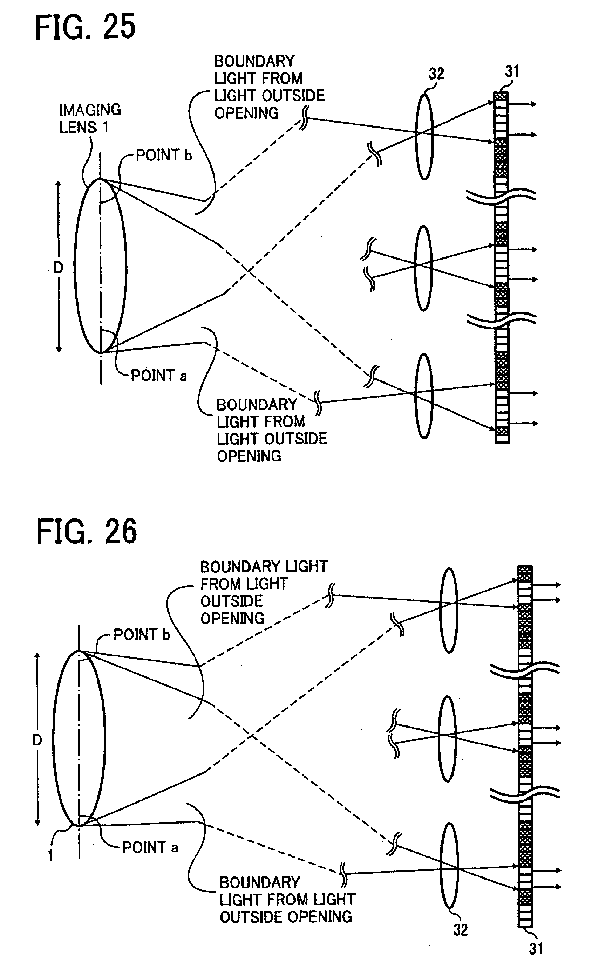

Thereby, as a countermeasure, in the digital camera according to an embodiment of the present invention, as illustrated in FIG. 25, each microlens and the pixels are disposed and constituted such that pixel lines preliminarily covered with the microlenses are able to receive both light inside a valid opening diameter and light outside a valid opening diameter of the imaging lens 1. Specifically, for example, the F value of the microlenses is constituted to be smaller than the F value of the imaging lens 1 (101) so that microlenses receive light from an area broader than the valid opening of the imaging lens 1 (101).

The focusing device according to this embodiment may include an aperture section having an opening, which is configured to control a transmitted light amount by controlling a diameter of an opening of the imaging optical system. Each microlens of the microlens array may be configured to lead the light from the imaging lens 1 onto only a part of the pixels according to the diameter of the opening of the aperture section.

The focusing device may include an aperture controlling section configured to narrow the opening of the aperture section to be in a predetermined diameter. The light-receiving state determining device is configured to determine the light-receiving state in a state where the aperture section is narrowed in the predetermined diameter by the aperture controlling section.

In FIG. 25, the pixel lines covered with each microlens have an area where the light inside the valid opening of the imaging lens 1 (101) is received and an area where the light outside the valid opening is received. With respect to the determination of whether each pixel under the microlens corresponds to inside the valid opening or outside the valid opening, if a field is bright to a certain extent, the light from the field does not enter the pixels corresponding to outside the valid opening, pixel output is pixel data in a black-dark or close to black-dark state. Accordingly the pixel output of the pixels disposed under each microlens, that is, the pixel output of the dark part is determined as pixels corresponding to outside the valid opening.

In addition, the valid opening diameter hereby generally refers to a diameter of an entrance pupil, and the opening diameter is not limited to be in a circle shape and therefore refers to a diameter of when a circle approximating an area is drawn.

In practice, a lens is set at infinity, a point light source is disposed in a focus plane, an average diameter of an image projected onto a screen disposed in a front of the lens is measured.

As illustrated in FIG. 25, the valid opening diameter of the imaging lens 1 (101) is set as D, the point a and the point b used for focusing detection is set to 20% inward than the opening diameter D. In this case, with respect to the pixel lines disposed under each microlens, pixels positioned 20 % inwardly from the area which is determined as the opening diameter are selected to reconstruct an image so that the point-a image and the point-b image can be formed. A state where the imaging lens 1 (101) of FIG. 25 is moved in an object direction is illustrated in FIG. 26. In FIG. 26, the distance between the imaging lens 1 (101) and the microlens array 32 is longer than the case of FIG. 25. Accordingly, in the same way to the case in which the imaging lens 1 (101) is not moved and the opening diameter of the imaging lens 1 (101) became smaller, in the pixels disposed under each microlens, the pixels corresponding to outside the valid diameter are increased and the pixels corresponding to inside the valid diameter are decreased. In this case, when the valid opening diameter of the imaging lens 1 (101) is also set as D, the point a and the point b used for focusing detection is set to, for example, 10% inward than the opening diameter D, in the pixel lines disposed under each microlens, pixels positioned 10% inward from an area determined as inside the opening are selected to reconstitute an image so that the point-a image and the point-b image can be formed.

This is the AF method of the digital camera according to an embodiment of the present invention. In such a way, even when the distance or the valid opening diameter of the imaging lens 1 (101) in relation to the microlens array 32 changes, changes in the valid opening diameter are detected, so that the pixels used for focusing detection and corresponding to an exit pupil position can be appropriately selected. Therefore, an appropriate AF operation can be performed according to changes of the distance or the valid opening diameter of the imaging lens 1 (101) .

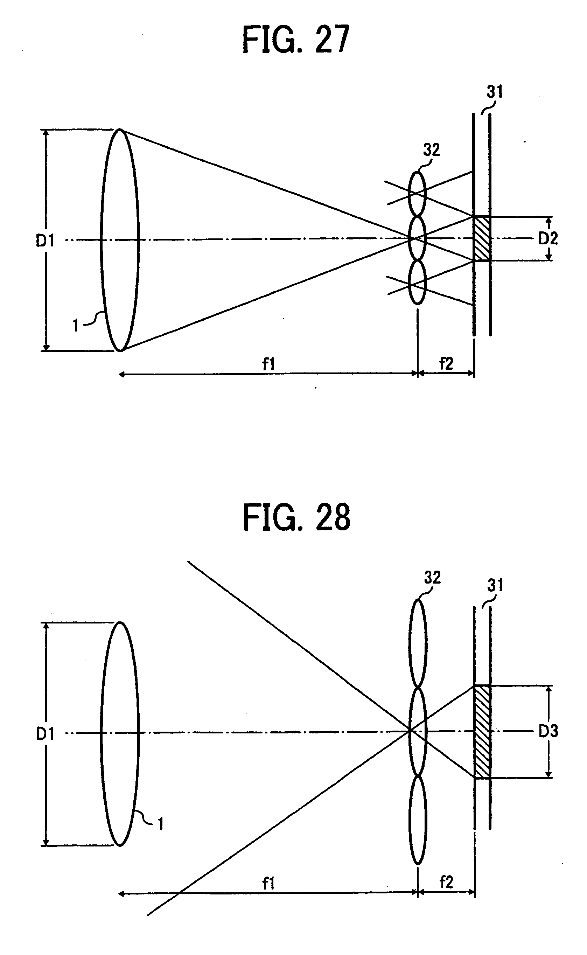

Incidentally, a pitch of each macrolens of the microlens array 32 is a sampling interval of spaces of the point- a image and the- point b image, which are reconstituted and therefore the AF operation has higher precision when the pitch is short. FIG. 27 illustrates a relationship between the valid opening diameter D1 of the imaging lens 1, the valid diameter (valid width) D2 of each microlens, a focal length f1 of the imaging lens (the distance between the imaging lens 1 and the microlens array 32) and a focal length f2 of each microlens (the distance between the microlens array 32 and the image pickup device 31) . The pitch of microlens is equal to the valid diameter D2 of the microlens in FIG. 27.

Hereby, if the F value of the imaging lens 1 (101) ( = f1 / D1) is equal to the F value of the microlens (= f2 / D2), as illustrated in FIG. 27, the light rays do not interfere with light rays of the adjacent microlenses and can be captured by the image pickup device 31 whenever each microlens receives light from a point which may be disposed at any position of an opening part of the imaging lens 1 (101) .

Therefore, in the AF method used in the image pickup device (digital camera) according to an embodiment of the present invention, normally, it is ideally required to set the F value of the imaging lens 1 (101) and the F value of each microlens of the microlens array 32 to be equal each other.

On the other hand, in the first, second, or third embodiment of the present invention described above, as illustrated in FIG. 28, each microlens of the microlens array 32 is set to be able to receive the light rays from the inside and outside of the valid opening diameter of the imaging lens 1 (101) . The valid diameter (valid width) D3 of each microlens, in that case, is configured so as to have larger the microlens valid diameter (valid width) D2 of the case in which the F value of the imaging lens 1 (101) and the F value of each microlens are equal. That is, the F value of the microlens (= f2 / D3) is set to be smaller than the F value (= f1 / D1 = f2 / D2) in the above- described FIG. 27.

However, as illustrated in FIGs 25, 26 and 28, when each pixel disposed under the microlens is set to be able to receive light rays from inside the valid opening and light rays from outside the valid opening, the F value of the microlens becomes small, that is, the valid diameter (valid width) D of the microlens becomes large and the pitch of the microlens of the microlens array 32 becomes large.

On the other hand, as described above, the pitch of the microlens of the microlens array 32 is equal to the pitch on the space for reconstituting the point- a image and the point- b image. In the AF method used in the embodiment of the present invention, focusing detection is performed from the correlations of the point- a image and the point- b image. Accordingly, when the pitch of the microlens of the microlens array 32 becomes large, performance of focusing detection deteriorates.

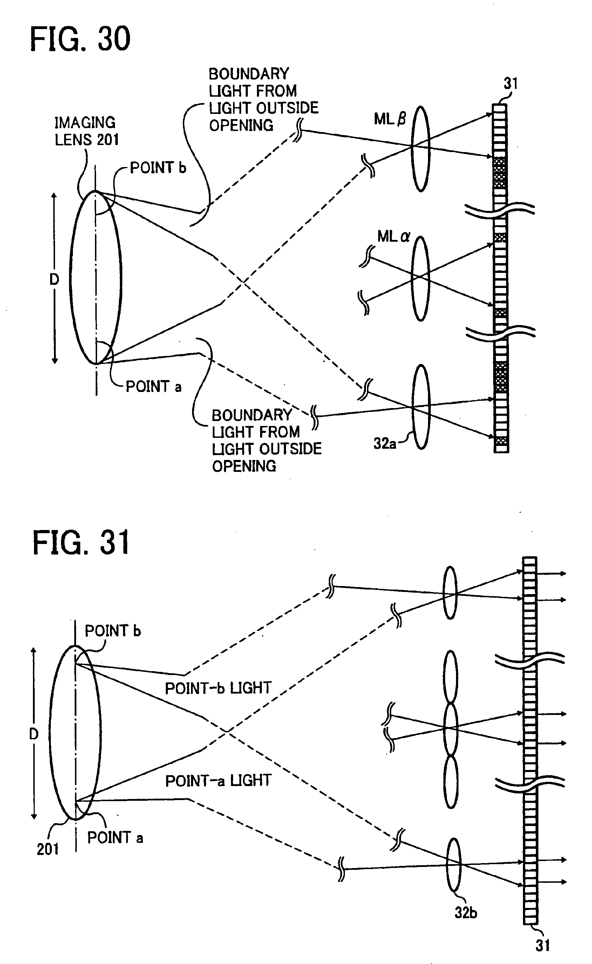

In a digital camera (imaging apparatus) according to a fourth embodiment of the present invention, as a countermeasure to the deterioration of focusing detection performance according to the above described microlens pitch, as illustrated in FIG. 30, a first microlens group 32a is disposed constituting a plurality of microlenses of opening detection use for detecting inside a valid opening and outside a valid opening of an imaging lens 201 where each microlens has an F value smaller than the F value of the imaging lens 201. Also in the microlens array 32, a second microlens group 32b, as illustrated in FIG. 31, is disposed constituting a plurality of microlenses of focal point detection use and smaller than the above described microlenses for opening detection use where each microlens has an F value larger than the F value of the above described microlenses for opening detection use.

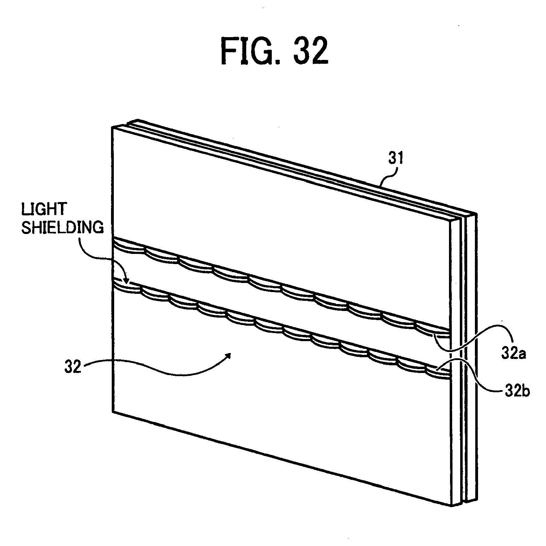

The first microlens group 32a and the second microlens group 32b are, for example, as illustrated in FIG. 32, are linearly arrayed on a flat-plate body transmitting light corresponding to a particular pixel line of the image pickup body 31, which extends linearly in a horizontal direction. The first microlens group 32a is constituted by a plurality of microlenses for opening detection use, which have the same dimension and the same shape, and, for example, are linearly arrayed along the horizontal direction on an upper stage of a center of a screen surface of the flat plate body in a vertical direction. The second microlens group 32b is constituted by a plurality of microlenses for a focus use, which have the same dimension and the same shape, and, for example, are linearly arrayed along the horizontal direction on a lower stage of the center of the screen surface of the flat plate body in the vertical direction. That is, the frat microlens group 32a and the second microlens group 32b are arrayed so as to form mutually parallel lines on the above described flat plate body.

In this case also, the microlenses constituting respectively the first microlens group 32a and the second microlens group 32b and each formed in a partially-cylindrical form with an axis direction which is perpendicular to the arrayed direction are closely arrayed in the horizontal direction so as to be very short and spindly lenticular lens. Each microlens of the first microlens group 32a and the second microlens group 32b that constitutes the microlens array 32, with respect to the axis direction of each partially cylindrical lens, is formed in a short dimension corresponding to the pixels lines including one line or a few lines and with respect to the arrayed direction, is formed in a dimension corresponding to a few or more pixels. In addition, each partially-cylindrical microlens of the microlens array 32 is configured to appropriately provide light shielding to both end surfaces of the particularly-cylindrical microlens, that is, to illustrated upper and lower surfaces of the microlens so that light other than the light emitted from the corresponding microlens is prevented from entering the pixel line(s).

In the AF operation of the digital camera according to the fourth embodiment of the present invention, the pixel lines corresponding to the lines of the plurality of microlenses linearly arrayed in parallel to each other are used, and the pixels of the image pickup body 31 other than the above pixel lines are used for image generation in normal imaging.

In such a configuration, based on information of light inside the valid opening and outside the valid opening detected by the plurality of microlenses of the first microlens group 32a for opening detection use as well as a static relationship between these first microlens group 32a for opening detection use and the second microlens group-32b for focusing detection use, pixels for focal point detection use are selected from the pixels disposed under each microlens of the second microlens group 32b and then images are reconstituted.

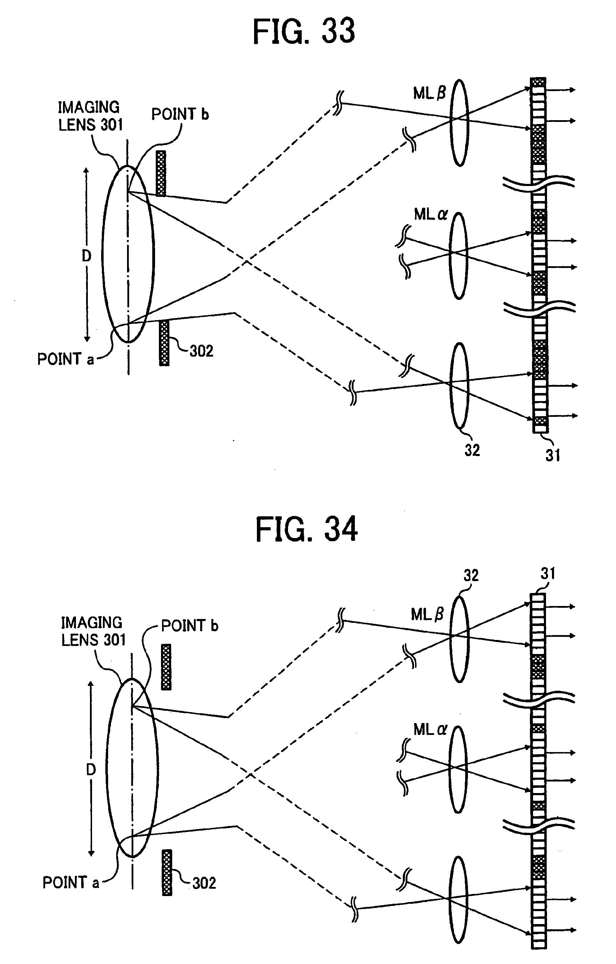

Next, a digital camera according to a fifth embodiment of the present invention will be described with reference to, for example, FIG.33. In the digital camera (imaging apparatus) according to the fifth embodiment of the present invention, until a marginal part of the opening of the valid opening diameter reaches the vicinity of an exit pupil position of the point a and the point b used for an AF processing, the aperture of an aperture-shutter unit 302 is once narrowed down, based on information of inside the valid opening and outside the valid opening detected by pixel lines disposed under microlenses by the narrow down, the pixels for reconstitution of the point-a image and point-b image are selected. In such a way, the replacement of an imaging lens 301, zooming, and variations of opening F value due to changes in aperture as well as changes and variations of the distance between the imaging lens 301 and the microlens array 32 can all be flexibly handled.

That is, as illustrated in FIG. 33, prior to the AF processing, the aperture of an aperture-shutter unit 302 is once narrowed down until the marginal part of the opening of the valid opening diameter by the aperture is approximately close to the exit pupil position of the point a and the point b to be used in AF processing. Based on information of inside the valid opening and outside the valid opening detected by the pixel lines disposed under microlenses by the narrow down, the pixels for reconstitution of the point-a image and the point-b image in AF processing are selected. During the AF operation, as illustrated in FIG. 34, AF processing is performed by opening the aperture of the aperture-shutter unit 302. In such a way, even when the relationship of relative positions of the microlens array. 32 and the imaging lens 301 changes or when the positional relationship of optical systems changes measurably due to temperature changes or the like, it is possible to appropriately select pixels for reconstitution of the point-a image and the point-b image or the like. In the case of the digital camera according to this embodiment, the main processing is performed according to a flow chart illustrated in FIG. 29 in the same way to the case of the third embodiment.

That is, FIG. 29 illustrates the main processing that performs control when recording an imaged image in the digital camera. Reading or the like of the state of an operating part 313 is processed by a parallel processing performed parallel to the main processing during power up of the main processing. The parallel processing is, for example, started up and processed by periodical timer interruption regardless of the state of the main processing. Hereby, the case of recording a still image is described in detail as an example.

In a mode of recording an imaged image, when the power of the camera is turned on, by operations of the operating part 313, initializations of hardware internal to the camera and initial processing of creating file information within a memory card 311 inside a memory 309 are performed. Thereafter, the main processing of FIG. 29 of recording an imaged image is started.

In the main processing, at first, the state of monitoring is checked (step S11), if monitoring is in a stopped state, a processing to start monitoring is implemented (step S12). In addition, whether the main condenser of a strobe light source part 316 requires battery charge or not is checked (step S 13). When the strobe light source part 316 needs to be charged, a charge processing is started (step S 14). In step S13, when the strobe light source part 316 does not require battery charge, no processing is conducted and the processing proceeds to the next step S15.

A procedure to start monitoring of the step S12, starts the driving of an image pickup device 303 (image pickup body 31) by an image pickup device driving circuit 307 and monitoring processing of parallel processing is activated. In addition, the processing of the above described step S12 to start monitoring is implemented also in the case of conducting main processing for the first time.

The monitoring processing in the above described parallel processing implements tracking processing of an AWB and an AE when a through image of the camera is displayed. In such a way, an image displayed on a display device of the camera can always be maintained to be in an appropriate brightness and a natural color.

The above monitoring processing and the parallel processing of read processing of the state of the operating part 313 heretofore described are implemented by, for example, a periodical timer interruption of 20ms.

In the case where the state of monitoring is determined as "on" in the step S11 in main processing or in the case where it is determined that battery charge is not necessary in step S13, or in the case where battery charge is started in step S14, an operation determination processing that determines the state of operation of switches or the like of the operating part 313 is performed (step S15).

The operation determination processing of the step S15 of the main processing decides the operating information of inputted switches or the like by the above described periodical timer interruption processing and performs processing corresponding to the operated switches or the like.

In step S15, if valid operating information is not detected, no processing is conducted and the processing returns to step S11 and repeats a loop that returns again to the operation determination processing of step S15.

A main processing operation is described with reference to FIG. 19 corresponding to the operating information of FIG. 29. In the configuration illustrated in FIG. 19, the operating part 313 includes a shutter button for performing release operation of a shutter.

When imaging a still image, a first switch that actuates when a shutter button is pushed halfway, that is, pushed to a first phase is turned on, monitoring is stopped (step S 16) and an AE processing is performed (step S17). In the AE processing of step S17, imaging data is evaluated by a DSP part 305, an exposure time value of an image pickup device and an amplification factor of the image pickup device 303 set in the image pickup device driving circuit 307 corresponding to the time of photographing exposure are determined.

Next, an AF processing is performed (step S18). In this case, according to the AF method of this embodiment of the present invention, the AF operation is performed by narrowing down the aperture once to a degree of an aperture opening for AF use. At this moment, the AF operation can be performed in combination to other AF operations by a general climbing method or the like as desired.

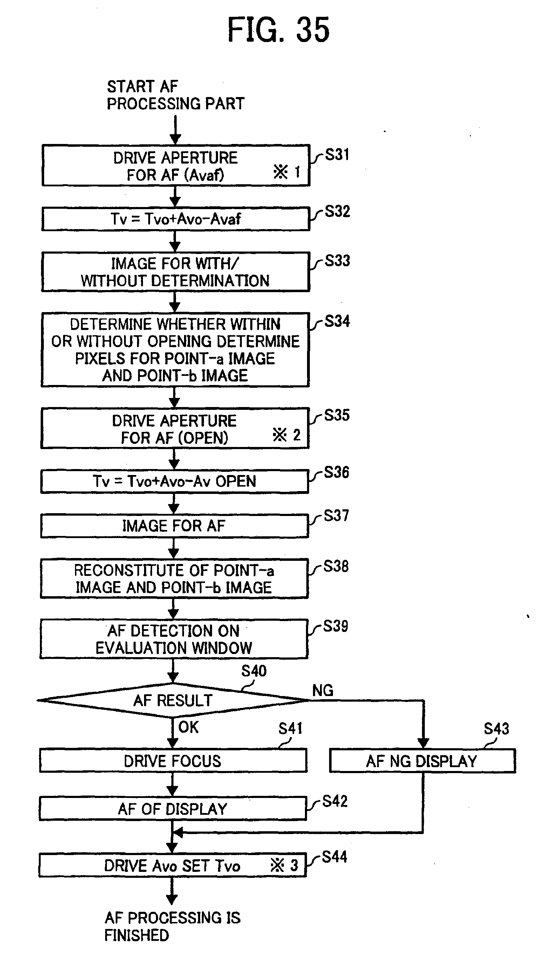

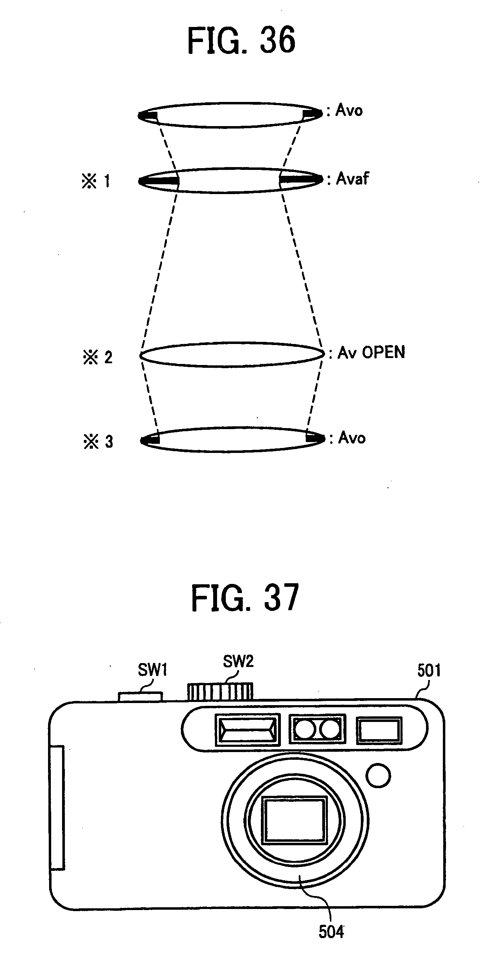

The details of an example of the AF processing of the step S18 is described with reference to FIGs. 35 and 36. FIG. 35 is a flowchart that illustrates in detail the AF processing. FIG. 36 is a diagram that schematically illustrates the changes of the aperture in each state.

In the AE processing of step S17 prior to step S18, an exposure value for photographing is determined as Evo (= Avo + Tvo). At this time, as illustrated in FIG. 36, the aperture of the aperture-shutter unit 302 is set to an aperture value Avo, through display is performed at a shutter speed value Tvo.

In the AF processing of a state in which the first switch is on, a CPU 308 drives and narrows down the aperture of the aperture-shutter unit 302 and set the aperture to an aperture value Avaf for AF use illustrated in FIG. 36 (step S31, shown by "※ 1" in FIGs. 35, 36). However, at this time, the aperture value Avo based on AE is shifted to the aperture value Avaf for AF use, in order for the brightness not to change in through display, a Tv value Tvaf of shutter speed is changed so that it has a value of

$$\text{Tvaf} = \text{Tvo} + \text{Avo} - \text{Avaf (step S32).}$$

Then, image data is imported (step S33), a determination whether it is within and without opening is performed to detect an area inside or outside an opening for AF use from pixel lines disposed under each microlens and pixel positions for reconstituting the point-a image, the point-b image and the point-c image (as desired) are determined from this area (step S34).

Next, the aperture is driven to the aperture opening for AF use (step S35, shown by "※ 2" in FIGs. 35, 36). In this case, because light from the aperture value Avaf for AF use is received, an Av value needs to be set to smaller than the aperture value Avaf (for example, as illustrated in FIG. 36, the aperture is open).

In step S35, generally, the aperture can be set to open. However, in this case, in order for an appropriate exposure amount measured at AE to be realized, the shutter speed Tv is set to Tv to + Avo- Av open (step S36). In this state, imaging for AF use is performed and pixel data outputted from each pixel is imported (step S37).

The pixel data is extracted from the pixel data imported at step S37 to reconstitute the point- a image, the point- b image and the point- c image (as desired) and the reconstitution of profile images corresponding to each point is performed (step S38). An image part with a high degree of matching is searched using an evaluation window.from the point- a image and the point- b image, based on a direction and amount of image misalignment, a direction and amount of focus misalignment are calculated (step S39). The matching of images in the point- a image and the point- b image is detected in step S39, and whether the direction and amount of image misalignment are calculated or not is determined (step S40). In the case where the direction and amount of image misalignment are calculated, an AF result is determined as OK (success). If no matching can be found in the point- a image and the point- b image and the direction and amount of image misalignment cannot be calculated, the AF result is determined as NG (not good).

In step S40, in the case where the AF result is determined OK, focus is driven (step S41), and although not illustrated hereby, for example, the fact that the AF result was OK is displayed by a green AF frame in the display part 312 such as an LCD monitor or the like (step S42). In addition, in step S40, in the case where the AF result is determined NG, the fact that the AF result was NG is displayed in the display part 312 of the LCD monitor or the like (step S43). When the above AF operations are finished, as illustrated in FIG. 36, an exposure parameter is returned to the shutter speed value Tvo and the aperture value Avo determined in the AE processing of step 17 of FIG. 29 (step S44, shown by "※ 3" in FIGs. 35, 36) so that the AF processing is finished.

That is, the AF processing illustrated in FIG. 35 is performed as follows. The CPU 308, first drives once the aperture-shutter unit 302 via a mechanical driver 306, narrows down the aperture to a predetermined aperture value, drives the image pickup device 303 (image pickup body 31) via the image pickup device drive circuit 307, determines whether each pixel from pixel lines covered with each microlens of the microlens array 32 corresponds to inside a valid opening or outside a valid opening, and based on the determination results, - selects for focusing detection pixels corresponding to at least two different predetermined exit pupil positions. Then the CPU 308 opens the aperture, and takes out the output of these pixels by each microlens to reconstitute images so that an image corresponding to each exit pupil position is formed. Then misalignment in positions of these images is determined so that focused state / focus misalignment state are determined. Based on focusing information / focus misalignment information determined as described above, the CPU 308 moves the focus position of the imaging lens 301 in a direction reversely to the direction of focus misalignment, controls until the focused state is obtained and returns the aperture in a focused state. The shutter speed value is adjusted according to these aperture operations.

Then returning to the flowchart of FIG. 29, in a state where the first switch is on, if a second switch that actuates when the shutter button is fully pushed, that is, pushed to a second phase is turned on, monitoring is stopped (step S119) and still image recording processing is performed (step S120). In the still image recording processing of step S120, imaging data is loaded to a memory part 309, required screen image signal processing of converting the imaging data to brightness and color difference signals or JPEG compression processing or the like are processed in the DSP part 305. Image data where such processing is applied is written into the memory card 311 as a file. Thereafter, the processing returns to step S11.

In addition, other operations are performed in the operating part 313, when other operations are performed so that detection determinations in the step S15 are given, processing corresponding to aforementioned operations is performed (step S22), then the processing returns to step S11.

In addition, in through display and still image recording performed when the second switch is turned on, pixels other than those covered with microlens, which is an optical system for AF use, are used for still image generation. In the present embodiment, it is described that one pixel line of the image pickup body 31 is used for AF, with respect to the pixels corresponding to this line part, data calculated by interpolation calculation from peripheral lines up-and-down can be used.

It is preferable that pixels covered with the microlens array for AF use do not have color filters of R (red), G (green) and B (blue). When reconstituting images for AF use, if pixels of different color filters are lined up, detection of matching images becomes difficult. However, in many cases, many of the image pickup devices for general usage already have color filters disposed in an arrayed pattern of Bayer array or the like.

The above described apparatus to obtain focusing information and a method to obtain focusing information used in an imaging method and an imaging apparatus according to an embodiment the present invention are not limited thereto. Any imaging apparatus or imaging method that performs imaging using a two dimensional image pickup device can be used for obtaining focusing information in a system of whatever kind.

A focal point detection apparatus and a focal point detection method according to a sixth embodiment of the present invention as well as an imaging apparatus such as a digital camera using the focal point detection apparatus are described hereinbelow.

(General descriptions of a whole configuration of the digital camera)

Next, a whole configuration of the imaging apparatus according to sixth embodiment of the present invention is described in outline.

In this embodiment, the image pickup device is configured to convert incident light fluxes entering through a main optical system into pixel data and to output the pixel data. The optical element array member is configured to define each incident light flux entering via different exit pupil position of the imaging optical system onto a predetermined pixel in a pixel area of the corresponding covered pixels. The focusing device includes a focal length detection section configured to select pixel data of each pixel which are obtained from the corresponding incident light flux entering the main optical system, in a state where distances between the optical element array member, the image pickup device and the main optical system are kept constant, and to perform extraction treatment to generate a plurality of assumed focused images, which are differently focused according to an assumed distance in relation to the main optical system, and a section configured to obtain a focusing evaluation value to evaluate a focused state of the assumed focused image generated by the assumed image generating section. The focal length detection section and the focusing evaluation value obtaining may be included in the CPU 108.

Furthermore, the optical element array member may be configured to define each incident light flux onto each pixel of the pixel area, which is defined to receive the corresponding light flux via different exit pupil position of the imaging optical system. The focusing device may include a focal length detection section configured to select pixel data of each pixel which are obtained from the corresponding incident light flux entering the imaging optical system, in a state where distances between the optical element array member, the image pickup device and the imaging optical system are kept constant, to perform extraction treatment to generate a plurality of assumed focused images, which are differently focused according to an assumed distance in relation to the imaging optical system, and to obtain a focusing evaluation value to evaluate a focused state based on the generated assumed focused images. The focusing device may further include a driving section configured to drive the imaging optical system so as to focus the imaging optical system on the subject based on the focusing evaluation value obtained by the focal length detection section.

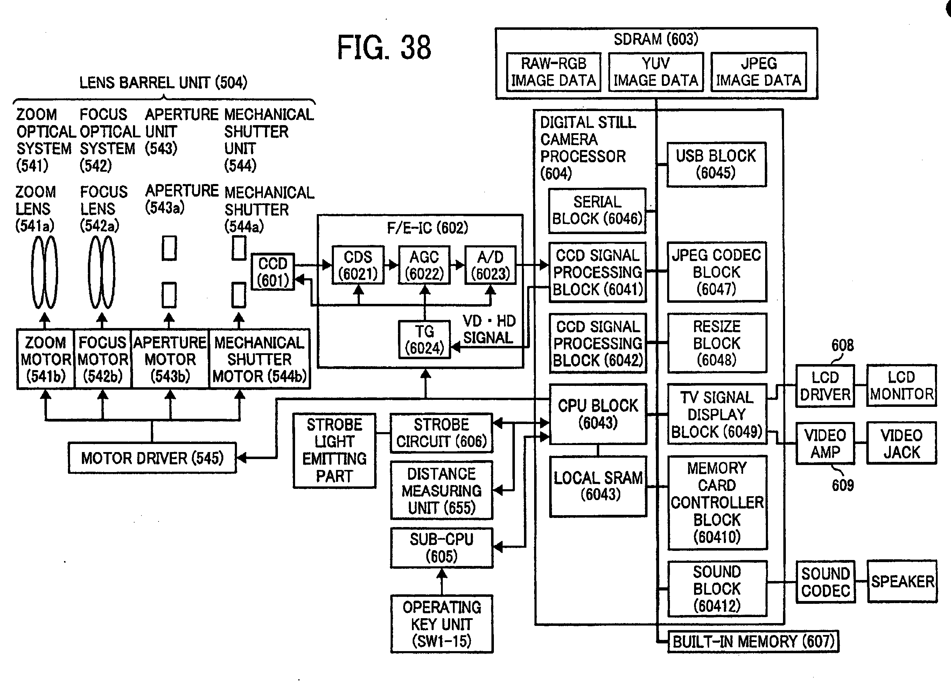

FIG. 37 is a front view illustrating the imaging apparatus, for example, the digital camera 501 according to this embodiment of the present invention. FIG. 38 is a block circuit diagram that illustrates a brief overview of a system configuration of an internal part of the digital camera 501.

As illustrated in FIG. 37, a release switch SW1, a mode dial SW2 and a sub LCD (not illustrated) are disposed on an upper side of the digital camera 501. A lens barrel unit 504, an optical finder and a strobe light emitting part or the like are disposed on a front side of the digital camera 501.

In the internal part of the digital camera 501, a system circuit is built-in. In FIG. 38, 604 is a digital still camera processor (referred to as a processor hereinbelow). The processor 604 includes a CCD 501 signal processing block 6041, a CCD 502 signal processing block 6042, a CPU block 6043, a local SRAM 6044, a USB block 6045, a serial block 6046, a JPEG CODEC block 6047, a RESIZE block 6048, a TV signal display block 6049, a memory card controller block 60410 and an audio block 60412. Each block is mutually connected by bus lines.

An SDRAM 603 is disposed in an external part of the processor 604. The SDRAM 603 is connected to the processor 604 via bus lines and a memory controller (not illustrated).

The SDRAM 603 has a function of storing temporarily photographed images imported via an image pickup device (for example, a CCD) 601. A built-in memory 607 and a ROM or the like (not illustrated) in which a control program is stored are further disposed in the external part of the processor 604. These, too, are connected to the processor 604 by bus lines. The control program is read out from the ROM when the camera is started.

The lens barrel unit 504 includes a zoom optical system 541 having a zoom lens 541a, a focus optical system 542 having a focus lens 542a, an aperture unit 543 having an aperture 543a and a mechanical shutter optical system 544 having a mechanical shutter 544a.

The zoom optical system 541, the focus optical system 542, the aperture unit 543 and the mechanical shutter optical system 544 are respectively driven by a zoom motor 541b, a focus motor 542b, an aperture motor 543b and a mechanical shutter motor 544b. These motors are each driven by a motor driver 545. The motor driver 545 is controlled by the CPU block 6043 of the processor 604.

Incident beams are guided to the image pickup device (CCD) 601 via an optical system of the lens barrel unit 504. The image pickup device (CCD) 601 performs photoelectric conversion to the incident beams and outputs photoelectric conversion signals to an F/E-IC 602. The F/E-IC 602 is constituted from a well-known CDS 6021, an AGC 6022 and an A/D conversion part 6023.

The F/E-IC 602 performs predetermined processing to the photoelectric conversion signals, converts the photoelectric conversion signals to digital signals and outputs the digital signals towards the CCD 501 signal processing block 6041 of the processor 604. These signal control processing are performed by VD · HD signals outputted from the CCD 501 signal processing block 6041 of the processor 604 via a TG (timing generator) 6024.

The CPU block 6043 controls the strobe circuit 606 to allow the strobe light emitting part to emit illumination light. In addition, the CPU block 6043 also controls a distance measuring unit 655. The CPU block 6043 is connected to a sub CPU of the processor 604. The sub CPU 605 performs display control of the sub LCD (not illustrated) via a CCD driver. The sub CPU 605 is further connected to operation key units SW1 to SW15 constituted from each operation switch. The release switch SW1 and the mode dial SW2 or the like are also included in these operation key units SW1 to SW15. A TV display block 6049 is connected to a LCD monitor via a LCD driver 608 and also connected to a video jack via a video amplifier 609. The mechanisms of other circuit blocks are well known so that any more descriptions are abbreviated.

(An general outline of an operation of a main processing of the digital camera)

When the mode dial SW2 is set to a recording mode, the digital camera 501 is started in the recording mode. The processor 604 detects whether the state of a mode switch is turned on to the recording mode or not so that the setting of the mode dial SW2 is performed.

The processor 604 controls the motor driver 545 and moves the lens barrel unit 504 to a position where photographing can be performed. Furthermore, the processor 604 powers up each circuit of the CCD 601, the F/E-IC 602 and the LCD monitor or the like to start operation. When each circuit is powered up, an operation of a finder mode (monitoring processing) is started.

In the finder mode, photoelectric conversion of the incident beams entering the image pickup device (CCD) 601 through the optical system of the lens barrel unit 504 are performed and the converted signals are sent to the CDS circuit 6021, the A/D conversion part 6023 as analog signals of R, G and B. The A/D conversion part performs digital conversion of the analog signals. The digital signals is converted to YUV signals in a YUV conversion part within a digital signal processing IC (the SDRAM 603) and written into a frame memory by a not illustrated memory controller. The YUV signals are read out by the memory controller and sent to a not illustrated TV and LCD monitors via the TV signal display block 6049.

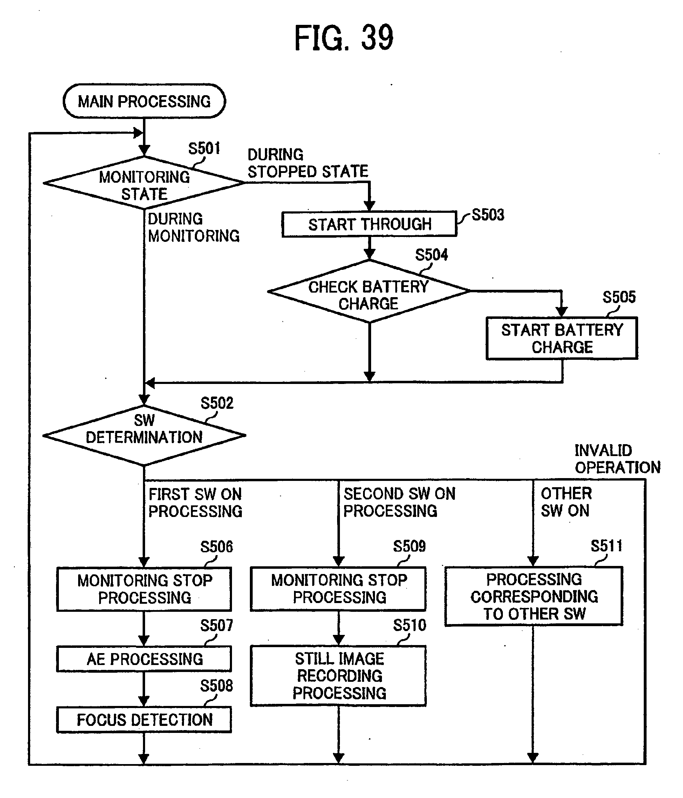

A general overview of operation processing of these main processing is described using a flowchart illustrated in FIG. 39. In the recording mode, when the power of the digital camera 501 is turned on, initializations of hardware of the internal part of the digital camera 501 and initialization of creating file information within a card in the built-in memory 607 or the like are performed. In addition, the digital camera 501 is set in a monitoring determination state (step 501). In the case where the digital camera 501 is during monitoring, a determination processing of key operation is performed (step 502). In the case of the stoppage of monitoring, a processing to start through is implemented (step 503) and a through image is displayed on the LCD monitor. In addition, in the case where a strobe photographing mode is selected, after the implementation of a processing to start through, whether battery charge is completed for a strobe is checked (step 504). A processing to start battery charge is implemented when battery charge is necessary (step 505), and then the determination processing of key operation is performed (step 502). The monitoring processing is implemented to maintain the through image to be in an appropriate coloring and brightness and performed, for example, by a periodical timer interruption processing of every 20 ms.

That is, in monitoring processing, the processor 604 calculates a white balance evaluation value AWB and an exposure amount evaluation value AE based on the photoelectric conversion signals from the image pickup device 513 (CCD 601). An electronic shutter driving timing of the CCD 601 is set by the TG generator 6024 such that these evaluation values become predetermined values. The electronic shutter driving timing has an upper limit and a lower limit, and according to the brightness of a subject, in the case where problems over exposure and under exposure cannot be resolved by only the electronic shutter driving timing, the processor 604 changes an opening diameter of the aperture 543a or changes an amplification factor by the AGC 6022 so that a processing that can obtain an appropriate exposure amount is performed. In addition, an adjustment processing of an AWB parameter is also performed.

In step 502, when a first stage of the release switch SW1 is turned on, the processor 604 performs a monitoring stoppage processing (step 506). After that, the processor 604 implements an AE processing (step 507) and a focal point detection processing (step 508). In addition, the determination processing of operation switches of step 502 is performed for example, at the time of periodical interruption processing of every 20 ms. In step 502, when a second stage of the release switch SW1 is turned on, the processor 604 performs monitoring stoppage processing (step 509), and then implements a still image recording processing (step 510).

When other key operation switches are operated, a processing for implementing functions possessed by switches corresponding to the operated key operation is implemented (step 511). When no key operation switches are operated, it is determined as invalid operation, thereby the processing returns to step 501 and repeats a processing after step 501.

In the AE processing (step 507), evaluation values of exposure amount are obtained, exposure time of the CCD is set and the amplification factor of the AGC 6022 is set. In an AF processing (step 508), a focal point detection processing described later is implemented.

(A schematic diagram of a configuration of an optical system according to this embodiment)

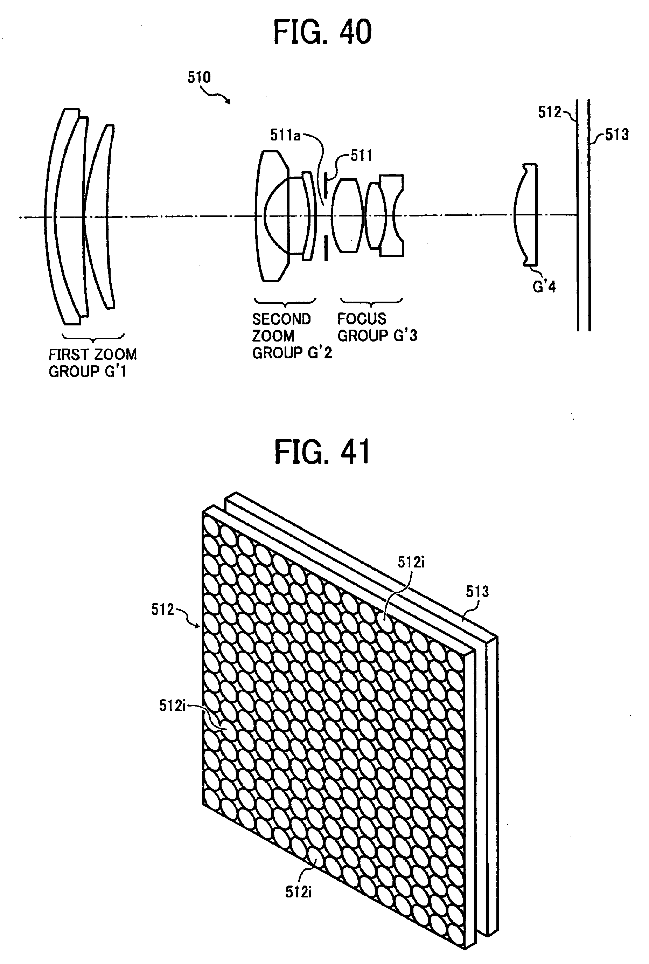

FIG. 40 is a schematic diagram of an imaging optical system of the imaging apparatus according to this embodiment of the present invention. In FIG. 40, reference number 510 is a main lens, 511 is an aperture plate, 512 is an optical element arraying body, 513 is an image pickup device. Hereby, the main lens 510 includes the zoom optical system 541, the focus optical system 542, the aperture unit 543 and the mechanical shutter unit 544, which are disposed within the lens barrel unit 504. The actual main lens 510 is, for example, constituted as illustrated in FIG. 40 from a first zoom group G'1, a second zoom group G'2, a focus group G'3, a fourth group G'4 and the aperture plate 511 but it can be treated as a single lens in geometric optics. In this context, the main lens 510 can be an optical system constituted from one lens and also can be an optical system constituted from a plurality of lenses, and the main lens 510 can be referred to as a "main optical system" which can include only one lens or a plurality of lenses.

The aperture plate 511 is constituted, for example, from a turret plate having a plurality of openings 511a with mutually different diameters. In FIG.1, reference number $O_1$ illustrates a rotating axis of the turret plate, $O_2$ illustrates a light axis of the main lens 510. In addition, when generating a makeshift focused image according to this embodiment of the present invention, the opening 511a of the aperture plate 511, which has the largest diameter, is inserted to the light path of the main lens 510.

The microlens array 32 may be integrally provided with the light-receiving part 31 of the image pickup device 3 and the image generating section may include a section configured to image at least twice on the different positions by moving the microlens array and the light-receiving part of the image pickup device in a direction crossing a direction where the microlenses are arrayed and to obtain the field image including the pixel data corresponding to the pixels covered with the microlenses.

On the other hand, the microlens array 32 may be separately provided with the light-receiving part 31 of the image pickup device 3 and the image generating section includes a section configured to image at least twice on the different positions by moving the microlens array in relation to the light-receiving part 31 of the image pickup device 3 in a direction crossing a direction where the microlenses are arrayed and to obtain the field image including the pixel data corresponding to the pixels covered with the microlenses.

The focusing information obtaining device may be configured to obtain the focusing information of the field image by comparing an output of the pixel corresponding to a first exit pupil position and an output of the pixel corresponding to a second exit pupil position.

The optical element arraying body 512 is disposed on a foreside of the image pickup device 513. The arraying body 512 is constituted from a plate on which microlenses are arrayed as illustrated in FIG. 41. Reference number 512i (i=1 to n; n is a positive integer) illustrates each microlens. The image pickup device 513 is, for example, constituted by the CCD 601, a CMOS sensor, or the like. The image pickup device 513 is constituted by an assembly of a plurality of pixels, each of which performs photoelectric conversion of each incident beam entering via the main lens 510 to respectively output data. In addition, each microlens 512i of the arraying body 512 hereby differs from microlens for light concentration use, which is integrally embedded to the arraying body 512 to compensate the deficiency of light amount occurring because light-receiving area per pixel became smaller due to high resolution (higher number of pixels).

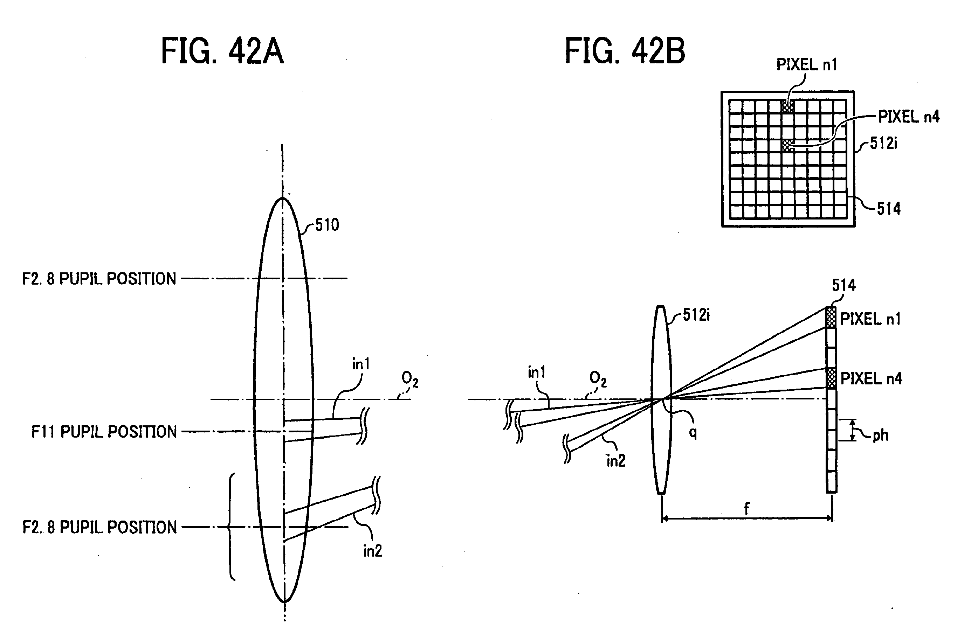

Each microlens 512i hereby, as illustrated in FIGs. 42A and 42B, is disposed corresponding to each pixel area 514 constituted by pixel areas of horizontal and vertical lines of 9 × 9. Each pixel area 514 is disposed in a position of a focal length f of the microlens 512i and each microlens 512i is disposed to regulate angles of incident beams entering respectively pixels of the pixel area 514 via different exit pupil positions of the main lens 510 by a light beam passing through a main point q of each microlens 512i. If pixel pitch is set to 2 $\mu$m, the number of pixels corresponding to one microlens 512i is 9 so that the length of the corresponding pixel lines is 18 $\mu$m. If an open F number of the main lens 510 is set to 2.8, the focal length f of one microlens 512i is calculated by the formula f / 18 = 2.8 and is equal to 50.4 $\mu$m. In this embodiment, the diameter of each microlens 512i is 18 $\mu$m and the focal length f is 50.4 $\mu$m. Because the pixel area 514 is in a squared shape so that in actual, each microlens 512i, as illustrated in FIG. 42B, has cut out peripheral parts and is of a squared shape when viewed from the front side.

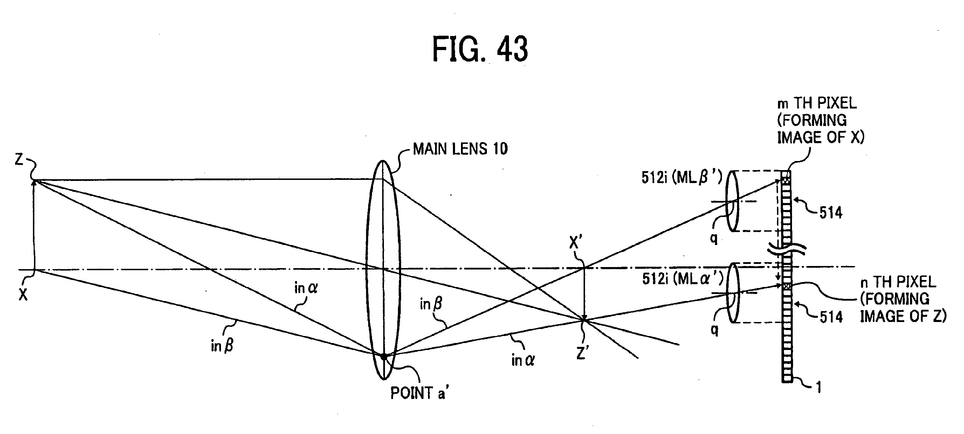

FIG. 43A schematically illustrates the relationship between the main lens 510, the microlens 512i and incident light rays "in". $In_1$ illustrates an incident light ray that enters an exit pupil position F11 equal to a height position on a light axis of the main lens 510. $In_2$ illustrates an incident light ray that enters an exit pupil position F2.8. Each pixel of the pixel area 514 is associated to each exit pupil position of the main lens 510 by the microlens 512i. The state of a pixel $n_1$ that receives the incident light ray $in_2$ which enters the exit pupil position F2.8 and the state of a pixel $n_4$ that receives the incoming light ray $in_1$ which enters the exit pupil position F11 are illustrated in FIG. 43A. The exit pupil of the main lens 510, in this embodiment, is divided into 81 exit pupil positions by the microlens 512i.

In FIG. 43A, the case where one microlens 512i and one pixel area 514 exist on the light axis $O_2$ of the main lens 510 is described, a relationship of other microlens 512i which is not disposed on the light axis $O_2$ and a pixel area 514 direct rearward of the other microlens 512i are configured in the same way. Therefore, with respect to all microlenses 512i and the pixel area 514 direct rearward of the microlens 512i, light rays entering each exit pupil position of the main lens 510 and pixels that receive these light rays are determined.

In such a way, incident beams entering each exit pupil position of the main lens 510 and passing through the main point q of each microlens 512i are associated to each pixel within the pixel area 514 corresponding to the microlens 512i.

The principles of this embodiment of the present invention are described hereinbelow.

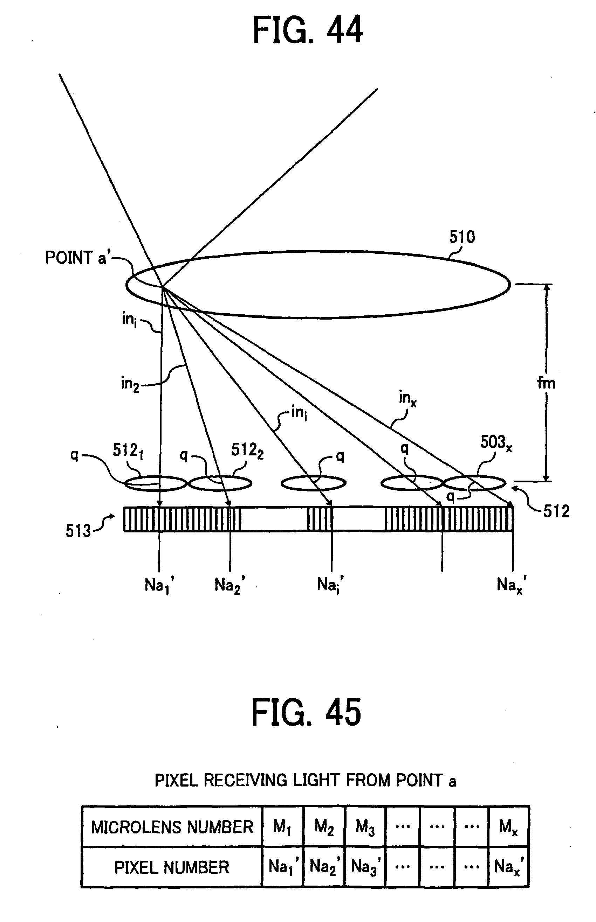

FIG. 44 is a schematic diagram illustrating principles according to this embodiment of the present invention. A relationship of incident beams entering a point a' of the exit pupil position F2.8 via the main lens 510, a ML$\alpha$' and a ML$\beta$' within the microlens 512i and an pixel area direct rearward of the ML$\alpha$' and the ML$\beta$' is illustrated in FIG. 44. The n th pixel of the pixel area 514 corresponding to the microlens ML$\alpha$' receives an incident beam in$\alpha$, the m th pixel of the pixel area 514 corresponding to the microlens ML$\beta$' receives incident beam in$\beta$. Also with respect to the microlens 512i disposed between the microlenses ML$\alpha$' and ML$\beta$', there exist pixels that receive incident beams passing through the point a' as well as the main point q of the microlens 512i. Accordingly, pixel data based on pixels are appropriately selected and these pixels are arrayed, so that a field image passing through the point a' of the exit pupil position F2.8 of the main lens 510 can be generated. A processing to generate a field image corresponding to exit pupil positions of the main lens 510 using the pixel data of the pixels receiving the incident beam which is projected from the exit pupil positions of the main lens 510, enters the microlens 512i and passes through the main point q of the microlens 512i in such a way is referred to as a reconstitution of an image.

That is, as illustrated in FIG. 45, microlens $512_1$, $512_2$,..., $512_i$, ... $512_x$ are disposed closely at the points in a distance fm from the main lens 510 and an image pickup device 513 constituted from a plurality of pixels is disposed directly rearward to the microlens 512i. A dimension of each of the pixels is assumed to be infinitely small for convenience of descriptions. In the case where a microlens array plate 512 is not disposed, each pixel receives incident beams projected from a whole surface of an exit pupil of the main lens 510. In the case where the microlens array plate 512 is disposed, the pixels to which each incident beam projected from a point a' of the exit pupil enters are defined by each microlens array 512i. In FIG. 45, the state in which a pixel $Na_1$' receives an incident beam $in_1$ that passes through the main point q of the microlens $512_1$ and a pixel $Na_2$' receives an incident beam $in_2$ that passes through the main point q of the microlens $512_2$, a pixel $Na_i$' receives an incident beam in; that passes through the main point q of the microlens $512_i$ and a pixel $Na_x$' receives an incident beam $in_x$ that passes through the main point q of the microlens $503_x$ is illustrated.

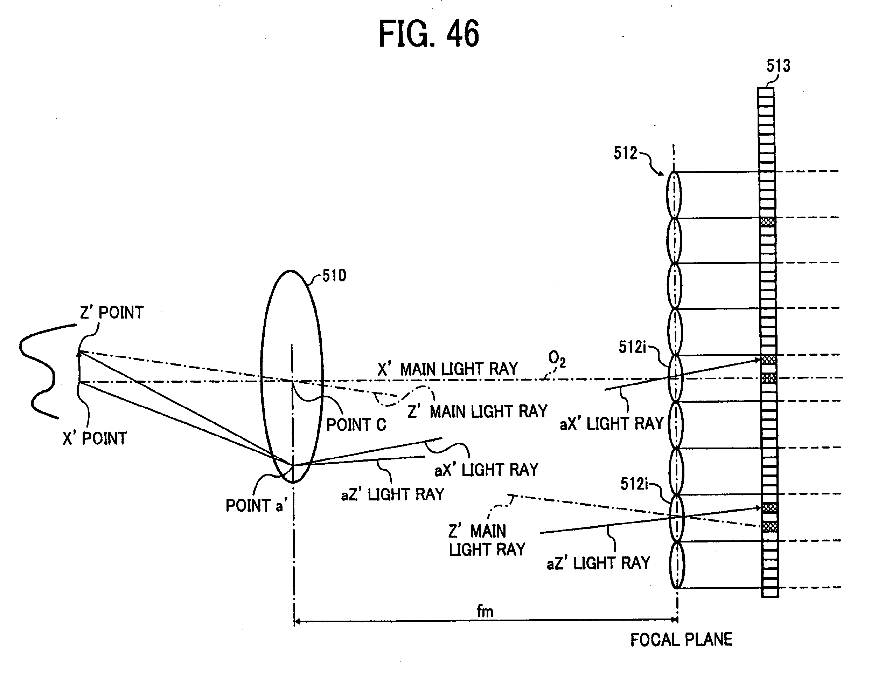

Therefore, if the distance fm between the main lens 510 and the microlens array plate 512 is determined, a relationship between each incident beam that enters through the main point q of each microlens 512i in every exit pupil position and pixels that respectively receive the above incident beams is determined. FIG. 46 is a corresponding table which illustrates a relationship between the incident beams illustrated in FIG. 45 and light-receiving elements that receive the above incident beams. By selecting and extracting pixel data of the pixels Na1' to Nax' within all pixels of the image pickup device 513, image arraying information of an image of a field viewed from the point a' of the main lens 510, that is, a field image can be obtained.

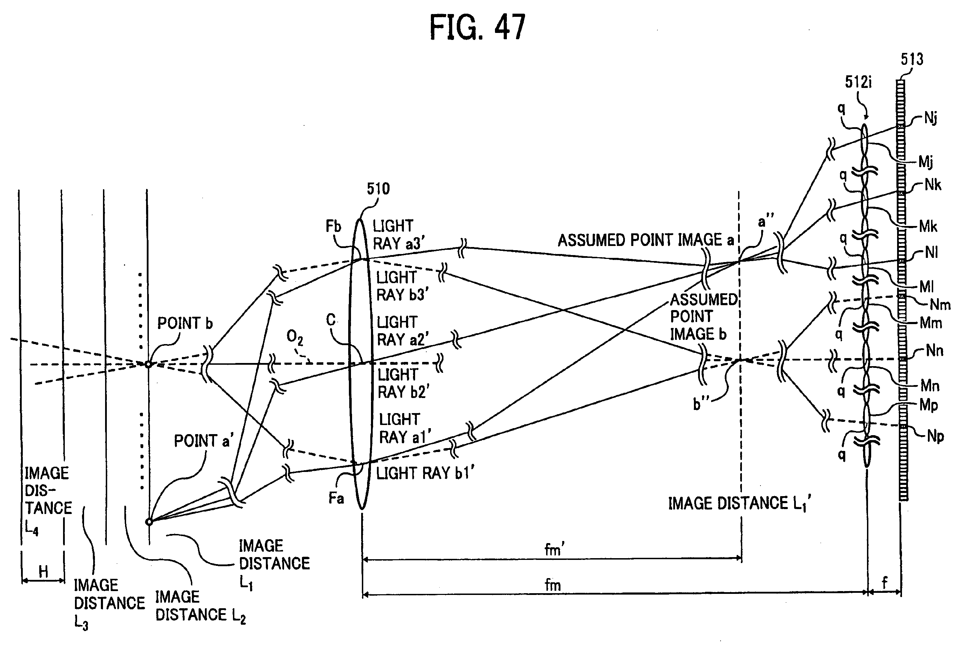

In addition, as illustrated in FIG. 47, if an incident light ray that passes through a point a' of the main lens 510 within light rays projected from an object point X' of a subject is defined as aX', an incident light ray that passes through the point a' of the main lens 510 projected from an object point Z' of the subject is defined as aZ', a light ray projected from the object point X' and passes through a main point C of the main lens 510 is defined as an X' main light ray, a light ray projected from the object point Z' and passes through the main point C of the main lens 510 is defined as a Z' main light ray and the subject is focused on the microlens array, the X' main light ray and the Z' main light ray enter the different microlenses $512_i$ on the microlens array. In addition, when the subject is focused (in a state where the main lens 510 focuses the subject), the aX' light ray and the aZ' light ray also respectively enter each microlens $512_i$ to which the X' main light ray and the Z' main light ray enter. If the distance fm from the main lens 510 to the microlens plate 512 is determined, a pixel into which an incident beam entering through each exit pupil position of the main lens 510 when the main lens 510 is in a focused state with respect to the subject should enter is determined. Hereby, a relationship between the pixel and the distance fm can be preliminarily recognized by a system circuit. When the main lens 510 is not focused with respect to the subject, the aX' light ray and the aZ' light ray do not respectively enter each microlens $512_i$ to which the X' main light ray and the Z' main light ray have entered.

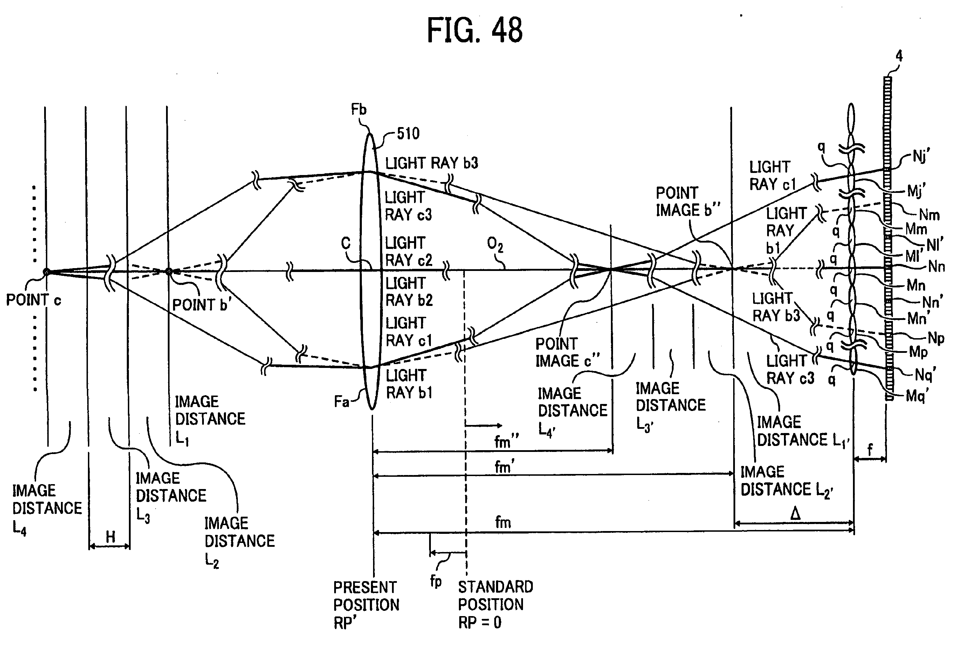

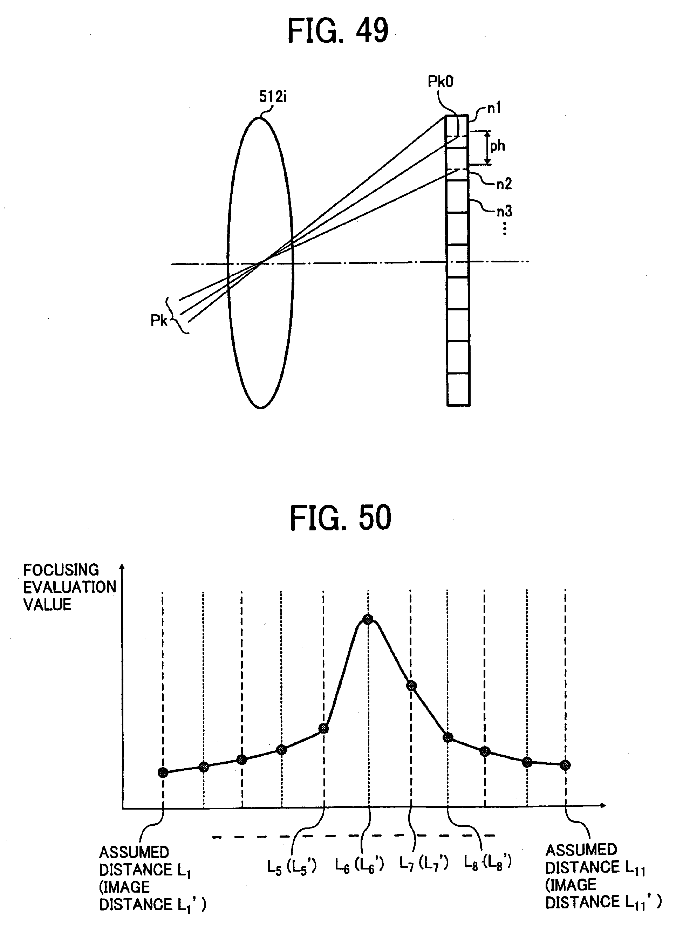

If the main lens 510 is not focused to the subject, by appropriately selecting pixels, it is possible to generate an assumed focused image. FIGs. 48 and 49 are schematic diagrams illustrating the principles of creating the assumed focused image. A main light ray a2' that passes through a main point C of the main lens 510 and passes through a point a' existing in a position of an assumed distance $L_1$ from the main lens 510, incident light rays a1' and a'$_3$ respectively directed toward different exit pupil positions $F_a$, $F_b$ of the main lens 510 and passes through the point a' existing in the position of the assumed distance $L_1$ from the main lens 510, a main light ray b2' that passes through the main point C of the main lens 510 and passes through a point b' which exists on a light axis $O_2$ and in a position of the assumed distance $L_1$ from the main lens and incident light rays b1' and b3' directed toward different exit pupil positions $F_a$, $F_b$ of the main lens 510 are illustrated in FIG. 48. As illustrated in FIG. 47, when the main lens 510 is in a focused state to the subject, a relationship between the pixels and the incident light rays that respectively enter through the exit pupil positions can be recognized by a system circuit. In reverse, when the main lens 510 is not in a focused state to the subject, the relationship between each pixel and each incident light ray that enters through each exit pupil position can also be recognized by the system circuit.

In FIG. 48, the following state is illustrated. The main light ray a2' that passes through the main point C of the main lens 510 and passes through the point a' of the assumed distance $L_1$, passes through a main point q of a microlens $M_k$ and is received by a pixel $N_k$. The light ray a1' that passes through the exit pupil position $F_a$ of the main lens 510 and passes through the point a' of the assumed distance $L_1$, passes through a main point q of a microlens $M_j$ and is received by a pixel $N_j$. The light ray a3' that passes through the exit pupil position $F_b$ of the main lens 510 and passes through the point a' of the assumed distance $L_1$, passes through a main point q of a microlens $M_1$ and is received by a pixel $N_1$. The main light ray b2' that passes through the main point C of the main lens 510 and passes through the point b' on the light axis $O_2$ of the assumed distance $L_1$, passes through a main point q of a microlens $M_n$ and is received by a pixel $N_n$. The light ray b1' that passes through the exit pupil position $F_a$ of the main lens 510 and passes through the point b' on the light axis $O_2$ of the assumed distance $L_l$, passes through a main point q of a microlens $M_m$ and is received by a pixel $N_m$. The light ray b3' that passes through the exit pupil position $F_b$ of the main lens 510 and passes through the point b' on the light axis $O_2$ of the assumed distance $L_1$, passes through a main point q of a microlens $M_p$ and is received by a pixel $N_p$.

In relation to the main lens 510, if an actual subject point exists in the point a' of the assumed distance $L_l$, a subject image a" corresponding to the point a' is formed in a position of an image distance fm' from the main lens 510, a data value obtained by adding each pixel data of the pixel Nj, the pixel $N_k$, the pixel $N_l$ that receive the beams can be deemed as an assumed focused point image of the point a' of the assumed distance L1. If an actual subject point does not exist in the point b' of the assumed distance $L_l$, beams passing through the point b' of the assumed distance $L_1$ are not cognate beams (beams for forming an image) projected from the point b' but are beams from rearward of the point b', for example, are incident beams that enter the point b' from the assumed distances $L_2$, $L_3$, ... different from the assumed distance $L_l$. Even by selecting the pixels $N_m$, $N_n$, $N_p$ which are to be selected when a subject point exists in the point b' and adding data, the assumed focused point image b" becomes a so-called blurred image in which the contour is not clear.

Next, in FIG. 49, in the case where an actual subject point does not exist on the point b' on the light axis $O_2$ and at the assumed distance $L_1$ but the actual subject point exists on the light axis $O_2$ and at an assumed distance $L_4$, a relationship of light rays that pass through the main lens 510 and pixels that receive the light rays is illustrated.

In FIG. 49, the following state is illustrated. A main light ray c2 that passes through the main point C of the main lens 510 and passes through a point c of the assumed distance $L_4$, passes through a main point q of a microlens $M_n$ and is received by a pixel $N_n$. A light ray c1 that passes through the exit pupil position $F_a$ of the main lens 510 and passes through the point c of the assumed distance $L_4$, passes through a main point q of a microlens $M_j'$ and is received by a pixel $N_j'$. A light ray c3 that passes through the exit pupil position $F_b$ of the main lens 510 and passes through the point c of the assumed distance $L_4$, passes through a main point q of a microlens $M_q'$ and is received by a pixel $N_q'$. A main light ray b2 that passes through a main point C of the main lens 510 and passes through a point b' on the light axis $O_2$

at the assumed distance $L_1$, passes through a main point q of a microlens $M_n$ and is received by a pixel $N_n$. A light ray b1 that passes through the exit pupil position $F_a$ of the main lens 510 and passes through a point b' on the light axis $O_2$ of the assumed distance $L_l$, passes through a main point q of a microlens $M_m$ and is received by a pixel $N_m$. A light ray b3 that passes through the exit pupil position $E_h$ of the main lens 510 and passes through the point b' on the light axis $O_2$ of the assumed distance $L_1$, passes through a main point q of a microlens $M_p$ and is received by a pixel $N_p$.

As clear from the FIG. 49, in the case where the actual subject point does not exist in the point b' of the assumed distance $L_1$ but exists in the point c' of the assumed distance $L_4$, even when the point b' and the point c' are both on the light axis $O_2$ of the main lens 510, pixels to be selected when the subject point of the subject is on the point b' of the assumed distance $L_1$ differs from pixels to be selected when the subject point is on the point b' of the assumed distance $L_4$. In addition, in the case where the actual subject point exists in the point c' of the assumed distance $L_4$, a point image c" is formed in a position of an image distance $L_4$' (a distance fm" from the main lens 510) corresponding to the assumed distance $L_4$, although the point is on the light axis $O_2$ of the main lens 510, an assumed focused point image is obtained in the assumed distance $L_4$ and the assumed focused point image is blurred in the assumed distance $L_1$.

In addition, a position on a screen of an assumed focused point image, by setting as a standard the microlens $M_n$ of the light axis $O_2$ of the main lens 510 and each pixel of a pixel area 514 corresponding to the microlens $M_n$, is determined by an assumed distance L (image distance L') and pixels used for generation of an assumed focused point image.

Therefore, by selecting pixels for each assumed distance and generating a point image of an image distance corresponding to each assumed distance, an assumed focused image of every one screen and every assumed distance can be generated.

Regardless of a focusing state of the main lens 510 to a subject, that is, without driving the main lens 510, assumed focused images corresponding to the positions of the assumed distance $L_1$, the assumed distance $L_2$, the assumed distance $L_3$, and the assumed distance $L_4$, ... can be generated. A reconstitution of an image with different focused state using the microlens is for example, also disclosed in US20070252074 gazette.

In the case where an incident beam $P_k$ that passes through the point a' enters across mutually adjacent pixels, for example, as illustrated in FIG. 50, based on a ratio between a pixel pitch ph and a center position $P_{ko}$ of the incident beam $P_k$, pixel data obtained by performing weighting to pixel data outputted from a pixel $n_1$ and pixel data outputted from a pixel $n_2$ is used as data outputted from the pixel $n_1$ and the pixel $n_2$ respectively. For example, in the case where the center position $P_{ko}$ of the incident beam $P_k$ is twisted about 1/3 to the side of the pixel $n_1$ from a boundary line of the mutually adjacent pixel $n_1$ and pixel $n_2$, a sum of a value of the pixel data outputted from the pixel $n_1$ and a value of the pixel data outputted from the pixel $n_2$ is multiplied 2/3 times to be used as the pixel data outputted from the pixel $n_1$ and the sum of the value of the pixel data outputted from the pixel $n_1$ and the value of the pixel data outputted from the pixel $n_2$ is multiplied 1/3 times to be used as the pixel data outputted from the pixel $n_2$.

(Example 1)

In an example 1 according to the present invention, a distance to a subject is assumed regardless of whether the main lens 510 is in a focusing position to the subject. In a state retaining at constant distances between the main lens 510, the optical element arraying body and the image pickup device in which the optical element arraying body is disposed, an assumed focused image generation device that generates a plurality of assumed focused images in mutually different focused states by -selecting and processing each pixel data obtained based on incident beams that enter the main lens 510 is provided. In this example, a focusing evaluation detection device to evaluate the assumed focused images obtained by the assumed focused image generation device is also provided.

The focusing evaluation detection device performs a high-pass digital filter processing to image data of the assumed focused images corresponding to a central area of a screen for each data of the assumed focused images with different focused states, obtains a predetermined frequency component and calculates focusing evaluation values corresponding to contrast values of a subject image. Within the focusing evaluation values obtained in such a way, it is assumed that an assumed focused image corresponding to the largest focusing evaluation value represents a focused state of the main lens 510 to the subject.

FIG. 50 represents focusing evaluation values based on the assumed focused images. The smaller an interval H (see FIGs. 47 and 48) between the assumed distances is set, the more precise focusing evaluation can be performed. Because the distance from the main lens 510 to the actual subject is not clear, many focusing evaluation values with different assumed distances are necessary. In FIG. 50, focusing evaluation values obtained by setting the assumed distances from the main lens 510 to 11 stages are illustrated. In FIG. 50, the focusing evaluation value is largest when the image distance is $L_6$' corresponding to the assumed distance of $L_6$. A focusing evaluation value is second largest when the image distance is $L_7$' corresponding to an assumed distance of $L_7$. Focusing evaluation values of the remaining image distances $L_1$' to $L_5$' and image distances $L_8$' to $L_{11}$' are small in comparison to the focusing evaluation value of the image distance $L_6$' and the focusing evaluation value of the image distance $L_7$'.

If the subject is actually situated between the assumed distance $L_6$ and the assumed distance $L_7$, the assumed focused image obtained when the subject is assumed to be situated in a position of the assumed distance $L_1$ becomes a most blurred image because the main lens 510 is largely misaligned from an focused position to an actual subject and the focusing evaluation value is the smallest. As the assumed distance becomes closer to the actual focusing position of the main lens 510 in the order of the assumed distance L2, the assumed distance L4, and then the assumed distance L6, the focusing evaluation value becomes larger. On the other hand, as the assumed distance becomes farther away from the actual focusing position of the main lens 510 in the order of the assumed distance $L_7$, the assumed distance $L_8$, the assumed distance $L_9$, the assumed distance $L_{10}$, and then the assumed distance $L_{11}$, the focusing evaluation value becomes smaller. The focusing evaluation value corresponds to a conventional focusing evaluation value obtained when actually driving the main lens 510. The focusing evaluation value becomes drastically large in the vicinity of a position where the main lens 510 is in focusing state to the subject. In the case where the subject exists between the assumed distance $L_6$ and the assumed distance $L_7$, an actual focusing position of the main lens 510 to the subject is situated between the assumed distance $L_6$ and the assumed distance $L_7$, using the focusing evaluation value obtained when the subject is assumed to be situated in a position of the assumed distance $L_6$ and the focusing evaluation value obtained when the subject is assumed to be situated in a position of the assumed distance $L_7$, the focusing evaluation value between the assumed distance $L_6$ and the assumed distance $L_7$ is calculated by an interpolation calculation.

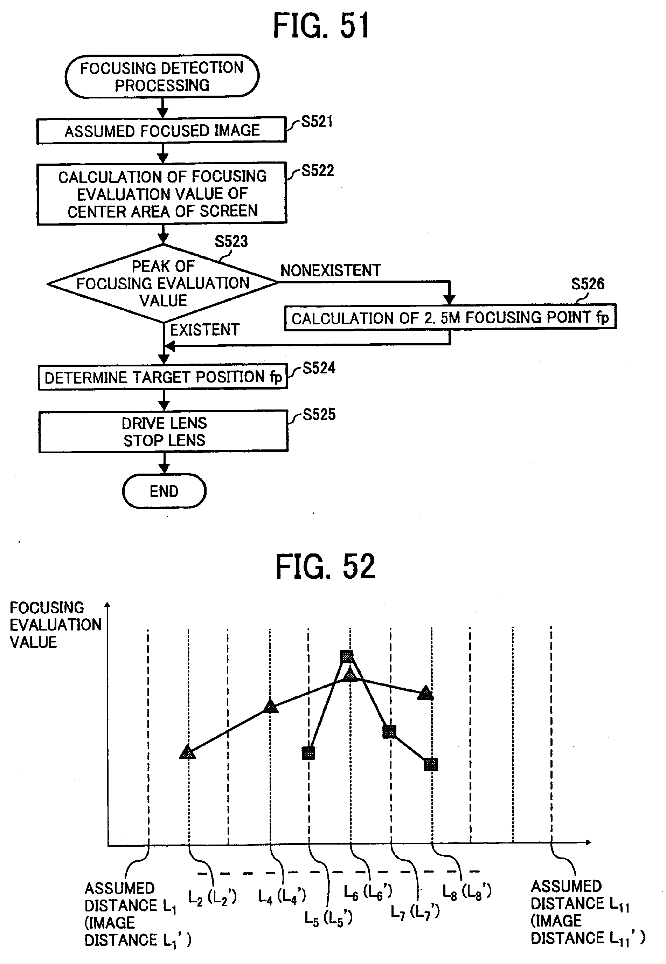

As illustrated in FIG. 39, when the first stage of the release switch SW1 is turned on during the implementation of the main processing, the processor 604 implements the AE processing (step 507), and then implements the focal point detection processing (step 508). In the focal point detection processing, as illustrated in FIG. 52, first, a plurality of assumed focused images (focal point state image) with different focused state by each assumed distance are generated (step 521).

Next, a high- pass digital filter processing is performed with respect to each assumed focused image part corresponding to a central area of a screen within each assumed focused image and focusing evaluation values are obtained by performing focal point evaluation calculations to each assumed distance $L_1$ through $L_{11}$ (step 522) . Next, each focusing evaluation value obtained respectively from a close- in side of the assumed distance $L_1$ to a faraway side of the assumed distance L11 is compared and whether there is a peak in the focusing evaluation values is determined (step 523) . The processor 604, in the case of determining that there is a peak in the focusing evaluation values, calculates a focusing target position fp of the main lens 510 to the subject and determines the focusing target position $f_p$ of the main lens 510 (step 524) . The focusing target position fp hereby is a value corresponding to a drive amount from a standard position RP of a lens. In addition, the present lens position to the present standard position is set to RP', a defocus amount when the main lens 510 is at the present position RP' to the subject is set to $\Delta$ and the focusing target value fp is calculated by fp = RP'- $\Delta$. In FIG. 49, the focusing target value fp when the subject is at the assumed distance $L_1$ is illustrated.

That is, the standard position RP of the main lens 510 is determined in advance, the present position RP' of the main lens 510 to the standard position RP can also be calculated by the number of pulses used for driving a pulse motor so that if the focusing target position fp of the main lens 510 to the subject is calculated, a drive amount of the main lens 510 can be calculated. The processor 604 implements a processing of actually driving the main lens 510 to the focusing target position fp, and then stops the driving of the main lens 510 (step 525). Herewith the main lens 510 becomes focused to the subject. In step 523, if focusing evaluation values are all smaller than the predetermined value and when determined that there is no peak, the processor 604 performs a calculation so that focusing target position fp is set by assuming that the subject is situated 2.5m from the main lens 510 (step 526), determines the focusing target position fp (step 524), performs a processing that drives the main lens 510 to the focusing target position fp, and then stops the driving of the main lens 510 (step 525).

In such a way, according to the example 1, even when the main lens 510 is not focused to the subject, the focusing target position fp of the main lens 510 to the subject can be calculated in a state retaining a constant distance from the subject without actually driving the main lens 510.

That is, in the example 1, the imaging apparatus including the image pickup device 513 constituted from an assembly of the plurality of pixels which performs photoelectric conversion to each incident beam that enters through the main lens 510 and respectively outputs pixel data is described. The imaging apparatus also includes the optical elements 512i disposed for each pixel area 514 of the image pickup device 513 in a foreside of the image pickup device 513 as well as the optical element arraying body 512 or the like that regulates incident beams which should enter each pixel of the pixel area 514 through different exit pupil positions of the main lens 510.

In order to obtain a focused image which is obtained if the subject is in a conjugate relationship with the optical element 512i or the image pickup device 513 with respect to the main lens 510, a focal length detection step, a driving step, and imaging step are performed. In the focal length detection step, a plurality of assumed focused images in different focused states depending to the assumed distance to the main lens 510 is generated by selecting and extracting pixel data of each pixel obtained based on the incident beams entering the main lens in a state where the distance between the optical element arraying body, the image pickup device on which the optical element arraying body is disposed and the main lens 510 is constant, and then focusing evaluation values to evaluate a focused state based on the generated assumed focused images are obtained. In the driving step, the main lens 510 is driven so as to focus the subject based on the focusing evaluation values obtained in the focal length detection step. In the imaging step, the subject is imaged by focusing the main lens 510 to the subject.

In the focal length detection step, an assumed focused image generation step and a focusing evaluation value obtaining step are performed. In the assumed focused image generation step, a plurality of assumed focused images in mutually different focused states for every assumed distance to the main lens 510 are generated by selecting for extraction processing pixel data of each pixel obtained based on incident beams entering the main lens 510 in a state where the distance between the optical elements arraying body, the image pickup device in which the optical elements arraying body is disposed and the main lens 510 is constant. In the focusing evaluation value obtaining step, focusing evaluation values is obtained by evaluating the focusing state based on each generated assumed focused image.

(Example 2)

In example 1, as illustrated in FIG. 51, the interval H between one assumed distance and another assumed distance is set to fine slices so that precise focusing evaluation can be performed. But the interval H between the one assumed distance and the another assumed distance can also be set to coarse slices in which precise focusing evaluation can still be performed.

As widely known, the larger the F number, the larger the focus depth. Reversely, the smaller the F number, the smaller the focus depth. Hereby, the F number denotes a ratio of a bore diameter D in relation to a focal length f of the main lens 510 (f/D). If the F number is large, a subject image with little blur can be obtained even when a focal point to the subject is measurably misaligned. If the F number is small, when the focal point to the subject is measurably misaligned, the subject image becomes that with large blur. For example, if the F number is large, an image where the subject is focused across a broad area of a field from a near distance side to a far distance side can be obtained. If the F number is small, when the subject of the near distance side is focused, the subject image becomes in a blurred state in backward of forward positions of the near distance side. To express in another way, in the main lens 510 in which the F number is large, a focusing evaluation value obtained by the main lens 510 does not drastically change even when a focused position of the main lens 510 to the subject is misaligned. In the main lens 510 in which the F number is small, a focusing evaluation value obtained by the main lens 510 drastically changes when a focused position of the main lens 510 to the subject is misaligned.

The assumed focused image generation device is configured to generate pseudo assumed focused images with different focal depth. For example, by accumulating and integrating only pixel data obtained from pixels that receive incident beams which pass through the exit pupil position F11 as illustrated in FIGs. 43A, 43B, an assumed focused image viewed through the exit pupil position F11 can be obtained. The assumed focused image viewed through the exit pupil position F11 is generated for each mutually different assumed distance. By creating focusing evaluation values respectively based on each assumed focused image obtained by each assumed distance, coarse focusing evaluation values can be obtained across a broad area in a light axis direction of the main lens 510.

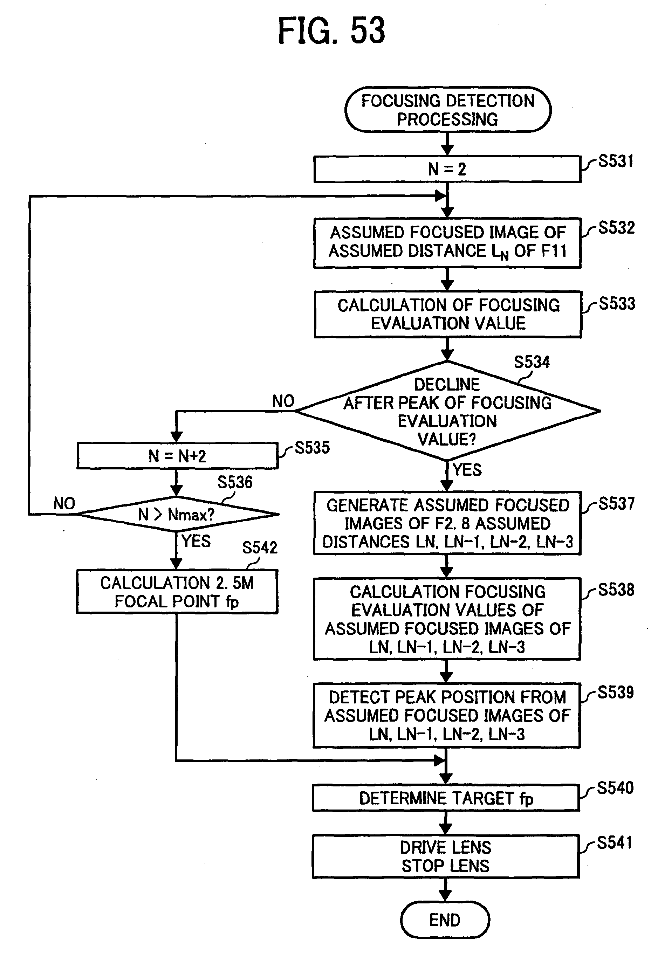

FIG. 53 illustrates focusing evaluation values created using assumed focused images with different focal depths. In FIG. 53, each focusing evaluation value obtained by creating each assumed focused image with a broad focal depth at the assumed distance $L_2$, the assumed distance $L_4$, the assumed distance $L_6$ and the assumed distance $L_8$ is illustrated by filled triangles (sign A). In addition, each focusing evaluation value obtained by creating each assumed focused image with a narrow focal depth at the assumed distance $L_5$, the assumed distance $L_6$, the assumed distance $L_7$ and the assumed distance $L_8$. is illustrated by filled squares (sign ■).

It can be considered that the focusing evaluation value A obtained by each assumed focused image with broad focal depth is in the focusing state across a broad area so that a change curve thereof is gentle. On the other hand, it can be considered that the focusing evaluation value ■ obtained by each assumed focused image with narrow focal depth is in the focusing state only across a narrow area so that a change curve thereof is precipitous.

Meanwhile, it can be considered that a maximum value of the focusing evaluation value ■ obtained by each assumed focused image of narrow focal depth is precisely focused so that the value is larger than a maximum value of the focusing evaluation value ▲ obtained by each assumed focused image of broad focal depth.

Thereby, an approximate focusing position is calculated using each focusing evaluation value based on assumed focused images of broad focal depth. Next, a precise focusing position is calculated using focusing evaluation values based on assumed focused images of narrow focal depth in the vicinity of the approximate focusing position so that it is necessary to generate point by point assumed focused images for each assumed distance and a precise focusing position can be calculated.

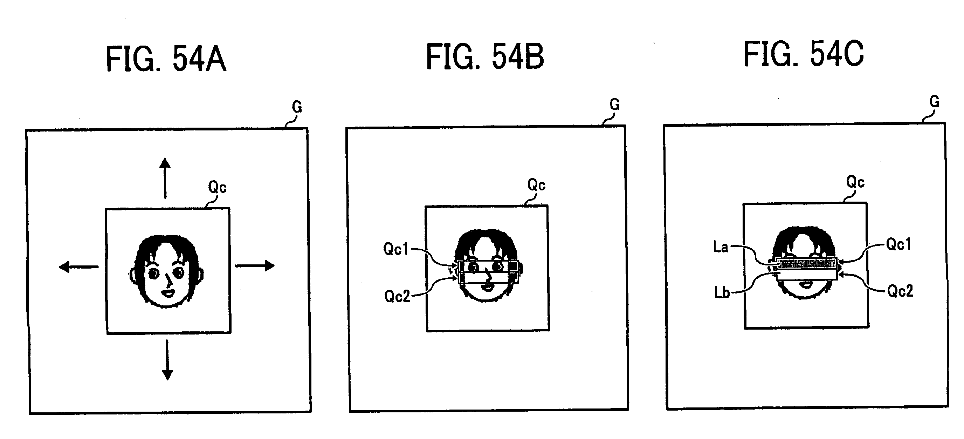

FIG. 54 is a flowchart illustrating operating procedures for obtaining a focusing position of a subject by focusing evaluation values obtained using assumed focused images with different focal depth as illustrated in FIG. 53.

When the first stage of the release switch SW1 is turned on during the implementation of the main processing as illustrated in FIG. 39, the processor 604 implements the AE processing (step 507), and then implements the focal point detection processing (step 508). In the focal point detection processing of the example 2, the processor 604 sets an initial value to N = 2 (step 531). The N hereby refers to an assumed distance number, specifically, N = 2 corresponds to the assumed distance $L_2$. The processor 604, first, generates assumed focused images each corresponding to a state of broad focal depth (assumed focused images corresponding to images obtained when beams actually enter the main lens 510 of a F number 11) (step 532). Next, the processor 604 calculates by computing focusing evaluation values based on the generated assumed focused images (step 533). Then, the processor 604 compares focusing evaluation values obtained at this time with focusing evaluation values obtained at the previous time and determines whether the focusing evaluation values obtained at this time is larger than the focusing evaluation values obtained at the previous time (step 534). In the case where the focusing evaluation values obtained at this time is larger than the focusing evaluation values obtained at the previous time, the processor 604 sets to N = N + 2 (step 535), and then determines whether N is smaller than a predetermined upper limit value Nmax (step 536). In the case where N is smaller the upper limit value Nmax, the processor 604 repeats the processing of steps 532 to 534. At first, because there is no focusing evaluation values obtained at the previous time, in step 534, it is determined that the focusing evaluation values obtained at this time is larger than the focusing evaluation values obtained at the previous time. After transiting to steps 535, 536, the processor 604 performs the processing of steps 532 to 534. In a range not exceeding the upper limit value Nmax, the processor 604 repeats the processing of steps 532 to 536 until the focusing evaluation values obtained at this time become smaller than the focusing evaluation values obtained at the previous time. At the time when the focusing evaluation values obtained at this time become smaller than the focusing evaluation values obtained at the previous time, the processor 604 determines as a decline after a peak of focusing evaluation values (step 534) and generates a plurality of assumed focused images corresponding to a state of narrow focal depth (assumed focused images corresponding to images obtained when beams actually enter the main lens 510 of a F number 2.8) (step 537). Specifically, 4 assumed focused images corresponding to the assumed distances of $L_N$, $L_{N-1}$, $L_{N-2}$ and $L_{N-3}$ are generated hereby (step 537). Because the decline after the peak of focusing evaluation values is determined when N = 8, the processor 604 generates assumed focused images corresponding to the assumed distances $L_8$, $L_7$, $L_6$ and $L_5$ of N = 8, N = 7, N = 6 and N = 5. Next, the processor 604 calculates focusing evaluation values based on these assumed focused images (step 538). Then, the processor 604 calculates a peak of focusing evaluation values based on the focusing evaluation values (step 539). And then, the processor 604 determines a focusing target position fp of the main lens 510 according to this peak position, assuming that the subject exists in a position of the assumed distance corresponding to the focusing evaluation value (step 540). Next, the processor 604 performs a processing of actually driving the main lens 510 toward the focusing target position fp, and then stops the driving of the main lens 510 (step. 541). The upper limit value Nmax has meanings as a maximum value within a controllable area to control focusing and is a value unique to a digital camera. For example, the upper limit value Nmax is "10", when the decline after the peak of focusing evaluation values is not determined even by repeating the processing of step 531 through step 536, it is determined that the photographable subject does not exist in a range from the assumed distance $L_N = L_2$ till $L_N = L_{12}$ so that the processor 604 jumps the processing of steps 537 to 539 and transits to step 540. Then the processor 604 performs a calculation that set the focusing target position fp of the main lens 510 to a fixed focal point position corresponding to 2.5m in front of the main lens 510 (step 542) to determine the focusing target position fp (step 540).

In addition, for generating an assumed focused image in which F number of an exit pupil position is large, pixels that receive incident beams passing through a central part of the main lens 510 are selected. Image data obtained from the pixels is used and image data obtained from pixels that receive incident beams passing through a peripheral part of the main lens 510 is not used so that data amount of the assumed focused image is small. In other words, a makeshift focused image is a dark image. By dividing a data value of the assumed focused image by the number of pixels used for obtaining the assumed focused image and normalizing the data value, data amount of the assumed focused image in the case where a focal depth is broadened can be maintained in the same level as the data amount of the assumed focused image in the case where the focal depth is narrowed.

That is, in the example 2, the focal length detection step implements a step in which assumed focused images for each assumed distance corresponding to a state of broad focal depth obtained based on beams passing through only the central part of the main lens 510 are generated by selecting and extracting pixel data and a focusing evaluation value for each assumed distance is obtained based on the assumed focused image corresponding to the state of the broad focal depth. The focal length detection step implements another step in which based on a maximum value of each focusing evaluation value obtained for each assumed distance, a plurality of assumed distances are finely set in the vicinity of an assumed distance where the maximum value is obtained, and thereby assumed focused images for each assumed distance set corresponding to a state of narrow focal depth obtained based on beams passing through an area including the central part of the main lens 510 and at least broader than the central part are generated by selecting and extracting pixel data to obtains focusing evaluation values based on the assumed focused images corresponding to a state of narrow focal point depth.

(Example 3)

In the example 3, the case where a characteristic part of the subject is extracted using assumed focused images is described. The case in which focusing control of the main lens 510 is performed to the characteristic part extracted is described.

Recently, a digital camera that extracts the characteristic part of the subject, for example, an image of a face from an image of a person as the subject and controls driving of the main lens 510 so that the face is focused, is sold on the market.

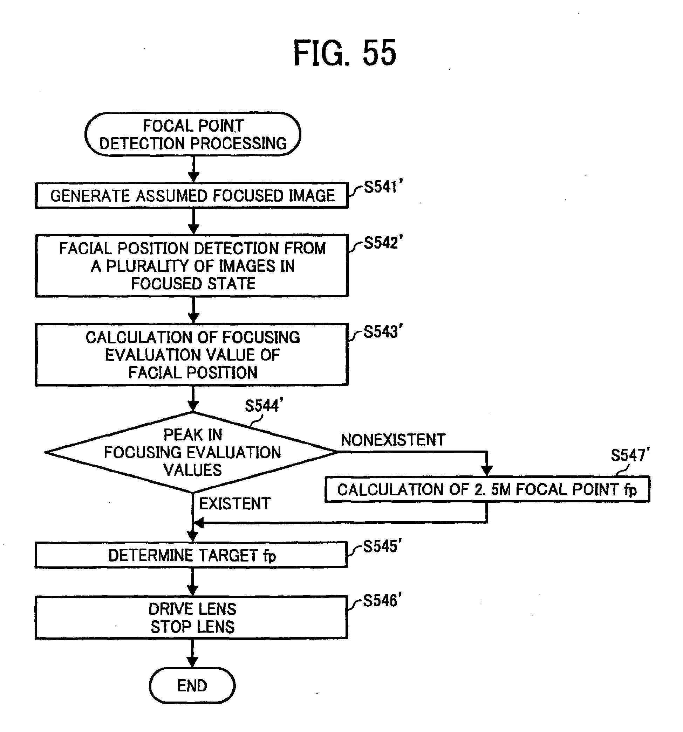

As an extraction device that extracts a facial part of a person, for example, as illustrated in FIG. 55, the device configured such that a rectangle Qc for facial determination is set within a display screen G and the rectangle Qc for facial determination is set so as to be movable within the display screen G, is known. A first characteristic area Qc1 of a rectangular shape and a second characteristic area Qc2 of a rectangular shape are set within the rectangle Qc for facial determination. The first characteristic area Qc1 and the second characteristic area Qc2 are set at predetermined positions of the rectangle Qc for facial determination. In characteristic amount detection of the face, an inside area of the rectangle Qc for facial determination is set as an attention area and each characteristic amount is calculated from the first characteristic area Qc1 and the second characteristic area Qc2.

For example, the first characteristic area Qc1 is set so as to correspond to an eye part of a person. The second characteristic area Qc2 is set so as to correspond to a nose part of a person. Hereby, the characteristic amount, for example, refers to an average value of pixel data obtained by pixels existing within the first characteristic area Qc1 and the second characteristic area Qc2. By moving the rectangle Qc for facial determination within the display screen G, a characteristic amount La of the first characteristic area Qc1 and a characteristic amount Lb of the second characteristic area Qc2 are calculated by movement zones of the rectangle Qc for facial determination and a difference $\Delta c$ therebetween is calculated. It can be determined whether the face exists in the attention area or not according to whether the difference $\Delta c$ is larger than a predetermined threshold value $\alpha$ or not. The threshold value $\alpha$ can be learned using a sample image. In actual, a plurality of rectangles Qc for facial determination with a plurality of size patterns are prepared, and the characteristic areas of the rectangle Qc for facial determination are not limited to the above described first characteristic area Qc1 and the second characteristic area Qc2 but areas in which a positional relationship thereof is appropriately set are used.

In the case where such facial determination processing is performed, when a subject image obtained from the main lens 510 is blurred, even by performing facial detection processing, it is difficult to detect the precise facial position based on an facial image.

However, according to an embodiment of the present invention, it is possible to create beforehand assumed focused images corresponding to each assumed distance. For example, as illustrated in FIG. 51, if a person as a subject exists in assumed distance $L_6$ within the assumed distances $L_1$ to $L_{11}$, in the assumed focused images obtained for each assumed distance, an assumed focused image VP with little blur as shown in FIG. 69A at the assumed distance $L_6$ can be obtained. In addition, focused image VP' obtained at the assumed distance $L_7$ becomes an image with a little bit blur as shown in FIG. 69B. Therefore, the rectangle area Qc for facial determination is set for each assumed focused image and facial determination is implemented so that a facial position can be specified based on the assumed focused image VP at the assumed distance $L_6$.

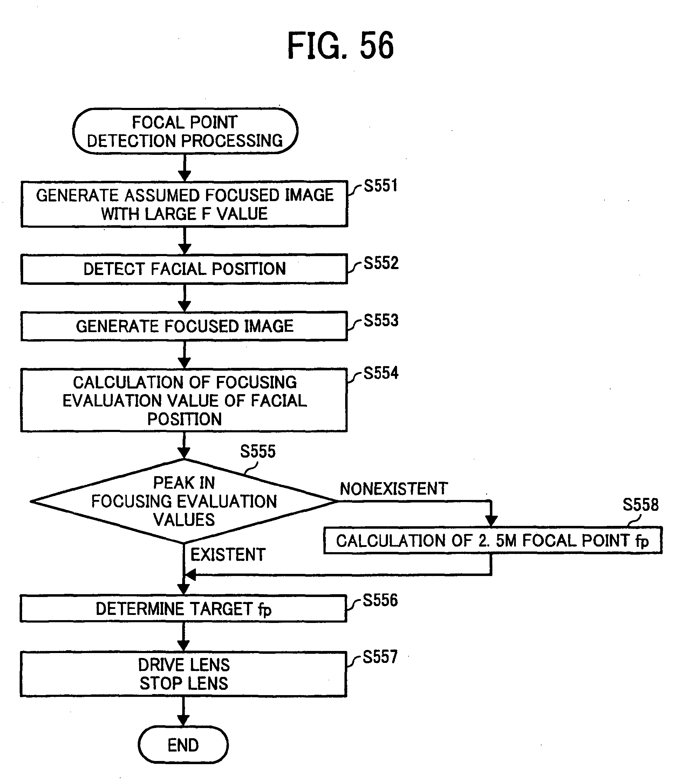

FIG. 56 is a flowchart illustrating an example of the facial position detection processing.

The processor 604, when the first stage of the release switch SW1 is turned on during the implementation of the main processing illustrated in FIG. 39, implements the AE processing (step 507), and then implements the focal point detection processing (step 508). In the focal point detection processing of the example 3, the processor 604, in the focal point detection processing, first, generates a plurality of assumed focused images with different focusing states for each assumed distance (step 541'). Next, the processor 604 implements facial detection processing with respect to a plurality of assumed focused images (step 542'). For example, the processor 604 creates an assumed focused image with respect to an assumed distance $L_1$ and implements the facial detection processing. In this example, because the subject is not at the assumed distance $L_1$, even by performing facial detection processing, the detection of a facial image is difficult. In the same way, facial detection processing is also implemented with respect to each assumed focused image of the assumed distances $L_2$ to $L_{11}$. In this example, it is assumed that the subject is at the assumed distance $L_6$ so that in the vicinity, that is, in backward and forward positions of the assumed distance $L_6$, facial detection becomes possible. Thereby, high-pass digital filter processing of pixel data inside the facial determination rectangle within each assumed focused image obtained by the facial detection processing is performed and focusing evaluation values at each facial position are obtained (step 543'). Each focusing evaluation value respectively is compared obtained from an assumed distance of the nearest side toward an assumed distance of the faraway side and whether there is a peak of the focusing evaluation values is determined (step 544'). In the case where it is determined that there is a peak to the focusing evaluation values, a focusing target position fp of the main lens 510 to the subject is calculated so that the focusing target position fp of the main lens 510 is determined (step 545'). The processor 604 performs a processing of actually driving the main lens 510 to the focusing target position fp, and then stops the driving of the main lens 510 (step 546'). In such a way, the main lens 510 is focused corresponding to the facial position of the subject. In step 544', if focusing evaluation values are all smaller than a predetermined value and when it is determined that there is no peak, a focusing target position is calculated by assuming that a subject is situated 2.5m from the main lens 510 (step 547') and fp is set to this focusing target position (step 545'), and then a processing to start and stop driving of the main lens 510 is performed (step 546').

In this example, focal depth is shallowly set, that is, facial position detection is performed by generating an assumed focused image corresponding to an actual image obtained when the F number of the main lens 510 is small. However, the facial detection processing may be performed by deeply setting the focal depth, that is, the facial position detection may be implemented by generating an assumed focused image corresponding to an actual image obtained when the F number of the main lens 510 is large, and then generating an assumed focused image corresponding to an actual image obtained when the F number of the main lens 510 is small based on facial positions obtained when the F number of the main lens 510 is large. Accordingly, precise facial position detection can be performed, and then focusing evaluation with respect to the facial position can also be performed.

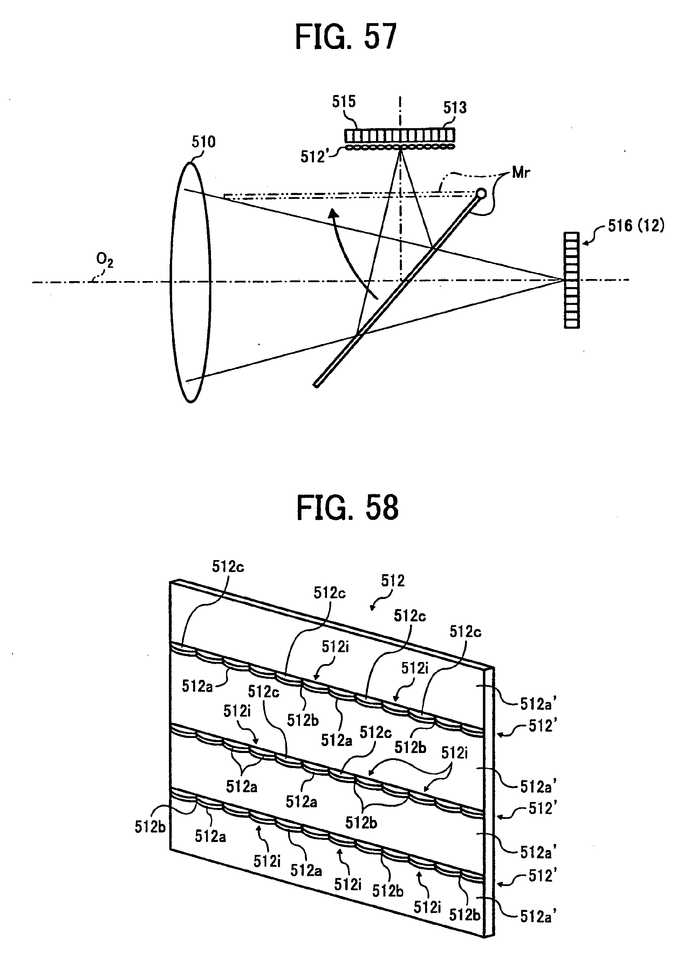

That is, as illustrated in FIG. 57, first, data of pixels corresponding to the exit pupil position F11 is selected and each assumed focused image is generated with focused focal points across a broad area from the nearest side in which focal depth is broad to the faraway side (step 551). The detection of facial position is implemented with respect to each of the assumed focused images (step 552). By the implementation of the facial position detection, an assumed distance where the face of the subject exists can be coarsely detected. Next, assumed focused images are generated with respect to assumed distances in the vicinity, that is, in backward and forward positions of the assumed distance in which the face of the subject exists (step 553). Next, facial position detection is once again implemented and focusing evaluation values are calculated based on pixel data inside the facial determination rectangle Qc obtained by facial position detection (step 554). Each focusing evaluation value obtained respectively by the processing is compared and whether there is a peak to the focusing evaluation values is determined (step 555). The processing of steps 556 to 558 after the step 555 are the same to the processing of steps 544 to step 547 as illustrated in FIG. 55 so that detailed descriptions thereof are omitted. The number of assumed focused images to be generated by this processing can be reduced so that facial detection processing speed can be improved.

That is, in example 3, for the focal length detection step, an extraction step that extracts a characteristic part of the subject based on assumed focused images of each assumed distance with mutually difference focusing states is implemented.

(Example 4)

The examples 1 to 3 described above are constituted by setting the optical elements arraying body 512, for example, a microlens array which is disposed in the foreside of the image pickup device 513 to cover the whole surface of the image pickup device 513. The image pickup device 513 has a plurality of pixels correspond to a single microlens array so that assumed focused images are generated. Actually, a subject image obtained when photographing a subject by driving the main lens 510 such that the main lens 510 is focused to the subject has deteriorations in its resolution. In order to prevent the deteriorations of the resolution, in the examle 4, an imaging optical system is, as illustrated in FIG. 57, constituted from a flip-up mirror Mr set rearward of the main lens 510, an image pickup device 515 for generating assumed focused images and an image pickup device 516 for recording subject images. The image pickup device 515 for generating assumed focused images is constituted from an optical elements arraying body 512 and an image pickup device 513. The image pickup device 516 for recording subject images is constituted from only the image pickup device 513. The image pickup device 515 for generating assumed focused images and the image pickup device 516 for image generation are disposed in mutually conjugate positions with respect to the flip-up mirror Mr.

When the imaging optical system is constituted in such a way, assumed focused images can be generated by using pixel data obtained by each pixel of the image pickup device 515 for generating assumed focused images without driving the main lens 510. Focusing detection is performed using the assumed focused images. A focusing target position fp to the subject on the main lens 510 is obtained. Next, after driving the main lens 510 to the focusing target position, the flip-up mirror Mr is flipped-up and the subject can be photographed using the image pickup device 516 for recording subject images. By such a constitution, the subject can be photographed and recorded without accompanying the deterioration in resolution.

(Example 5)

In the example 4, in order to prevent deteriorations in resolution, the following constitution is adopted, that is, the flip-up mirror Mr is set rearward of the main lens 510 and the image pickup device 515 for generating assumed focused images and the image pickup device 516 for photogenic subject images recording are set to mutually conjugate positions with respect to the flip-up mirror Mr. Thereby the constitution has increased number of parts and becomes more complex.

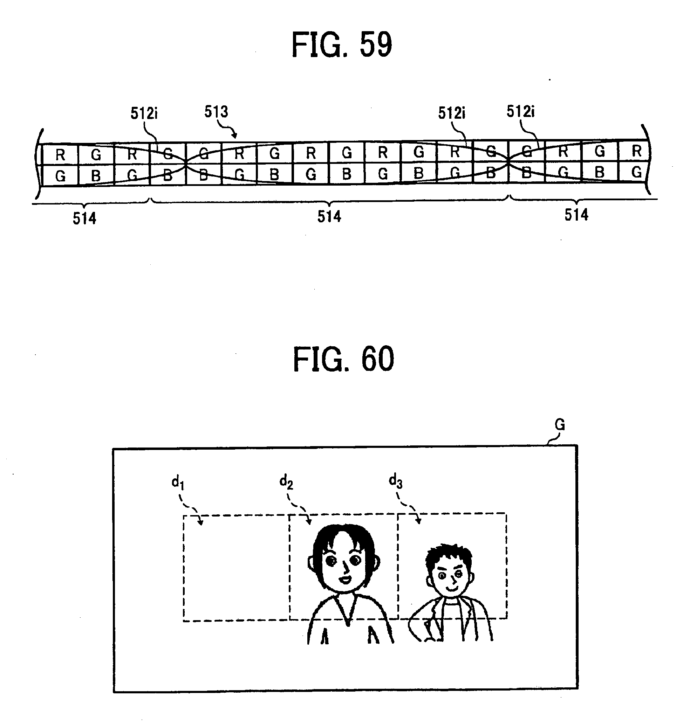

In the example 5, as illustrated in FIG. 58, an optical elements arraying body 512, for example, a microlens array plate is constituted from a transmission plane surface part 512a' through which incident beams directly transmits, a plurality of microlenses 512i arrayed in a horizontal direction forming a line and many lines of microlens arrays 512' disposed with  intervals in a vertical direction. In the example 5, as illustrated in FIG. 60, one microlens 512i is disposed with respect to a pixel area 514 constituted from 9 pixels in the horizontal direction and 2 pixels in the vertical direction. Each of the microlens 512i is of a cylindrical shape. With the exception of an entrance plane 512a, a boundary surface 512b in which each microlens is mutually adjacent and light is shielded at both side surfaces 512c of each microlens 512i. The reason why the light is shielded at the boundary surface 512b is to prevent incident beams entering one microlens 512i from entering pixels of the pixel area 514 directly under another microlens 512i between two mutually adjacent microlenses 512i. In such a way, image deterioration due to the phenomenon of cross talk can be prevented. In addition, the reason why the light is shielded at the both side surfaces 512c is to prevent the deteriorations of pixel data of the pixel area 514 defined by the microlens 512i due to the entrance of beams other than incident beams supposed to enter the microlens 512i. In addition, in order to prevent cross talk, a F number of the microlens 512i can be matched to an open F number of the main lens 510. In addition, there are cases in which only one microlens array 512' is used. By adopting a constitution in which the microlens array plate is disposed in the foreside of the image pickup device 513, assumed focused images can be generated using pixel data of the pixel area 514 directly disposed under the microlens array plate and focusing detection can be performed using the assumed focused images. In addition, a subject can be imaged using pixel data that receive incident beams entering after transmitting through the transmission plane surface part 512a' so that the subject image can be recorded and deteriorations of the subject image are reduced. In the image pickup device 513, color filters comprised of R, G and B are disposed for each pixel as illustrated in FIG. 60, and therefore, in the generation of assumed focused images, when a reconstitution of an image is  performed using pixel data of each pixel, it is not preferable because pixel data of each pixel changes due to color filters. Therefore, it is desirable to adopt a configuration where color filters are not disposed for each pixel inside the pixel area 514 disposed directly under each of the microlens array plate. In addition, as illustrated in FIG. 60, it is also possible to adopt a configuration where one microlens 512i corresponds to two lines of each pixel of the pixel area 514, and assumed focused images are generated using only pixel data having the G filter within each pixel of the pixel area 514. Hereby, the reason why pixels having the G filter are used is because the number of each pixel set with the G filter is large.

By such a configuration, a subject image can be generated by pixel data of each point where the microlens array 512' is not arrayed. With respect to image parts corresponding to the part of each point where the microlens array 512' is arrayed, using data of a pixel area adjacent to the pixel area 514 in which the microlens array 512' is arrayed, the subject image can be obtained by an interpolation processing so that the subject can be imaged and deteriorations of resolution are reduced. In addition, pixel data of pixels covered with the microlens array 512' has deteriorated resolution capability, but since focusing states are calculated using contrast information between makeshift focused images with different focused states, deteriorations in resolution of each assumed focused images with different focused states are not problematic, even in the case the subject image is imaged using pixel data of all pixels for focusing control of the main lens 510, a good focused image with no blur can be obtained. In addition, focal point detection is performed by assumed focused images and the main lens 510 is driven such that the subject is focused, and then, focusing evaluation values are calculated by pixel data, which is obtained by not covered pixels with the microlens 512i. Then focal point detection is performed by the focusing evaluation values and the main lens 510 is driven for compensation so that  the subject is focused and more precise focusing can be performed.


(Example 6)

Conventionally, a so- called focus bracket photographing method to photograph a plurality of subject images by displacing the focusing position of the main lens 510 by a one time release button operation is known.

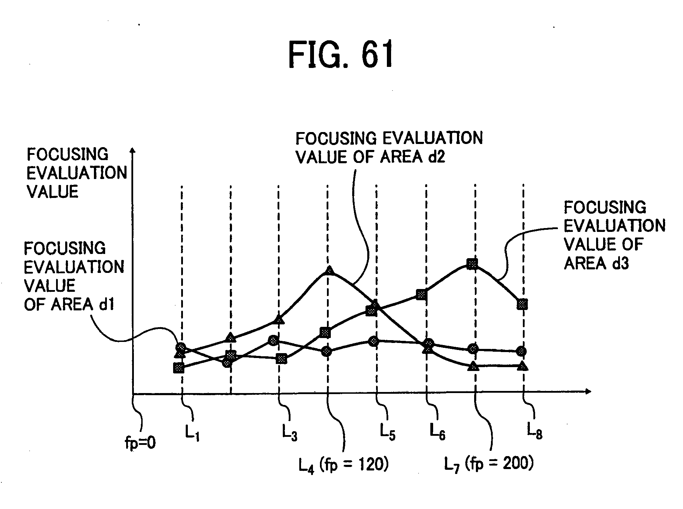

In addition, conventionally, as illustrated in FIG. 60, by dividing a photographing field angle into a plurality of areas $d_1$, $d_2$ and $d_3$, the main lens 510 is actually driven so that focusing evaluation values corresponding to the areas $d_1$, $d_2$ and $d_3$ can be obtained. A focusing evaluation device that obtains focusing evaluation values as illustrated in FIG. 61 is also known.

In FIG. 61, filled circles (signs ●) are focusing evaluation values based on pixel data within the area $d_1$, filled triangles (signs ▲) are focusing evaluation values based on pixel data within the area $d_2$, filled square (signs ■) are focusing evaluation values based on pixel data within the area $d_3$. In addition, the horizontal axis is the assumed distances of the main lens 510 to the subject, in other words, driven amount of the main lens 510 in relation to the standard position (nearest distance position) 0.

Within the area $d_1$, as illustrated in FIG. 60, a subject does not exist, so that focusing evaluation values obtained by assumed focused images thereof are low. Within the area $d_2$, a subject appears largely so that a peak of the focusing evaluation values exists. Because the subject appears largely within the area $d_2$, it has a close distance against the main lens 510. Within the area. $d_3$, a subject appears small so that a peak of focusing evaluation values exists. But because the subject in area $d_3$ is smaller than the subject in area $d_2$, the subject in area $d_3$ is situated farther away than the subject in area $d_2$ has a larger distance to the main lens 510 than the subject in area $d_2$.

Therefore, for example, the peak of focusing evaluation values within the area $d_2$ exists at a point where a focusing target position fp = 120. The peak of focusing evaluation values within the area $d_3$ exists at a point where the focusing target position fp = 200. Conventionally, when performing focusing to such a field, using the focusing target position fp obtained by actually driving the main lens 510, the main lens 510 is driven to these focusing target positions fp so that photographing of a plurality of images with different focusing positions is performed.

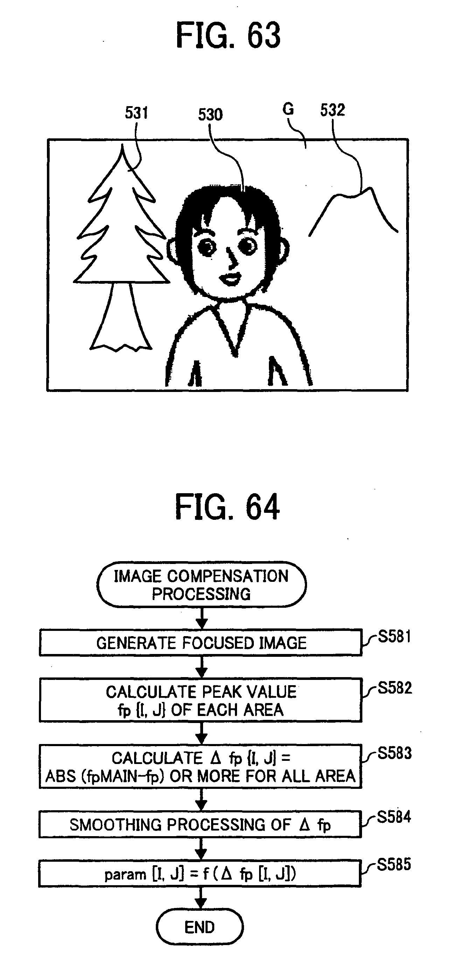

In the example 6, such focusing evaluation values can be obtained without actually driving the main lens 510. The processing procedures are described hereinbelow with reference to FIG. 63.

The processor 604, in the focal point detection processing, generates assumed focused images for each assumed distance (step 561). Hereby, assumed distances are divided into 8 phases and 8 assumed focused images are generated. Next, the areas $d_1$, $d_2$ and $d_3$ are set. Then pixel data used for generation of the area $d_1$ image, the area $d_2$ image and the area $d_3$ image is selected. Focusing evaluation values are calculated using these pixel data (step 562). Next, a plurality of memories fp {0}, fp {1} and fp {2} are set to "0" (step 563). Next, a memory number i is set to i = 0 (step 564). Hereby the reference number i refers to the number of found out subjects from the nearest distance side. Next, focusing evaluation values are calculated using pixel data for constructing image parts within the area $d_1$ of each assumed focused image with respect to each assumed distance $L_1$ to $L_8$ and whether there is a peak or not is determined (step 565). In the case where a peak exists in the area $d_1$, a value of the focusing target position fp corresponding to the peak of the focusing evaluation values is stored in the memory $f_p$ {0} and it is set to i = 1 (step 566). In this example, it is assumed that a subject does not exist in area $d_1$ so that fp {0} = 0. Next, focusing evaluation values are calculated using pixel data for constructing image parts within the area $d_2$ of each assumed focused image with respect to each assumed distance $L_1$ to $L_8$ and whether there is a peak or not is determined (step 567). In the case where a peak exists in the area $d_2$, a value of the focusing target position fp corresponding to the peak of the focusing evaluation values is stored in the memory fp {1} and it is set to i = 2 (step 568). In this example, it is assumed that a subject exists in area $d_2$ at a point in which the focusing target position fp = 120 so that it is set to fp {1} = 120. Next, focusing evaluation values are calculated using pixel data for constructing image parts within the area $d_3$ of each assumed focused image with respect to each assumed distance $L_1$ to $L_8$ and whether there is a peak or not is determined (step 569). In the case a peak of the focusing evaluation values exists in the area $d_3$, a value of the focusing target position fp corresponding to the peak of the focusing evaluation values is stored in the memory fp {2} (step 570), and whether i = 0 or not is determined (step 571). In this example, it is assumed that a subject exists in the area $d_3$ at a point in which the focusing target position fp = 200 so that it is set to fp {2} = 200. In step 571, in the case i = 0, a peak of focusing evaluation values cannot be obtained in any of the areas $d_1$, $d_2$ and $d_3$ so that the focusing target position is set to fp = 0 (step 572). Hereby, the focusing target position fp = 0 corresponds a fixed focal point position of the main lens 510 of 2.5m. Next, focusing target positions stored in memory fp {i} are arranged in a descending order, a processing to store in the order from the largest value of focusing target position to memories with the smallest memory number is performed (step 573). In this example, the focusing target position of the area $d_3$ is set to fp = 200, the focusing target position of the area $d_2$ is set to fp = 120 and the focusing target position of the area $d_1$ is set to fp = 0. Conclusively, it is set to fp {0} = 200, fp {1} = 120 and fp {2} = 0 (step 574). Next, the focusing target position is set to fp {0} = 200, the main lens 510 is driven, and then the driving of the main lens 510 is stopped (step 575). In such a way, the focusing detection processing is terminated. Next, when the second stage of the release button SW1 is turned on, first, still image photographing is implemented at the focusing target position fp = 200, and next, the main lens 510 is driven toward the focusing target position fp {1} = 120 and still image photographing is implemented at the focusing target position fp = 120. In addition, because fp {2} = 0, in this example, still image photographing is not performed at focusing target position fp {2} = 0 and photographing is terminated when still image photographing is performed twice. In such a way, in the example 6, focusing evaluation values of subject images of different areas $d_1$ through $d_3$ can be obtained without driving the main lens 510, by a one time operation of the release switch SW1, and subject images focused to subjects of two sides of different areas can be obtained consecutively.

(Example 7)

An imaging apparatus according to this embodiment of the present invention can be used to perform blur control of photographed images. In the case of a digital camera with a smaller image pickup device than a film camera, because the actual focal length of the main lens 510 is short, focal depth is narrow in comparison to a film camera, so that it is difficult to obtain a beautiful subject image with blurred background. Accordingly, the main subject and the background are separated by image processing and the background is blurred by image processing.

However, when the background is uniformly blurred against the main subject, the subject image becomes unnatural. By obtaining focus misalignment information of the background image against the main subject, it is desirable that, based on the focus misalignment information, the blur amount of the background image against the main subject is determined.

FIGs. 63 to 67 are schematic diagrams illustrating the processing to blur the background image against the main subject using assumed focused images according to this embodiment of the present invention. FIG. 63 illustrates a case in which a person as a main subject 530 exists at the center of a display screen G of a LCD monitor, a tree as a background image 531 exists close by the main subject but is situated a little backward and a mountain as a background image 532 exists at faraway backward. In addition, the FIG. 63 illustrates a state in which subject images obtained using a conventional digital camera are displayed on the display screen G.

In such a case, the degree of blurring of the background image 532 situated faraway backward against the main subject 530 should be desirably processed so that it is more blurred than the background image 531 situated a little backward of the main subject 530.

In the example 7 according to this embodiment of the present invention, a system circuit includes an image compensation processing device that compensates the degree of blurring of the background images. The image compensation processing device is set by operations of an image compensation processing key (not illustrated) of a key switch SW15.

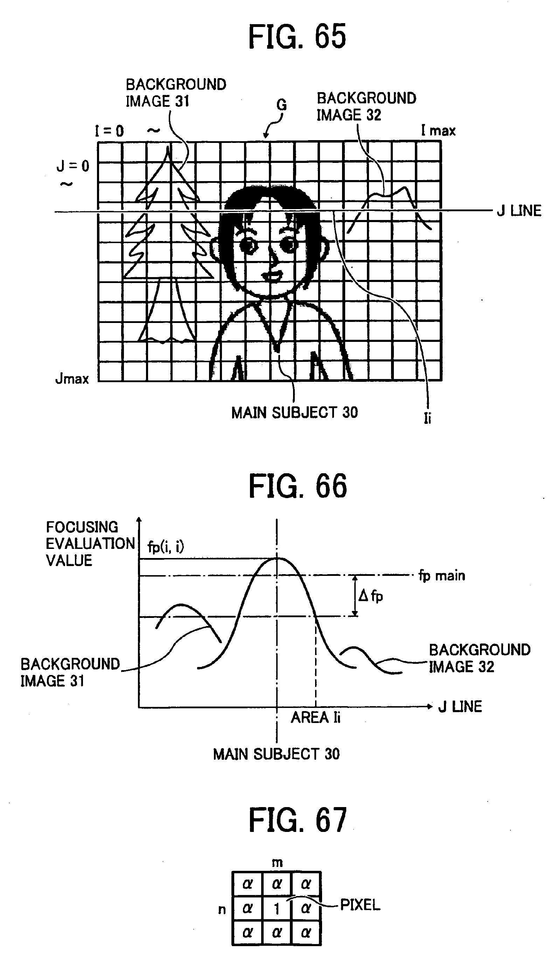

When the image compensation processing key (not illustrated) is operated during the implementation of the.main processing (see FIG. 39) by the processor 604, the first stage switch of the release switch SW1 is turned on, focal point detection processing (see FIGs. 51 and 53) based on assumed focused images is implemented, a focusing target position fp is obtained and, for example, stored in the SDRAM 603 as fpmain. Next, the second stage switch of the release switch SW1 is turned on, the main lens 510 is driven to the focusing target position fp, then driving and actual photographing is stopped. Next, still image compensation processing as illustrated in FIG. 65 is implemented.

In the example 7 of this embodiment of the present invention, as illustrated in FIG. 66, a screen area corresponding to the display screen G is divided horizontally into I = 0 through I = Imax and vertically into J = 0 through J = Jmax for a total division of Imax x Jmax. Based on pixel data of each divisional area, assumed focused images are generated for each assumed distance (step 581), and peak values fp {I, J} of focusing evaluation are calculated for each divisional area (step 582). FIG. 67 illustrates a change curve of peak values fp {I, J} of focusing evaluation with respect to a J line. In the example 7, the main subject 530 exists in the screen center and still image photographing is performed by performing focusing to the main subject 530, so that a peak of a curve of peak value fp {I, J} of this focusing evaluation is the largest. The background image 531 exists in the vicinity of the main subject 530 so that a peak of a curve of peak value fp {I, J} of this focusing evaluation is the second largest. The background image 532 is most distant from the main subject 530 so that a peak of a curve of peak value fp {I, J} of this focusing evaluation is the smallest.

In such a way, an absolute amount of a difference between the focusing target position fpmain and peak values fp {I, J} obtained for each divisional area is set as a defocus amount $\Delta$ fp {I, J}, and the defocus amount $\Delta$ fp {I, J} = ABS (fpmain - fp {I, J}) is calculated for all areas from an area {I = 0, J = 0} to an area {I = Imax, J = Jmax} (step 583). In addition, term ABS is a reference referring to an absolute value of the difference.

Values of the defocus amount $\Delta$ fp {I, J} = ABS (fpmain - fp {I, J}) obtained for each area {I, J} are smoothed using a defocus amount of an area near the area {I, J} (step 584). In addition, for the smoothing, the following processing methods are known, that is, in the processing methods, the defocus amount near the area {I, J} is added and simply arithmetically averaged or in the case where, if the value greatly differs from the defocus amount near the area {I, J}, it is substituted to average values of defocus amount around the periphery.

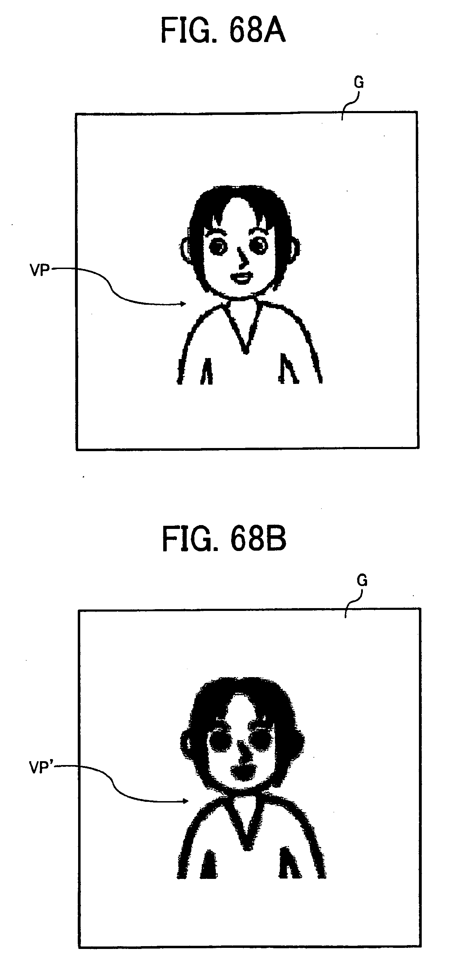

According to the smoothed defocus amount $\Delta$ fp, a parameter param {I, J} related to the image compensation processing of each area is determined by a function f ($\Delta$ fp {I, J}) (step 585). A digital filter illustrated in FIG. 68 is, for example, used for this parameter param {I, J}. In the digital filter, a coefficient of the center is "1", coefficients $\alpha$ in the periphery are variables ranging from 0 to 1. The coefficients $\alpha$ can be appropriately determined depending on, for example, what kind of function is used for function f ($\Delta$ fp {I, J}). For example, the function f ($\Delta$ fp {I, J}) can be a function in which $\alpha$ becomes closer to 1 as a defocus amount $\Delta$ fp between an attention area as a compensation processing target and an area nearby becomes larger.

Image compensation processing of each pixel within the area is performed by, for example, multiplying the coefficient $\alpha$ to a brightness value Ymn within pixel data of compensation processing target pixels (m, n) and to each brightness value of pixels of the 8 pixels (m-1, n-1), (m, n-1), (m+1, n-1), (m-1, n), (m+1, n), (m-1, n+1), (m, n+1), (m+1, n+1) around the periphery. The sum of each obtained value is divided by a total pixel number, of 9, and a value obtained after the division is set as a brightness value Ymn' of the compensation processing target pixels (m, n).

For example, if $\alpha$ = 0, image blurring processing is not performed at all for each pixel within the area, if $\alpha$ = 1, and the same image blurring processing as peripheral areas is performed for each pixel within the area.

In such a way, when defocus amount is calculated using assumed focused images for each area within the screen, an image compensation processing with respect to image blurring can be implemented without actually driving the main lens 510 so that the image compensation processing speed is improved.

Although the present invention has been described in terms of exemplary embodiments, it is not limited thereto. It should be appreciated that variations may be made in the embodiments described by persons skilled in the art without departing from the scope of the present invention as defined by the following claims.

According to an embodiment of the present invention, a simple constitution in which an image pickup device that images a field image is used and is also used for focusing control is adopted, so that an imaging apparatus, a focusing apparatus, an imaging method and a focusing method of the imaging apparatus, each of which can perform automatic focusing control accurately and in high precision corresponding to various imaging conditions are provided. An imaging apparatus according to an embodiment of the present invention includes an image pickup device constituting a light-receiving part having a plurality of pixels that perform photoelectric conversion respectively, an imaging optical system that let a field image formed in the light receiving part of the image pickup device, a micro lens array having a plurality of microlenses arrayed covering only a portion of the pixels in the light-receiving part of the image pickup device and disposed in a subject side of the light-receiving part of the image pickup device. Each microlens of the microlens array respectively covers a plurality of pixels of the light receiving part of the image pickup device. Light is guided to the plurality of pixels corresponding to exit pupil positions of the imaging optical system. The imaging apparatus includes a pixel selection device or a pixel selecting section that selects pixels corresponding to predetermined exit pupil positions within the plurality of pixels for each microlens of the microlens array, a focusing information obtaining devices that obtains focusing information of a subject based on misalignment of subject images with regard to a plurality of different exit pupil positions using pixel data of pixels selected by the pixel selection device, an image generation device that generates a field image using pixel data of pixels not covered by the micro lens of the image pickup device. By focusing the imaging optical system to the subject using the focusing information, a field image can be obtained using the image generation device. Especially, by not disposing a special light-receiving element for distance measuring and focusing, a simple constitution in which a portion of the image pickup device that images a field image for focusing detection is used is adopted, and automatic focus control is performed accurately and in high precision corresponding to various kinds of imaging conditions so that it is possible to image a good field image.

An imaging apparatus according to an embodiment of the present invention includes an image pickup device constituting a light-receiving part having a plurality of pixels that perform photoelectric conversion respectively, an imaging optical system that let a field image formed in the light-receiving part of the image pickup device a plurality of microlenses arrayed one dimensionally on a light-receiving surface of the light-receiving part of the image pickup device wherein each microlens covers the light-receiving part of the image pickup device across a plurality of pixels and a microlens array in which light is guided to the plurality of pixels corresponding to exit pupil positions of the imaging optical system. The imaging apparatus includes a focusing information obtaining device that obtains focusing information of a subject based on the comparison of a plurality of one dimensional images corresponding to the plurality of exit pupil positions by extracting pixel data selected corresponding to each exit pupil position across a plurality of microlenses and reconstituting one dimensional images corresponding to each exit pupil position with regard to a plurality of exit pupil positions of the imaging optical system within a plurality of pixels corresponding to each microlens of the microlens array. The imaging apparatus also includes a focusing control device that focuses the imaging optical system on a subject based on focusing information obtained by the focusing information obtaining device and an image generation device that generates a field image using pixel data of pixels not covered with the microlens of the image pickup device. By focusing the imaging optical system to the subject using the focusing control device and obtaining the field image using the image generation device, without disposing in particular a special light-receiving element for distance measuring and focusing, by adopting a more simple constitution than utilizing a minute portion of the image pickup device that images a field image for focusing detection, automatic focus control is performed accurately and in high precision corresponding to various kinds of imaging condition so that it is possible to image a good field image.

In addition, the image generation device includes a calculation device in which pixel data corresponding to pixels covered with the microlenses within the pixels of the image pickup device is interpolated by pixel data in the periphery not covered with the microlens array.

In particular, a simple constitution of utilizing a minute portion of the image pickup device that images a field image for focusing detection is adopted. Automatic focus control is performed accurately and in high precision corresponding to various kinds of imaging conditions so that it is possible to image a good field image.

The microlens array is disposed integrally with the image pickup device light-receiving part. The image generation device, when imaging, images at least twice at different positions by moving the microlens array and the image pickup device light-receiving part in a direction intersecting the microlens array, includes a device that obtains a field image including pixel data corresponding to pixels covered with the microlens.

In particular, utilizing a portion of the image pickup device that images a field image for focusing detection and a further high definition field image can be obtained. Automatic focus control is performed accurately and in high precision in a simple constitution corresponding to various kinds of imaging condition so that it is possible to image an extra good field image.

The microlens array is disposed separately with the image pickup device light-receiving part. The image generation device, when imaging, images at least twice at different positions by moving the microlens array against the image pickup device light-receiving part in a direction intersecting the microlens array, includes a device that obtains a field image including pixel data corresponding to pixels covered with the microlens.

In particular, utilizing a portion of the image pickup device that images a field image both for focusing detection and for imaging a field image, a further high definition field image can be obtained. Automatic focus control is performed accurately and in high precision in a simple constitution corresponding to various kinds of imaging conditions so that it is possible to image a further better field image.

The focusing information obtaining device obtains contrast information of image data obtained by the image generation device, further includes a device that obtains focusing information of a subject based on the contrast information.

In particular, automatic focus control is performed further accurately and in further high precision in a simple constitution against further various kinds of imaging conditions so that it is possible to image a good field image.

A focusing apparatus according to an embodiment of the present invention includes an image pickup device constituting a light-receiving part having a plurality of pixels that perform photoelectric conversion respectively, an imaging optical system that let a field image formed in the light-receiving part of the image pickup device, a microlens array having a plurality of microlenses arrayed covering only a portion of the pixels in the light-receiving part of the image pickup device and disposed in a subject side of the light-receiving part of the image pickup device, an image generation device that generates a field image using pixel data of pixels not covered with the microlens of the image pickup device. In the focusing apparatus, each microlens of the microlens array respectively covers a plurality of pixels of the light-receiving part of the image pickup device. Light is guided to the plurality of pixels corresponding to exit pupil positions of the imaging optical system. The focusing apparatus includes a pixel selection device that selects pixels corresponding to predetermined exit pupil positions within the plurality of pixels for each microlens of the microlens array, a focusing information obtaining device that obtains focusing information of a subject based on misalignment of subject images with regard to a plurality of different exit pupil positions using pixel data of pixels selected by the pixel selection device. By focusing the imaging optical system to the subject using the focusing information, in particular, by not disposing a special light-receiving element for distance measuring and focusing, a simple constitution of utilizing a portion of the image pickup device that images a field image for focusing detection is adopted, automatic focus control is performed accurately and in high precision corresponding to various kinds of imaging condition so that it is possible to image a good field image.

A focusing apparatus according to an embodiment of the present invention includes an image pickup device constituting a light-receiving part having a plurality of pixels that perform photoelectric conversion respectively, an imaging optical system that let a field image formed in the light-receiving part of the image pickup device, a plurality of microlenses arrayed one dimensionally on a light-receiving surface of the light-receiving part of the image pickup device wherein each microlens covers the light-receiving part of the image pickup device across a plurality of pixels and a microlens array in which light is guided to the plurality of pixels corresponding to exit pupil positions of the imaging optical system. The imaging apparatus includes an image generation device that generates a field image using pixel data of pixels not covered with the microlens of the image pickup device, a focusing information obtaining device that obtains focusing information of a subject based on the comparison of a plurality of one dimensional images corresponding to the plurality of exit pupil positions by extracting pixel data selected corresponding to each exit pupil position across a plurality of microlenses and reconstituting one dimensional images corresponding to each exit pupil position with regard to a plurality of exit pupil positions of the imaging optical system within a plurality of pixels corresponding to each microlens of the microlens array. The imaging apparatus also includes a focusing control device that focuses the imaging optical system to a subject based on the focusing information. By focusing the imaging optical system to the subject using the focusing control device, without disposing in particular a special light-receiving clement for distance measuring and focusing, by adopting a more simple constitution than utilizing a minute portion of the image pickup device that images a field image for focusing detection, automatic focus control is performed accurately and in high precision corresponding to various kinds of imaging condition so that it is possible to image a good field image.

In addition, in the focusing apparatus, the image generation device includes a calculation device in which pixel data corresponding to pixels covered with the microlenses within the pixels of the image pickup device is interpolated by pixel data in the periphery not covered with the microlens array.

In particular, a simple constitution of utilizing a minute portion of the image pickup device that images a field image for focusing detection is adopted. Automatic focus control is performed accurately and in high precision corresponding to various kinds of imaging conditions so that it is possible to image a good field image.

In the focusing apparatus, the microlens array is disposed integrally with the image pickup device light-receiving part. The image generation device, when imaging, images at least twice at different positions by moving the microlens array and the image pickup device light-receiving part in a direction intersecting the microlens array, includes a device that obtains a field image including pixel data corresponding to pixels covered with the microlens.

In particular, utilizing a portion of the image pickup device that images a field image for focusing detection and a further high definition field image can be obtained. Automatic focus control is performed accurately and in high precision in a simple constitution corresponding to various kinds of imaging condition so that it is possible to image an extra good field image.

In the focusing apparatus, the microlens array is disposed separately with the image pickup device light-receiving part. The image generation device, when imaging, images at least twice at different positions by moving the microlens array against the image pickup device light-receiving part in a direction intersecting the microlens array, includes a device that obtains a field image including pixel data corresponding to pixels covered with the microlens.

In particular, utilizing a portion of the image pickup device that images a field image both for focusing detection and for imaging a field image, a further high definition field image can be obtained. Automatic focus control is performed accurately and in high precision in a simple constitution corresponding to various kinds of imaging condition so that it is possible to image a further better field image.

In the focusing apparatus, the focusing information obtaining device obtains contrast information of image data obtained by the image generation device, further includes a device that obtains focusing information of a subject based on the contrast information.

In particular, automatic focus control is performed further accurately and in further high precision in a simple constitution against further various kinds of imaging condition so that it is possible to image a good field image.

Furthermore, an imaging method of the imaging apparatus according to an embodiment of the present invention includes an image pickup device constituting a light-receiving part having a plurality of pixels that perform photoelectric conversion respectively, an imaging optical system that let a field image formed in the light-receiving part of the image pickup device, an image generation device that generates a field image using pixel data obtained from pixels of the image pickup device. The imaging apparatus has a plurality of microlenses arrayed covering only a portion of the pixels in the light-receiving part of the image pickup device and disposed in a subject side of the light-receiving part of the image pickup device. Each microlens respectively covers a plurality of pixels of the light-receiving part of the image pickup device. The imaging method includes a microlens array that guides light to the plurality of pixels corresponding to exit pupil positions of the imaging optical system. The imaging method also includes an extraction step that extracts selectively across a plurality of microlenses pixels within the plurality of pixels corresponding to each exit pupil position with regard to a plurality of predetermined exit pupil positions of the imaging optical system for each microlens of the microlens array. The imaging method also includes a reconstitution step that reconstitutes a plurality of field images corresponding to a plurality of different exit pupil positions using pixel data of pixels extracted selectively in the extraction step. The imaging method also includes a focusing information obtaining step that obtains focusing information of a subject based on misalignments of field images with regard to a plurality of different exit pupil positions by comparing a plurality of field images obtained in the reconstitution step. The imaging method also includes an image generation step in which the image generation device generates field images using pixel data of pixels not covered with the microlens of the image pickup device. By focusing the imaging optical system to a subject using the focusing information and obtaining a field image using pixel data of pixels not covered with the microlens of the image pickup device, especially, by not disposing a special light-receiving element for distance measuring and focusing, utilizing a portion of the image pickup device that images a field image for focusing detection, automatic focus control is simply performed accurately and in high precision corresponding to various kinds of imaging condition so that it is possible to image.a good field image.

An imaging method of the imaging apparatus according to an embodiment of the present invention includes an image pickup device constituting a light-receiving part having a plurality of pixels that perform photoelectric conversion respectively, an imaging optical system that let a field image formed in the light-receiving part of the image pickup device, an image generation device that generates a field image using pixel data obtained from pixels of the image pickup device. The imaging apparatus has a plurality of microlenses arrayed one dimensionally on a light-receiving surface of the light-receiving part of the image pickup device. Each microlens respectively covers a plurality of pixels of the light-receiving part of the image pickup device. The imaging method includes a microlens array that guides light to the plurality of pixels corresponding to exit pupil positions of the imaging optical system. The imaging method also includes an extraction step that extracts selectively across a plurality of microlenses pixels within the plurality of pixels corresponding to each exit pupil position with regard to a plurality of predetermined exit pupil positions of the imaging optical system for each microlens of the microlens array. The imaging method also includes a reconstitution step that reconstitutes a plurality of one dimensional field images corresponding to a plurality of different exit pupil positions using pixel data of pixels extracted selectively in the extraction step. The imaging method also includes a focusing information obtaining step that obtains focusing information of a subject based on misalignments of one dimensional field images with regard to a plurality of different exit pupil positions by comparing a plurality of one dimensional field images obtained in the reconstitution step. The imaging method also includes a focusing control step that focuses the imaging optical system to a subject based on the focusing information obtained by the focusing information obtaining step. The imaging method also includes an image generation step in which the image generation device generates field images using pixel data of pixels not covered with the microlens of the image pickup device. By focusing the imaging optical system to a subject using the focusing information and obtaining a field image using pixel data of pixels not covered with the microlens of the image pickup device, especially, by not disposing a special light-receiving element for distance measuring and focusing, utilizing a minute portion of the image pickup device that images a field image for focusing detection, automatic focus control is more simply performed accurately and in high precision corresponding to various kinds of imaging conditions so that it is possible to image a good field image.

In addition, the image generation step includes a calculation step in which pixel data corresponding to pixels covered with the microlenses within the pixels of the image pickup device is interpolated by pixel data in the periphery not covered with the microlens array.

In particular, utilizing a minute portion of the image pickup device that images a field image for focusing detection, automatic focus control is more simply performed accurately and in high precision corresponding to various kinds of imaging conditions so that it is possible to image a good field image.

The image generation step includes a step that obtains a field image including pixel data corresponding to pixels covered with the microlens, when imaging, images at least twice at different positions by moving integrally the microlens array and the image pickup device light-receiving part in a direction intersecting the microlens array.

In particular, utilizing a portion of the image pickup device that images a field image for focusing detection, automatic focus control is more simply performed accurately and in high precision corresponding to various kinds of imaging conditions so that it is possible to image an extra good high definition field image.

The image generation step, when imaging, images at least twice at different positions by moving the microlens array against the image pickup device light-receiving part in a direction intersecting the microlens array, includes a step that obtains a field image including pixel data corresponding to pixels covered with the microlens.

In particular, utilizing a portion of the image pickup device that images a field image both for focusing detection and for imaging a field image, a further high definition field image can be obtained. Automatic focus control is simply performed accurately and in high precision corresponding to various kinds of imaging conditions so that it is possible to image a further better field image.

The focusing information obtaining step obtains contrast information of image data obtained by the image generation step, further includes a step that obtains focusing information of a subject based on the contrast information.

In particular, automatic focus control is performed further accurately and in further high precision in a simple constitution against further various kinds of imaging condition so that it is possible to image a good field image.

A focusing method of an imaging apparatus according to an embodiment of the present invention includes an image pickup device constituting a light-receiving part having a plurality of pixels that perform photoelectric conversion respectively, an imaging optical system that let a field image formed in the light-receiving part of the image pickup device, an image generation device that generates a field image using pixel data obtained from pixels of the image pickup device. The imaging apparatus has a plurality of microlenses arrayed covering only a portion of the pixels in the light-receiving part of the image pickup device and disposed in a subject side of the light-receiving part of the image pickup device. Each microlens respectively covers a plurality of pixels of the light-receiving part of the image pickup device. The focusing method includes a microlens array that guides light to the plurality of pixels corresponding to exit pupil positions of the imaging optical system. The focusing method also includes an extraction step that extracts selectively across a plurality of microlenses pixels within the plurality of pixels corresponding to each exit pupil position with regard to a plurality of predetermined exit pupil positions of the imaging optical system for each microlens of the microlens array. The focusing method also includes a reconstitution step that reconstitutes a plurality of field images corresponding to a plurality of different exit pupil positions using pixel data of pixels extracted selectively in the extraction step. The focusing method also includes a focusing information obtaining step that obtains focusing information of a subject based on misalignments of field images with regard to a plurality of different exit pupil positions by comparing a plurality of field images obtained in the reconstitution step. The focusing method also includes an image generation step in which the image generation device generates field images using pixel data of pixels not covered with the microlens of the image pickup device. By focusing the imaging optical system to a subject using the focusing information, especially, by not disposing a special light-receiving element for distance measuring and focusing, utilizing a portion of the image pickup device that images a field image for focusing detection, automatic focus control is simply performed accurately and in high precision corresponding to various kinds of imaging conditions so that it is possible to image a good field image.

A focusing method of an imaging apparatus according to an embodiment of the present invention includes an image pickup device constituting a light-receiving part having a plurality of pixels that perform photoelectric conversion respectively, an imaging optical system that let a field image formed in the light-receiving part of the image pickup device, an image generation device that generates a field image using pixel data obtained from pixels of the image pickup device. The imaging apparatus has a plurality of microlenses arrayed one dimensionally on a light-receiving surface of the light-receiving part of the image pickup device. Each microlens respectively covers a plurality of pixels of the light-receiving part of the image pickup device. The focusing method includes a microlens array that guides light to the plurality of pixels corresponding to exit pupil positions of the imaging optical system. The focusing method also includes an extraction step that extracts selectively across a plurality of microlenses pixels within the plurality of pixels corresponding to each exit pupil position with regard to a plurality of predetermined exit pupil positions of the imaging optical system for each microlens of the microlens array. The focusing method also includes a reconstitution step that reconstitutes a plurality of one dimensional field images corresponding to a plurality of different exit pupil positions using pixel data of pixels extracted selectively in the extraction step. The focusing method alto includes a focusing information obtaining step that obtains focusing information of a subject based on misalignments of one dimensional field images with regard to a plurality of different exit pupil positions by comparing a plurality of one dimensional field images obtained in the reconstitution step. The focusing method also includes a focusing control step that focuses the imaging optical system to a subject based on the focusing information obtained by the focusing information obtaining step. The focusing method also includes an image generation step in which the image generation device generates field images using pixel data of pixels not covered with the microlens of the image pickup device. By focusing the imaging optical system to a subject using the focusing information, especially, by not disposing a special light-receiving element for distance measuring and focusing, utilizing a minute portion of the image pickup device that images a field image for focusing detection, automatic focus control is more simply performed accurately and in high precision corresponding to various kinds of imaging conditions so that it is possible to image a good field image.

In addition, the image generation step includes a calculation step in which pixel data corresponding to pixels covered with the microlenses within the pixels of the image pickup device is interpolate by pixel data in the periphery not covered with the microlens array.

In particular, utilizing a minute portion of the image pickup device that images a field image for focusing detection, automatic focus control is more simply performed accurately and in high precision corresponding to various kinds of imaging condition so that it is possible to image a good field image.

The image generation step includes a step that obtains a field image including pixel data corresponding to pixels covered with the microlens, when imaging, images at least twice at different positions by moving integrally the microlens array and the image pickup device light-receiving part in a direction intersecting the microlens array.

In particular, utilizing a portion of the image pickup device that images a field image for focusing detection, automatic focus control is more simply performed accurately and in high precision corresponding to various kinds of imaging condition so that it is possible to image an extra good high definition field image.

The image generation step, when imaging, images at least twice at different positions by moving the microlens array against the image pickup device light-receiving part in a direction intersecting the microlens array, includes a step that obtains a field image including pixel data corresponding to pixels covered with the microlens.

In particular, utilizing a portion of the image pickup device that images a field image both for focusing detection and for imaging a field image, a further high definition field image can be obtained. Automatic focus control is simply performed accurately and in high precision corresponding to various kinds of imaging conditions so that it is possible to image a further better field image.

The focusing information obtaining step obtains contrast information of image data obtained by the image generation step, further includes a step that obtains focusing information of a subject based on the contrast information.

In particular, automatic focus control is performed further accurately and in further high precision in a simple constitution against further various kinds of imaging conditions so that it is possible to image a good field image.

According to an embodiment of the present invention, against changes in positions of the imaging optical system due to zoom operation and focus operation and also in the case the positions of the imaging optical system have individual variations between each apparatus, the positions are automatically corrected. Outputs of pixels corresponding to desired pupil positions are effectively and optimally separate and obtained to be reconstituted as a field image, and thereby an imaging apparatus, a focusing information obtaining device, an imaging method and a focusing information obtaining method that can perform focusing detection simply and precisely can be provided.

An imaging apparatus according to an embodiment of the present invention includes an image pickup device constituting a light-receiving part having a plurality of pixels that perform photoelectric conversion respectively, an imaging optical system that let a field image formed in the light-receiving part of the image pickup device, a microlens array having a plurality of microlenses arrayed covering only a portion of an area of the light-receiving part of the image pickup device, disposed in a subject side of the light-receiving part of the image pickup device. In the imaging apparatus, each microlens of the microlens array respectively covers a plurality of pixels within the portion of the area. Light is guided to the plurality of pixels corresponding to exit pupil positions of the imaging optical system. The imaging apparatus includes a light-receiving state determination device that determines whether pixels covered with each microlens respectively receive light from the imaging optical system, a pixel selection device that selects by each microlens pixel corresponding to predetermined exit pupil positions within pixels determined by the light-receiving state determination device as receiving light from the imaging optical system, a focusing information obtaining device that obtains focusing information of the field image using outputs of pixels selected by the pixel selection device and an image generation device that generates a field image using outputs of pixels of the image pickup device not covered with the plurality of microlenses. By focusing the imaging optical system to a subject using the focusing information and obtaining a field image using the image generation device, in particular, outputs of pixels corresponding to desired pupil positions of the imaging optical system are separated and reconstituted effectively and optimally so that focusing detection can be performed simply and precisely.

The pixel selection device is a device that selects by each microlens of the microlens array pixels corresponding to a plurality of different exit pupil positions and the focusing information obtaining device is a device that obtains focusing information of the field image based on comparison of an output of pixels corresponding to the first exit pupil position and an output of pixels corresponding to the second exit pupil position within outputs of pixels selected by the pixel selection device. In particular, outputs of pixels corresponding to desired pupil positions of the imaging optical system are separated and reconstituted effectively and optimally so that focusing detection can be performed further simply and precisely.

In addition, the imaging apparatus according to an embodiment of the present invention includes an aperture device that controls the passage light amount by limiting the opening diameter of the imaging optical system and each microlens of the microlens array guides light from the imaging optical system to only a portion of the pixels corresponding to the opening diameter formed by the aperture device and the imaging optical system.

In particular, outputs of pixels corresponding to desired pupil positions of the imaging optical system are separated and reconstituted further effectively and optimally so that focusing detection can be performed further simply and precisely.

The imaging apparatus includes an aperture control device that narrows down the aperture to a predetermined opening diameter and the light-receiving state determination device is a device that determines the light-receiving state wherein the aperture is in a state narrowed down to the predetermined opening diameter by the aperture control device. In particular, regardless of the opening diameter or positions of the imaging optical system, outputs of pixels corresponding to desired pupil positions of the imaging optical system are separated and reconstituted further effectively and optimally so that focusing detection can be performed further extra simply and precisely.

The plurality of microlenses are arrayed one dimensionally on a light-receiving surface of the light-receiving part of the image pickup device and each microlens covers exclusively the plurality of consecutive pixels.

In particular, outputs of pixels corresponding to the desired pupil positions of the imaging optical system are separated and reconstituted further effectively and optimally so that focusing detection can be performed further extra simply and precisely.

An imaging apparatus according to an embodiment of the present invention includes an image pickup device constituting a light-receiving part having a plurality of pixels that performs photoelectric conversion respectively, an imaging optical system that let a field image formed in the light-receiving part of the image pickup device, a microlens array having a plurality of microlenses arrayed covering only a portion of an area of the light-receiving part of the image pickup device, disposed in a subject side of the light-receiving part of the image pickup device. In the imaging apparatus, each microlens of the microlens array respectively covers a plurality of pixels within the portion of the area. Light is guided to the plurality of pixels corresponding to exit pupil positions of the imaging optical system. In the imaging apparatus, the microlens array includes a first microlens group and a second microlens group wherein only a portion of the pixels within the plurality of pixels covered respectively by each microlens of the first microlens group are constituted by the first microlens corresponding to light from the imaging optical system. Each microlens of the second microlens group differs from the first microlens in that comparatively little pixels than pixels covered with the first microlens are covered respectively and constituted by the second microlens that guides light from the imaging optical system to predetermined pixels. The imaging apparatus also includes a light-receiving state determination device that determines whether pixels covered with each microlens of the first microlens respectively receive light from the imaging optical system, a pixel selection device that selects by each microlens of the second microlens group pixel corresponding to predetermined exit pupil positions within pixels covered with each microlens of the second microlens group based on the determination results of the light-receiving state determination device, a focusing information obtaining device that obtains focusing information of the field image using outputs of pixels selected by the pixel selection device and an image generation device that generates a field image using outputs of pixels of the image pickup device not covered with the plurality of microlenses. By focusing the imaging optical system to a subject using the focusing information and obtaining a field image using the image generation device, in particular, outputs of pixels corresponding to the desired pupil positions of the imaging optical system are separated and reconstituted further effectively and optimally so that focusing detection can be performed further simply and precisely.

The pixel selection device is a device that selects pixels corresponding to a plurality of different exit pupil positions by each microlens of the second microlens group pixels and the focusing information obtaining device is a device that obtains focusing information of the field image based on comparison of the outputs of pixels corresponding to the first exit pupil position and the outputs of pixels corresponding to the second exit pupil position within the outputs of pixels selected by the pixel selection device.

In particular, outputs of pixels corresponding to the desired pupil positions of the imaging optical system are separated and reconstituted further effectively and optimally so that focusing detection can be performed further simply and precisely.

The imaging apparatus according to an embodiment of the present invention includes an aperture device that controls the passage light amount by limiting the opening diameter of the imaging optical system and each microlens of the first microlens group guides light from the imaging optical system to only a portion of the pixels corresponding to the opening diameter formed by the aperture device and the imaging optical system.

In particular, outputs of pixels corresponding to the desired pupil positions of the imaging optical system are separated and reconstituted further effectively and optimally so that focusing detection can be performed further simply and precisely.

The imaging apparatus includes an aperture control device that narrows down the aperture to a predetermined opening diameter and the light-receiving state determination device is a device that determines the light-receiving state wherein the aperture is in a state narrowed down to the predetermined opening diameter by the aperture control device. In particular, regardless of the opening diameter or positions of the imaging optical system, outputs of pixels corresponding to desired pupil positions of the imaging optical system are separated and reconstituted further effectively and optimally so that focusing detection can be performed further extra simply and precisely.

In the imaging apparatus according to an embodiment of the present invention, the plurality of microlenses of the first microlens group are arrayed one dimensionally on a light-receiving surface of the light-receiving part of the image pickup device and each microlens arrayed one dimensionally as such covers exclusively a plurality of consecutive pixels. The plurality of microlenses of the second microlens group are arrayed one dimensionally on a light-receiving surface of the light-receiving part of the image pickup device and each microlens arrayed one dimensionally as such covers exclusively a plurality of consecutive pixels.

In particular, outputs of pixels corresponding to the desired pupil positions of the imaging optical system are separated and reconstituted further effectively and optimally so that focusing detection can be performed further extra simply and precisely.

A focusing information obtaining device of an imaging apparatus according to an embodiment of the present invention includes an image pickup device constituting a light-receiving part having a plurality of pixels that perform photoelectric conversion respectively, an imaging optical system that let a field image form an image in the light-receiving part of the image pickup device, a microlens array having a plurality of microlenses arrayed covering only a portion of an area of the light-receiving part of the image pickup device, disposed in a subject side of the light-receiving part of the image pickup device. In the imaging apparatus, each microlens of the microlens array respectively covers a plurality of pixels within the portion of the area. Light is guided to the plurality of pixels corresponding to exit pupil positions of the imaging optical system. The imaging apparatus includes a light-receiving state determination device that determines whether pixels covered with each microlens respectively receive light from the imaging optical system, a pixel selection device that selects by each microlens pixel corresponding to predetermined exit pupil positions within pixels determined by the light-receiving state determination device as receiving light from the imaging optical system and a focusing information obtaining device that obtains focusing information of the field image using outputs of pixels selected by the pixel selection device. In particular, outputs of pixels corresponding to desired pupil positions of the imaging optical system are separated and reconstituted effectively and optimally so that focusing detection can be performed simply and precisely.

The pixel selection device is a device that selects by each microlens of the microlens array pixels corresponding to a plurality of different exit pupil positions and the focusing information obtaining device is a device that obtains focusing information of the field image based on comparison of an output of pixels corresponding to the first exit pupil position and an output of pixels corresponding to the second exit pupil position within outputs of pixels selected by the pixel selection device. In particular, outputs of pixels corresponding to desired pupil positions of the imaging optical system are separated and reconstituted effectively and optimally so that focusing detection can be performed further simply and precisely.

In addition, the focusing information obtaining device according to an embodiment of the present invention includes an aperture device that controls the passage light amount by limiting the opening diameter of the imaging optical system and each microlens of the microlens array guides light from the imaging optical system to only a portion of the pixels corresponding to the opening diameter formed by the aperture device and the imaging optical system.

In particular, outputs of pixels corresponding to desired pupil positions of the imaging optical system arc separated and reconstituted further effectively and optimally so that focusing detection can be performed further simply and precisely.

The focusing information includes an aperture control device that narrows down the aperture to a predetermined opening diameter and the light-receiving state determination device is a device that determines the light-receiving state wherein the aperture is in a state narrowed down to the predetermined opening diameter by the aperture control device. In particular, regardless of the opening diameter or positions of the imaging optical system, outputs of pixels corresponding to desired pupil positions of the imaging optical system are separated and reconstituted further effectively and optimally so that focusing detection can be performed further extra simply and precisely.

The plurality of microlenses are arrayed one dimensionally on a light-receiving surface of the light-receiving part of the image pickup device and each microlens covers exclusively the plurality of consecutive pixels.

In particular, outputs of pixels corresponding to the desired pupil positions of the imaging optical system are separated and reconstituted further effectively and optimally so that focusing detection can be performed further extra simply and precisely.

A focusing information obtaining device of an imaging apparatus according to an embodiment of the present invention includes an image pickup device constituting a light-receiving part having a plurality of pixels that perform photoelectric conversion respectively, an imaging optical system that let a field image formed in the light-receiving part of the image pickup device, a microlens array having a plurality of microlenses arrayed covering only a portion of an area of the light-receiving part of the image pickup device, disposed in a subject side of the light-receiving part of the image pickup device. In the imaging apparatus, each microlens of the microlens array respectively covers a plurality of pixels within the portion of the area. Light is guided to the plurality of pixels corresponding to exit pupil positions of the imaging optical system. In the imaging apparatus, the microlens array includes a first microlens group and a second microlens group wherein only a portion of the pixels within the plurality of pixels covered respectively by each microlens of the first microlens group are constituted by the first microlens corresponding to light from the imaging optical system. Each microlens of the second microlens group differs from the first microlens in that comparatively little pixels than pixels covered with the first microlens are covered respectively and constituted by the second microlens that guides light from the imaging optical system to predetermined pixels. The imaging apparatus also includes a light-receiving state determination device that determines whether pixels covered with each microlens of the first microlens respectively receive light from the imaging optical system, a pixel selection device that selects by each microlens of the second microlens group pixels corresponding to predetermined exit pupil positions within pixels covered with each microlens of the second microlens group based on the determination results of the light-receiving state determination device and a focusing information obtaining device that obtains focusing information of the field image using outputs of pixels selected by the pixel selection device. In particular, outputs of pixels corresponding to the desired pupil positions of the imaging optical system are separated and reconstituted further effectively and optimally so that focusing detection can be performed further simply and precisely.

The pixel selection device is a device that selects pixels corresponding to a plurality of different exit pupil positions by each microlens of the second microlens group pixels and the focusing information obtaining device is a device that obtains focusing information of the field image based on comparison of the outputs of pixels corresponding to the first exit pupil position and the outputs of pixels corresponding to the second exit pupil position within the outputs of pixels selected by the pixel selection device.

In particular, outputs of pixels corresponding to the desired pupil positions of the imaging optical system are separated and reconstituted further effectively and optimally so that focusing detection can be performed further simply and precisely. The imaging apparatus includes an aperture device that controls the passage light amount by limiting the opening diameter of the imaging optical system and each microlens of the first microlens group guides light from the imaging optical system to only a portion of the pixels corresponding to the opening diameter formed by the aperture device and the imaging optical system.

In particular, outputs of pixels corresponding to the desired pupil positions of the imaging optical system arc separated and reconstituted further effectively and optimally so that focusing detection can be performed further simply and precisely.

The focusing information obtaining device includes an aperture control device that narrows down the aperture to a predetermined opening diameter and the light-receiving state determination device is a device that determines the light-receiving state wherein the aperture is in a state narrowed down to the predetermined opening diameter by the aperture control device.

In particular, regardless of the opening diameter or positions of the imaging optical system, outputs of pixels corresponding to desired pupil positions of the imaging optical system are separated and reconstituted further effectively and optimally so that focusing detection can be performed further extra simply and precisely.

The plurality of microlenses of the first microlens group are arrayed one dimensionally on a light-receiving surface of the light-receiving part of the image pickup device and each microlens arrayed one dimensionally as such covers exclusively a plurality of consecutive pixels. The plurality of microlenses of the second microlens group are arrayed one dimensionally on a light-receiving surface of the light-receiving part of the image pickup device and each microlens arrayed one dimensionally as such covers exclusively a plurality of consecutive pixels.

In particular, outputs of pixels corresponding to the desired pupil positions of the imaging optical system are separated and reconstituted further effectively and optimally so that focusing detection can be performed further extra simply and precisely.

Furthermore, an imaging method of an imaging apparatus according to an embodiment of the present invention includes an image pickup device constituting a light- receiving part having a plurality of pixels that perform photoelectric conversion respectively, an imaging optical system that let a field image formed in the light- receiving part of the image pickup device and an image generation device that generates a field image using outputs of pixels of the image pickup device. The imaging apparatus includes a microlens array having a plurality of microlenses arrayed covering only a portion of an area of the light- receiving part of the image pickup device, disposed in a subject side of the light- receiving part of the image pickup device. In the imaging apparatus, each microlens respectively covers a plurality of pixels within the portion of the area. Light is guided to the plurality of pixels corresponding to exit pupil positions of the imaging optical system. The imaging apparatus includes a light- receiving state determination step that determines whether the plurality of pixels covered with each microlens respectively receive light from the imaging optical system, a pixel selection step that selects by each microlens pixel corresponding to predetermined exit pupil positions within pixels determined by the light- receiving state determination step as receiving light from the imaging optical system, a focusing information obtaining step that obtains focusing information of the field image using outputs of pixels selected by the pixel selection step and an image generation step that generates a field image using outputs of pixels of the image pickup device not covered with the plurality of microlenses. By focusing the imaging optical system to a subject using the focusing information and obtaining a field image using pixel data of pixels not covered with the microlens of the image pickup device, in particular, outputs of pixels corresponding to desired pupil positions of the imaging optical system are separated and reconstituted effectively and optimally so that focusing detection can be performed simply and precisely.

The pixel selection step is a step that selects by each microlens of the microlens array pixels corresponding to a plurality of different exit pupil positions and the focusing information obtaining step is a step that obtains focusing information of the field image based on comparison of an output of pixels corresponding to the first exit pupil position and an output of pixels corresponding to the second exit pupil position within outputs of pixels selected by the pixel selection device. In particular, outputs of pixels corresponding to desired pupil positions of the imaging optical system are separated and reconstituted effectively and optimally so that focusing detection can be performed further simply and precisely.

In addition, the imaging appartus includes an aperture device that controls the passage light quantity by limiting the opening diameter of the imaging optical system and each microlens of the microlens array guides light from the imaging optical system to only a portion of the pixels corresponding to the opening diameter formed by the aperture device and the imaging optical system.

In particular, outputs of pixels corresponding to desired pupil positions of the imaging optical system are separated and reconstituted further effectively and optimally so that focusing detection can be performed further simply and precisely.

The imaging method includes, before the light-receiving state determination step, an aperture control step that narrows down the aperture to a predetermine opening diameter and the light-receiving state determination step is a step that determines the light-receiving state wherein the aperture is in a state narrowed down to the predetermined opening diameter by the aperture control step. In particular, regardless of the opening diameter or positions of the imaging optical system, outputs of pixels corresponding to desired pupil positions of the imaging optical system are separated and reconstituted further effectively and optimally so that focusing detection can be performed further extra simply and precisely.

The plurality of microlenses are arrayed one dimensionally on a light-receiving surface of the light-receiving part of the image pickup device and each microlens covers exclusively the plurality of consecutive pixels.

In particular, outputs of pixels corresponding to the desired pupil positions of the imaging optical system are separated and reconstituted further effectively and optimally so that focusing detection can be performed further extra simply and precisely.

An imaging method of the imaging apparatus according to an embodiment of the present invention includes an image pickup device constituting a light-receiving part having a plurality of pixels that perform photoelectric conversion respectively, an imaging optical system that let a field image formed in the light-receiving part of the image pickup device and an image generation device that generates a field image using outputs of pixels of the image pickup device. The imaging apparatus includes a microlens array having a plurality of microlenses arrayed covering only a portion of an area of the light-receiving part of the image pickup device, disposed in a subject side of the light-receiving part of the image pickup device. Each microlens respectively covers a plurality of pixels within the portion of the area. Light is guided to the plurality of pixels corresponding to exit pupil positions of the imaging optical system. In the imaging apparatus, the microlens array includes a first microlens group and a second microlens group wherein only a portion of the pixels within the plurality of pixels covered respectively by each microlens of the first microlens group are constituted by the first microlens corresponding to light from the imaging optical system. Each microlens of the second microlens group differs from the first microlens in that comparatively little pixels than pixels covered with the first microlens are covered respectively and constituted by the second microlens that guides light from the imaging optical system to predetermined pixels. The imaging apparatus also includes a light-receiving state determination step that determines whether the plurality of pixels covered with each microlens of the first microlens respectively receive light from the imaging optical system, a pixel selection step that selects by each microlens of the second microlens group pixels corresponding to predetermined exit pupil positions within pixels covered with each microlens of the second microlens group based on the determination results of the light-receiving state determination step, a focusing information obtaining step that obtains focusing information of the field image using outputs of pixels selected by the pixel selection step and an image generation step that generates a field image using outputs of pixels of the image pickup device not covered with the plurality of microlenses. By focusing the imaging optical system to a subject using the focusing information and obtaining a field image using pixel data of pixels not covered with the microlens of the image pickup device, in particular, outputs of pixels corresponding to the desired pupil positions of the imaging optical system are separated and reconstituted further effectively and optimally so that focusing detection can be performed further simply and precisely.

The pixel selection step is a step that selects pixels corresponding to a plurality of different exit pupil positions by each microlens of the second microlens group pixels and the focusing information obtaining step is step that obtains focusing information of the field image based on comparison of the outputs of pixels corresponding to the first exit pupil position and the outputs of pixels corresponding to the second exit pupil position within the outputs of pixels selected by the pixel selection step.

In particular, outputs of pixels corresponding to the desired pupil positions of the imaging optical system are separated and reconstituted further effectively and optimally so that focusing detection can be performed further simply and precisely.

The imaging apparatus includes an aperture device that controls the passage light amount by limiting the opening diameter of the imaging optical system and each microlens of the first microlens group guides light from the imaging optical system to only a portion of the pixels corresponding to the opening diameter formed by the aperture device and the imaging optical system.

In particular, outputs of pixels corresponding to the desired pupil positions of the imaging optical system are separated and reconstituted further effectively and optimally so that focusing detection can be performed further simply and precisely.

The imaging method includes before the light-receiving state determination step, an aperture control step that narrows down the aperture to a predetermined opening diameter and the light-receiving state determination step is a step that determines the light-receiving state wherein the aperture is in a state narrowed down to the predetermined opening diameter by the aperture control step.

In particular, regardless of the opening diameter or positions of the imaging optical system, outputs of pixels corresponding to desired pupil positions of the imaging optical system are separated and reconstituted further effectively and optimally so that focusing detection can be performed further extra simply and precisely.

The plurality of microlenses of the first microlens group are arrayed one dimensionally on a light-receiving surface of the light-receiving part of the image pickup device and each microlens arrayed one dimensionally as such covers exclusively a plurality of consecutive pixels. The plurality of microlenses of the second microlens group are arrayed one dimensionally on a light-receiving surface of the light-receiving part of the image pickup device and each microlens arrayed one dimensionally as such covers exclusively a plurality of consecutive pixels.

In particular, outputs of pixels corresponding to the desired pupil positions of the imaging optical system are separated and reconstituted further effectively and optimally so that focusing detection can be performed further extra simply and precisely.

In addition, a focusing information obtaining method for obtaining focusing information in an imaging apparatus according to an embodiment of the present invention includes an image pickup device constituting a light-receiving part having a plurality of pixels that perform photoelectric conversion respectively, an imaging optical system that let a field image form an image in the light-receiving part of the image pickup device. The imaging apparatus includes a microlens array having a plurality of microlenses arrayed covering only a portion of an area of the light-receiving part of the image pickup device, disposed in a subject side of the light-receiving part of the image pickup device. In the imaging apparatus, each microlens respectively covers a plurality of pixels within the portion of the area. Light is guided to the plurality of pixels corresponding to exit pupil positions of the imaging optical system. The imaging apparatus includes a light-receiving state determination step that determines whether the plurality of pixels covered with each microlens respectively receive light from the imaging optical system, a pixel selection step that selects by each microlens pixel corresponding to predetermined exit pupil positions within pixels determined by the light-receiving state determination step as receiving light from the imaging optical system and a focusing information obtaining step that obtains focusing information of the field image using outputs of pixels selected by the pixel selection step. In particular, outputs of pixels corresponding to desired pupil positions of the imaging optical system are separated and reconstituted effectively and optimally so that focusing detection can be performed simply and precisely.

The pixel selection step is a step that selects by each microlens of the microlens array pixels corresponding to a plurality of different exit pupil positions and the focusing information obtaining step is a step that obtains focusing information of the field image based on comparison of an output of pixels corresponding to the first exit pupil position and an output of pixels corresponding to the second exit pupil position within outputs of pixels selected by the pixel selection device. In particular, outputs of pixels corresponding to desired pupil positions of the imaging optical system are separated and reconstituted effectively and optimally so that focusing detection can be performed further simply and precisely.

In addition, the imaging apparatus includes an aperture device that controls the passage light amount by limiting the opening diameter of the imaging optical system and each microlens of the microlens array guides light from the imaging optical system to only a portion of the pixels corresponding to the opening diameter formed by the aperture device and the imaging optical system.

In particular, outputs of pixels corresponding to desired pupil positions of the imaging optical system are separated and reconstituted further effectively and optimally so that focusing detection can be performed further simply and precisely.

The focusing information obtaining method includes, before the light-receiving state determination step, an aperture control step that narrows down the aperture to a predetermined opening diameter and the light-receiving state determination step is a step that determines the light-receiving state wherein the aperture is in a state narrowed down to the predetermined opening diameter by the aperture control step. In particular, regardless of the opening diameter or positions of the imaging optical system, outputs of pixels corresponding to desired pupil positions of the imaging optical system are separated and reconstituted further effectively and optimally so that focusing detection can be performed further extra simply and precisely.

The plurality of microlenses are arrayed one dimensionally on a light-receiving surface of the light-receiving part of the image pickup device and each microlens covers exclusively the plurality of consecutive pixels.

In particular, outputs of pixels corresponding to the desired pupil positions of the imaging optical system are separated and reconstituted further effectively and optimally so that focusing detection can be performed further extra simply and precisely.

A focusing information obtaining method for obtaining focusing information in an imaging apparatus according to an embodiment of the present invention includes an image pickup device constituting a light-receiving part having a plurality of pixels that perform photoelectric conversion respectively, an imaging optical system that let a field image formed in the light-receiving part of the image pickup device. The imaging apparatus includes a microlens array having a plurality of microlenses arrayed covering only a portion of an area of the light-receiving part of the image pickup device, disposed in a subject side of the light-receiving part of the image pickup device. In the imaging apparatus, each microlens respectively covers a plurality of pixels within the portion of the area. Light is guided to the plurality of pixels corresponding to exit pupil positions of the imaging optical system. The microlens array includes a first microlens group and a second microlens group wherein only a portion of the pixels within the plurality of pixels covered respectively by each microlens of the first microlens group are constituted by the first microlens corresponding to light from the imaging optical system. Each microlens of the second microlens group differs from the first microlens in that comparatively little pixels than pixels covered with the first microlens are covered respectively and constituted by the second microlens that guides light from the imaging optical system to predetermined pixels. The imaging apparatus also includes a light-receiving state determination step that determines whether the plurality of pixels covered with each microlens of the first microlens respectively receive light from the imaging optical system, a pixel selection step that selects by each microlens of the second microlens group pixels corresponding to predetermined exit pupil positions within pixels covered with each microlens of the second microlens group based on the determination results of the light-receiving state determination step and a focusing information obtaining step that obtains focusing information of the field image using outputs of pixels selected by the pixel selection step. In particular, outputs of pixels corresponding to the desired pupil positions of the imaging optical system are separated and reconstituted further effectively and optimally so that focusing detection can be performed further simply and precisely.

The pixel selection step is a step that selects pixels corresponding to a plurality of different exit pupil positions by each microlens of the second microlens group pixels and the focusing information obtaining step is a step that obtains focusing information of the field image based on comparison of the outputs of pixels corresponding to the first exit pupil position and the outputs of pixels corresponding to the second exit pupil position within the outputs of pixels selected by the pixel selection step.

In particular, outputs of pixels corresponding to the desired pupil positions of the imaging optical system are separated and reconstituted further effectively and optimally so that focusing detection can be performed further simply and precisely. The imaging apparatus includes an aperture device that controls the passage light quantity by limiting the opening diameter of the imaging optical system and each microlens of the first microlens group guides light from the imaging optical system to only a portion of the pixels corresponding to the opening diameter formed by the aperture device and the imaging optical system.

In particular, outputs of pixels corresponding to the desired pupil positions of the imaging optical system are separated and reconstituted further effectively and optimally so that focusing detection can be performed further simply and precisely.

The focusing information obtaining method includes, before the light-receiving state determination step, an aperture control step that narrows down the aperture to a predetermined opening diameter and the light-receiving state determination step is a step that determines the light-receiving state wherein the aperture is in a state narrowed down to the predetermined opening diameter by the aperture control step.

In particular, regardless of the opening diameter or positions of the imaging optical system, outputs of pixels corresponding to desired pupil positions of the imaging optical system are separated and reconstituted further effectively and optimally so that focusing detection can be performed further extra simply and precisely.

The plurality of microlenses of the first microlens group are arrayed one dimensionally on a light-receiving surface of the light-receiving part of the image pickup device and each microlens arrayed one dimensionally as such covers exclusively a plurality of consecutive pixels. The plurality of microlenses of the second microlens group are arrayed one dimensionally on a light-receiving surface of the light-receiving part of the image pickup device and each microlens arrayed one dimensionally as such covers exclusively a plurality of consecutive pixels.

In particular, outputs of pixels corresponding to the desired pupil positions of the imaging optical system are separated and reconstituted further effectively and optimally so that focusing detection can be performed further extra simply and precisely.

According to an embodiment of the present invention, focusing evaluation values to a subject can be obtained without driving a main optical system to the subject so that the detection of focal length detection information (focusing information) can speed up. By applying the present invention to an imaging apparatus, that is, a camera, a smaller sized and lower cost apparatus in its entirety can be realized.

In addition, when photographing is implemented by actually driving the main optical system to a focusing target position obtained as such, a still image with a matching focus focused to the subject can be obtained.

Assumed focused images of each assumed distance corresponding to a state with broad focal depth are obtained based on light beams passing through a central part of the main optical system. Then the assumed focused images are generated by selecting and extracting pixel data. Focusing evaluation values are obtained for each assumed distance based on assumed focused images corresponding to a broad focal depth state. Based on a maximum value of each focusing evaluation value obtained of each assumed distance, a plurality of assumed distances are set finely in the vicinity of an assumed distance where the maximum value is obtained. Of each set assumed distance, assumed focused images corresponding to a narrow focal depth state are obtained based on light beams passing through at least a broader area than the central part of the main optical system but including the central part. Then the assumed focused images are generated by selecting and extracting pixel data of the assumed focused images. By obtaining focusing evaluation values based on the assumed focused images corresponding to the state of narrow focal depth, the number of assumed focused images to be generated of each assumed distance can be abbreviated so that it is possible to shorten the focal length detection time.

By extracting a characteristic part of a subject based on assumed focused images with mutually different focusing states of each assumed distance, even in the case when the main optical system is not focused to the subject, the extraction of a characteristic part of the subject can be performed precisely without driving the main optical system.

By evaluating the focusing states of each area of the assumed focused images generated of each assumed distance without driving the main optical system, focusing target positions of each area are determined. By driving the main optical system based on the focusing target positions obtained by each area, the so-called focus bracket photographing method can be implemented speedily.

In order to perform compensation processing with regard to image blurring of background images to the main subject, the still image is divided into a plurality of areas. Assumed focused images are generated by each assumed distance and by each area. Focusing evaluation values are obtained by each area corresponding to assumed focused images. Defocus amount of the background images against the main subject are calculated based on focusing evaluation values obtained by a focal length detection device and focusing evaluation values obtained by each area. Compensation processing of the background images against the main subject is performed based on the defocus quantity so that image compensation processing with regard to the blurs can be performed speedily.

## Claims

1.    A focusing device, comprising
an image pickup device (3) which has a light-receiving part (31) having a plurality of pixels each configured to perform photoelectric conversion of incident light introduced through an imaging optical system (1) to obtain pixel data and to output the pixel data as a field image;
said light receiving part (31) further comprising focusing pixels providing pixel data to obtain focusing information for said field image;
a focusing information obtaining device to obtain said focusing information from said focusing pixel data;
an optical element array member (32) having a plurality of optical elements which are provided on a light-receiving surface of said focusing pixels of the image pickup device (3);
**characterized in that**:

the optical element array member (32) is a microlens array having a plurality of microlenses as the plurality of optical elements, the plurality of microlenses being disposed so as to cover only said focusing pixels; wherein each of the microlenses of the microlens array covers predetermined plural focusing pixels and is configured to lead the incident light to the pixels of the image pickup device, which are covered with the corresponding microlens, in accordance with an exit pupil position of the imaging optical system (1); and
the focusing information obtaining device is configured to obtain the focusing information of the field image based on the pixel data of a part of the covered pixels.

2.    The focusing device according to claim 1, further comprising
a pixel selecting section to select a pixel in accordance with a predetermined exit pupil position from the covered pixels with respect to each microlens,
wherein the focusing information obtaining device is configured to obtain focusing information of a subject based on deviations of subject images of different plural exist pupil positions by use of a pixel data of pixels selected by the pixel selecting section; and

the focusing device has a driving section configured to focus the imaging optical system on the subject by use of the focusing information.

3. The focusing device according to claim 1 or claim 2, further comprising an image generation section configured to generate the field image by use of pixel data of pixels which are uncovered with the microlenses, wherein the focusing information obtaining device includes a device configured to obtain contrast information of the image data obtained by the image generating section; and

the focusing device is configured to obtain the focusing information of the subject based on the contrast information.

4. The focusing device according to claim 1, further comprising

a determining section configured to determine whether each of the covered pixels receives light from the imaging optical system; and

a pixel selecting section configured to select a pixel in accordance with a predetermined exit pupil position from the pixels which are covered with the corresponding microlens and determined by determining section such that the pixels receive light from the imaging optical system,

wherein the focusing information obtaining device is configured to obtain the focusing information of the field image by use of output from the pixels selected by the pixel selection section.

5. The focusing device according to claim 4, wherein the pixel selecting section is configured to select the pixels corresponding to the different plural exit pupil positions from the pixels corresponding to each microlens of the microlens array; and

the focusing information obtaining device is configured to obtain the focusing information of the field image by comparing an output of the pixel corresponding to a first exit pupil position and an output of the pixel corresponding to a second exit pupil position.

6. The focusing device according to claim 4 or 5, further comprising

an aperture section having an opening, which is configured to control a transmitted light amount by controlling a diameter of an opening of the imaging optical system,

wherein each microlens of the microlens array is configured to lead the light from the imaging optical system onto only a part of the pixels according to the diameter of the opening of the aperture section.

7. The focusing device according to claim 6, further comprising

an aperture controlling section configured to narrow the opening of the aperture section to be in a predetermined diameter,

wherein the determining device is configured to determine a light-receiving state in a state where the aperture section is narrowed in the predetermined diameter by the aperture controlling section.

8. The focusing device according to any one of the preceding claims, wherein

the image pickup device is configured to convert incident light fluxes entering through a main optical system in pixel data and to output the pixel data;

the optical element array member is configured to define each incident light flux entering via different exit pupil position of the imaging optical system onto a predetermined pixel in a pixel area of the corresponding covered pixels; and

the focusing device includes

a focal detection section configured to select pixel data of each pixel which are obtained from the corresponding incident light flux entering the main optical system, in a state where distances between the optical element array member, the image pickup device and the main optical system are kept constant, and to perform extraction treatment to generate a plurality of assumed focused images, which are differently focused according to an assumed distance in relation to the main optical system, and

a section configured to obtain a focusing evaluation value to evaluate a focused state of the assumed focused image generated by the assumed image generating section.

9. The focusing device according to any one of the preceding claims, further comprising

an image optical system (1) which includes the optical element array member and is configured to image the field image onto the light-receiving part of the image pickup device,

wherein the image pickup device is configured to convert respectively incident light fluxes to pixel data and to output the respective pixel data;

the optical element array member is configured to define each incident light flux onto each pixel of the pixel area, which is defined to receive the corresponding light flux via different exit pupil position of the imaging optical system; and the focusing device includes

a focal detection section configured

to select pixel data of each pixel which are obtained from the corresponding incident light flux entering the imaging optical system, in a state where distances between the optical element array member, the image pickup device and the imaging optical system are kept constant,

to perform extraction treatment to generate a plurality of assumed focused images, which are differently focused according to an assumed distance in relation to the imaging optical system, and

to obtain a focusing evaluation value to evaluate a focused state based on the generated assumed focused images, and

a driving section configured to drive the imaging optical system so as to focus the imaging optical system on the subject based on the focusing evaluation value obtained by the focal detection section.

10. An imaging apparatus comprising the focusing device according to one of claims 1 to 9, and an image generating section configured to generate the field image by use of pixel data of pixels which are uncovered with the micro lenses, wherein the image generating section includes a section configured to interpolate pixel data of the pixels covered with the optical elements by use of the pixel data of surrounding pixels which are uncovered with the optical element array member.

11. An imaging apparatus comprising the focusing device according to one of claims 1 to 9, and an image generating section configured to generate the field image by use of pixel data of pixels which are uncovered with the microlenses, wherein the microlens array is integrally provided with the light-receiving part of the image pickup device; and the imaging generating section includes a section configured

to image at least twice on the different positions by moving the microlens array and the light-receiving part of the image pickup device in a direction crossing a direction where the microlens are arrayed, and

to obtain the field image including the pixel data corresponding to the pixels covered with the micro lenses.

12. An imaging apparatus comprising the focusing device according to one of claims 1 to 9, and an image generating section configured to generate the field image by use of pixel data of pixels which are uncovered with the microlenses, wherein the microlens array is separately provided with the light-receiving part of the image pickup device; and the image generating section includes a section configured

to image at least twice on the different positions by moving the microlens array in relation to the light-receiving part of the image pickup device in a direction crossing a direction where the microlenses are arrayed, and

to obtain the field image including the pixel data corresponding to the pixels covered with the micro lenses.

**Patentansprüche**

1. Fokussierungsvorrichtung, die umfasst:

eine Bildaufnahmevorrichtung (3), die einen lichtempfangenden Teil (31) mit mehreren Pixeln aufweist, wovon jedes konfiguriert ist, eine photoelektrische Umwandlung eines einfallenden Lichtstrahls, der durch ein optisches Abbildungssystem (1) zugeführt worden ist, durchzuführen, um Pixeldaten zu erhalten und um die Pixeldaten als ein Feldbild auszugeben;

wobei der lichtempfangende Teil (31) ferner fokussierende Pixel umfasst, die Pixeldaten bereitstellen, um fokussierende Informationen für das Feldbild zu erhalten;

eine fokussierende Informationen erhaltende Vorrichtung, um die fokussierenden Informationen aus den fokussierenden Pixeldaten zu erhalten;

eine Matrixanordnung (32) optischer Elemente mit mehreren optischen Elementen, die auf einer lichtempfangenden Oberfläche der fokussierenden Pixel der Bildaufnahmevorrichtung (3) vorgesehen sind,

**dadurch gekennzeichnet, dass**:

die Matrixanordnung (32) optischer Elemente eine Mikrolinsenanordnung ist, die mehrere Mikrolinsen als die mehreren optischen Elemente aufweist, wobei die mehreren Mikrolinsen angeordnet sind, um nur die fokussierenden Pixel abzudecken; wobei

jede Mikrolinse der Mikrolinsenanordnung mehrere vorgegebene fokussierende Pixel abdeckt und konfiguriert ist, das einfallende Licht zu den Pixeln der Bildaufnahmevorrichtung, die mit den entsprechenden Mikrolinsen abgedeckt sind, in Übereinstimmung mit einer Ausgangspupillenposition des optischen Abbildungssystems (1) zu leiten, und
die fokussierende Informationen erhaltende Vorrichtung konfiguriert ist, auf der Basis der Pixeldaten eines Teils der abgedeckten Pixel die fokussierenden Informationen des Feldbildes zu erhalten.

2. Fokussierungsvorrichtung nach Anspruch 1, die ferner umfasst:

einen Pixelauswahlabschnitt, um ein Pixel entsprechend einer vorgegebenen Ausgangspupillenposition von den abgedeckten Pixeln bezüglich jeder Mikrolinse auszuwählen,
wobei die fokussierende Informationen erhaltende Vorrichtung konfiguriert ist, fokussierende Informationen eines Gegenstands auf der Basis von Abweichungen der Gegenstandsbilder von verschiedenen mehrfachen Ausgangspupillenpositionen durch die Verwendung von Pixeldaten von Pixeln, die durch den Pixelauswahlabschnitt ausgewählt worden sind, zu erhalten; und
wobei die Fokussierungsvorrichtung einen Ansteuerungsabschnitt aufweist, der konfiguriert ist, das optische Abbildungssystem durch die Verwendung der fokussierenden Informationen auf den Gegenstand zu fokussieren.

3. Fokussierungsvorrichtung nach Anspruch 1 oder 2, die ferner einen Bilderzeugungsabschnitt umfasst, der konfiguriert ist, das Feldbild durch Verwendung von Pixeldaten von Pixeln, die mit den Mikrolinsen nicht abgedeckt sind, zu erzeugen, wobei die fokussierende Informationen erhaltende Vorrichtung eine Vorrichtung enthält, die konfiguriert ist, Kontrastinformationen der Bilddaten, die durch den Bilderzeugungsabschnitt erhalten worden sind, zu erhalten; und
wobei die Fokussierungsvorrichtung konfiguriert ist, auf der Basis der Kontrastinformationen die fokussierenden Informationen des Gegenstands zu erhalten.

4. Fokussierungsvorrichtung nach Anspruch 1, die ferner umfasst:

einen Bestimmungsabschnitt, der konfiguriert ist, zu bestimmen, ob jedes der abgedeckten Pixel Licht von dem optischen Abbildungssystem empfängt; und
einen Pixelauswahlabschnitt, der konfiguriert ist, ein Pixel entsprechend einer vorgegebenen Ausgangspupillenposition von den Pixeln auszuwählen, die mit den entsprechenden Mikrolinsen abgedeckt sind und die von dem Bestimmungsabschnitt bestimmt worden sind, derart, dass die Pixel Licht von dem optischen Abbildungssystem empfangen,
wobei die fokussierende Informationen erhaltende Vorrichtung konfiguriert ist, die fokussierenden Informationen des Feldbildes durch die Verwendung der Ausgabe von den Pixeln, die von dem Pixelauswahlabschnitt ausgewählt worden sind, zu erhalten.

5. Fokussierungsvorrichtung nach Anspruch 4, wobei der Pixelauswahlabschnitt konfiguriert ist, die Pixel entsprechend den verschiedenen mehrfachen Ausgangspupillenpositionen von den Pixeln entsprechend jeder Mikrolinse der Mikrolinsenanordnung auszuwählen; und
wobei die fokussierende Informationen erhaltende Vorrichtung konfiguriert ist, die fokussierenden Informationen des Feldbildes durch Vergleichen einer Ausgabe des Pixels entsprechend einer ersten Ausgangspupillenposition und einer Ausgabe des Pixels entsprechend einer zweiten Ausgangspupillenposition zu erhalten.

6. Fokussierungsvorrichtung nach Anspruch 4 oder 5, die ferner umfasst:

einen Blendenabschnitt mit einer Öffnung, die konfiguriert ist, eine durchgelassene Lichtmenge zu steuern, indem ein Durchmesser einer Öffnung des optischen Abbildungssystems gesteuert wird,
wobei jede Mikrolinse der Mikrolinsenanordnung konfiguriert ist, das Licht von dem optischen Abbildungssystem entsprechend dem Durchmesser der Öffnung des Blendenabschnitts nur auf einen Teil der Pixel zu leiten.

7. Fokussierungsvorrichtung nach Anspruch 6, die ferner umfasst:

einen Blendensteuerabschnitt, der konfiguriert ist, die Öffnung des Blendenabschnitts auf einen vorgegebenen Durchmesser zu verengen,
wobei der Bestimmungsabschnitt konfiguriert ist, einen lichtempfangenden Zustand in einem Zustand zu bestimmen, in dem der Blendenabschnitt in dem vorgegebenen Durchmesser durch den Blendensteuerabschnitt verengt ist.

8. Fokussierungsvorrichtung nach einem der vorhergehenden Ansprüche, wobei:

die Bildaufnahmevorrichtung konfiguriert ist, einfallende Lichtflüsse, die durch ein optisches Hauptsystem eintreten, in Pixeldaten umzuwandeln und die Pixeldaten auszugeben;
die Matrixanordnung optischer Elemente konfiguriert ist, jeden einfallenden Lichtfluss zu definieren, der über verschiedene Ausgangspupillenpositionen des optischen Abbildungssystems auf einem vorgegebenen Pixel in einen Pixelbereich der entsprechenden abdeckten Pixel eintritt; und
wobei die Fokussierungsvorrichtung enthält:

einen Brennweitendetektionsabschnitt, der konfiguriert ist, die Pixeldaten von jedem Pixel, die von dem entsprechenden einfallenden Lichtfluss, der in das optische Hauptsystem eintritt, erhalten worden sind, in einem Zustand auszuwählen, in dem die Entfernungen zwischen der Matrixanordnung optischer Elemente, der Bildaufnahmevorrichtung und dem optischen Hauptsystem konstant gehalten werden, und um eine Extraktionsbehandlung durchzuführen, um mehrere angenommene fokussierte Bilder zu erzeugen, die entsprechend einer angenommenen Entfernung in Beziehung zu dem optischen Hauptsystem unterschiedlich fokussiert sind, und
einen Abschnitt, der konfiguriert ist, einen Fokussierungsbewertungswert zu erhalten, um einen fokussierten Zustand des angenommenen fokussierten Bildes, das durch den angenommenen Bilderzeugungsabschnitt erzeugt worden ist, zu bewerten.

9. Fokussierungsvorrichtung nach einem der vorhergehenden Ansprüche, die ferner umfasst:

ein optisches Abbildungssystem (1), das die Matrixanordnung optischer Elemente enthält und konfiguriert ist, das Feldbild auf den lichtempfangenden Teil der Bildaufnahmevorrichtung abzubilden,
wobei die Bildaufnahmevorrichtung konfiguriert ist, die jeweiligen einfallenden Lichtflüsse in Pixeldaten umzuwandeln und die jeweiligen Pixeldaten auszugeben;
wobei die Matrixanordnung optischer Elemente konfiguriert ist, jeden einfallenden Lichtfluss auf jedem Pixel des Pixelbereichs zu definieren, der definiert ist, den entsprechenden Lichtfluss über verschiedene Ausgangspupillenpositionen des optischen Abbildungssystems zu empfangen;
und die Fokussierungsvorrichtung enthält:

einen Brennweitendetektionsabschnitt, der konfiguriert ist,
Pixeldaten von jedem Pixel, die von dem entsprechenden einfallenden Lichtfluss, der in das optische Abbildungssystem eintritt, erhalten worden sind, in einem Zustand auszuwählen, in dem die Entfernungen zwischen der Matrixanordnung optischer Elemente, der Bildaufnahmevorrichtung und dem optischen Abbildungssystem konstant gehalten werden,
eine Extraktionsbehandlung durchzuführen, um mehrere angenommene fokussierte Bilder zu erzeugen, die entsprechend einer angenommenen Entfernung in Beziehung zu dem optischen Abbildungssystem unterschiedlich fokussiert sind, und
einen Fokussierungsbewertungswert zu erhalten, um auf der Basis der erzeugten angenommenen fokussierten Bilder einen fokussierten Zustand zu bewerten, und
wobei ein Ansteuerungsabschnitt konfiguriert ist, um so auf der Basis des Fokussierungsbewertungswerts, der durch den Brennweitendetektionsabschnitt erhalten worden ist, das optische Abbildungssystem auf den Gegenstand zu fokussieren.

10. Abbildungsvorrichtung, die die Fokussierungsvorrichtung nach einem der Ansprüche 1 bis 19 und einen Bilderzeugungsabschnitt umfasst, der konfiguriert ist, das Feldbild durch Verwendung von Pixeldaten von Pixeln, die mit den Mikrolinsen nicht abgedeckt sind, zu erzeugen, wobei der Bilderzeugungsabschnitt einen Abschnitt enthält, der konfiguriert ist, Pixeldaten von den Pixeln, die mit den optischen Elementen abgedeckt sind, durch die Verwendung von Pixeldaten von umgebenden Pixeln, die mit der Matrixanordnung optischer Elemente nicht abgedeckt sind, zu interpolieren.

11. Abbildungsvorrichtung, die die Fokussierungsvorrichtung nach einem der Ansprüche 1 bis 19 und einen Bilderzeugungsabschnitt umfasst, der konfiguriert ist, das Feldbild durch Verwendung von Pixeldaten von Pixeln, die mit den Mikrolinsen nicht abgedeckt sind, zu erzeugen, wobei die Mikrolinsenanordnung mit dem lichtempfangenden Teil der Bildaufnahmevorrichtung einteilig bereitgestellt ist;

und wobei der Bilderzeugungsabschnitt einen Abschnitt enthält, der konfiguriert ist, mindestens zweifach auf die unterschiedlichen Positionen abzubilden, indem die Mikrolinsenanordnung und der lichtempfangende Teil der Bildaufnahmevorrichtung in einer Richtung bewegt werden, die eine Richtung kreuzt, in der die Mikrolinsen angeordnet sind, und

das Feldbild einschließlich der Pixeldaten entsprechend den Pixeln, die mit den Mikrolinsen abgedeckt sind, zu erhalten.

12. Abbildungsvorrichtung, die die Fokussierungsvorrichtung nach einem der Ansprüche 1 bis 9 und einen Bilderzeugungsabschnitt umfasst, der konfiguriert ist, das Feldbild durch Verwendung von Pixeldaten von Pixeln, die mit den Mikrolinsen nicht abgedeckt sind, zu erzeugen, wobei die Mikrolinsenanordnung mit dem lichtempfangenden Teil der Bildaufnahmevorrichtung getrennt bereitgestellt ist;

und wobei der Bilderzeugungsabschnitt einen Abschnitt enthält, der konfiguriert ist, mindestens zweifach auf die unterschiedlichen Positionen abzubilden, indem die Mikrolinsenanordnung in Bezug auf das lichtempfangende Teil der Bildaufnahmevorrichtung in einer Richtung bewegt wird, die eine Richtung kreuzt, in der die Mikrolinsen angeordnet sind, und

das Feldbild einschließlich der Pixeldaten entsprechend den Pixeln, die mit den Mikrolinsen abgedeckt sind, zu erhalten.

## Revendications

1. Dispositif de focalisation, comprenant
un dispositif de prise d'image (3) qui possède une partie de réception de lumière (31) ayant une pluralité de pixels, chacun configuré pour effectuer une conversion photoélectrique d'une lumière incidente introduite par l'intermédiaire d'un système optique d'imagerie (1) pour obtenir des données de pixel et pour sortir les données de pixel comme une image de champ ;
ladite partie de réception de lumière (31) comprenant en outre des pixels de focalisation fournissant des données de pixel pour obtenir des informations de focalisation pour ladite image de champ ;
un dispositif d'obtention d'informations de focalisation pour obtenir lesdites informations de focalisation à partir desdites données de pixel de focalisation ;
un membre de matrice d'éléments optiques (32) ayant une pluralité d'éléments optiques qui sont pourvus sur une surface de réception de lumière desdits pixels de focalisation du dispositif de prise d'image (3) ;
**caractérisé en ce que** :

le membre de matrice d'éléments optiques (32) est une matrice de microlentilles ayant une pluralité de microlentilles comme la pluralité d'éléments optiques, la pluralité de microlentilles étant disposée afin de couvrir uniquement lesdits pixels de focalisation ; dans lequel
chacune des microlentilles de la matrice de microlentilles couvre une pluralité de pixels de focalisation prédéterminés et est configurée pour conduire la lumière incidente jusqu'aux pixels du dispositif de prise d'image, qui sont couverts avec les microlentilles correspondantes, conformément à une position de pupille de sortie du système optique d'imagerie (1) ; et
le dispositif d'obtention d'informations de focalisation est configuré pour obtenir les informations de focalisation de l'image de champ sur la base des données de pixel d'une partie des pixels couverts.

2. Dispositif de focalisation selon la revendication 1, comprenant en outre
une section de sélection de pixel pour sélectionner un pixel conformément à une position de pupille de sortie prédéterminée parmi les pixels couverts relativement à chaque microlentille,
dans lequel le dispositif d'obtention d'informations de focalisation est configuré pour obtenir des informations de focalisation d'un sujet sur la base de déviations d'images de sujet d'une pluralité de positions différentes de pupille de sortie à l'aide de données de pixel de pixels sélectionnés par la section de sélection de pixel ; et
le dispositif de focalisation a une section de pilotage configurée pour focaliser le système optique d'imagerie sur le sujet à l'aide des informations de focalisation.

3. Dispositif de focalisation selon la revendication 1 ou la revendication 2, comprenant en outre une section de génération d'image configurée pour générer l'image de champ à l'aide de données de pixel de pixels qui sont ne sont pas couverts avec les microlentilles, dans lequel le dispositif d'obtention d'informations de focalisation comprend un dispositif configuré pour obtenir des informations de contraste des données d'image obtenues par la section de génération d'image ; et

le dispositif de focalisation est configuré pour obtenir les informations de focalisation du sujet sur la base des informations de contraste.

4. Dispositif de focalisation selon la revendication 1, comprenant en outre
une section de détermination configurée pour déterminer si chacun des pixels couverts reçoit de la lumière en provenance du système optique d'imagerie ; et
une section de sélection de pixel configurée pour sélectionner un pixel conformément à une position de pupille de sortie prédéterminée parmi les pixels qui sont couverts avec la microlentille correspondante et déterminés par la section de détermination de sorte que les pixels reçoivent de la lumière en provenance du système optique d'imagerie, dans lequel le dispositif d'obtention d'informations de focalisation est configuré pour obtenir les informations de focalisation de l'image de champ à l'aide de la sortie des pixels sélectionnés par la section de sélection de pixel.

5. Dispositif de focalisation selon la revendication 4, dans lequel la section de sélection de pixel est configurée pour sélectionner les pixels correspondant à la pluralité de positions différentes de pupille de sortie parmi les pixels correspondant à chaque microlentille de la matrice de microlentilles ; et
le dispositif d'obtention d'informations de focalisation est configuré pour obtenir les informations de focalisation de l'image de champ en comparant une sortie du pixel correspondant à une première position de pupille de sortie et une sortie du pixel correspondant à une seconde position de pupille de sortie.

6. Dispositif de focalisation selon la revendication 4 ou 5, comprenant en outre
une section d'ouverture ayant une ouverture, qui est configurée pour commander une quantité de lumière transmise en commandant un diamètre d'une ouverture du système optique d'imagerie,
dans lequel chaque microlentille de la matrice de microlentilles est configurée pour conduire la lumière du système optique d'imagerie uniquement sur une partie des pixels selon le diamètre de l'ouverture de la section d'ouverture.

7. Dispositif de focalisation selon la revendication 6, comprenant en outre
une section de commande d'ouverture configurée pour rétrécir l'ouverture de la section d'ouverture pour être dans un diamètre prédéterminé,
dans lequel le dispositif de détermination est configuré pour déterminer un état de réception de lumière dans un état où la section d'ouverture est rétrécie dans le diamètre prédéterminé par la section de commande d'ouverture.

8. Dispositif de focalisation selon l'une quelconque des revendications précédentes, dans lequel
le dispositif de prise d'image est configuré pour convertir des flux de lumière incidente entrant à travers un système optique principal en données de pixel et pour sortir les données de pixel ;
le membre de matrice d'éléments optiques est configuré pour définir chaque flux de lumière incidente entrant via une position de pupille de sortie différente du système optique d'imagerie sur un pixel prédéterminé dans une zone de pixels des pixels couverts correspondants ; et
le dispositif de focalisation comprend
une section de détection focale configurée pour sélectionner des données de pixel de chaque pixel qui sont obtenues à partir du flux de lumière incidente correspondant entrant dans le système optique principal, dans un état où les distances entre le membre de matrice d'éléments optiques, le dispositif de prise d'image et le système optique principal sont maintenues constantes, et pour effectuer un traitement d'extraction afin de générer une pluralité d'images focalisées présumées, qui sont focalisées différemment selon une distance présumée par rapport au système optique principal, et
une section configurée pour obtenir une valeur d'évaluation de focalisation pour évaluer un état focalisé de l'image focalisée présumée générée par la section de génération d'image présumée.

9. Dispositif de focalisation selon l'une quelconque des revendications précédentes, comprenant en outre
un système optique d'imagerie (1) qui comprend le membre de matrice d'éléments optiques et est configuré pour imager l'image de champ sur la partie de réception de lumière du dispositif de prise d'image,
dans lequel le dispositif de prise d'image est configuré pour convertir respectivement des flux de lumière incidente en données de pixel et pour sortir les données de pixel respectives ;
le membre de matrice d'éléments optiques est configuré pour définir chaque flux de lumière incidente sur chaque pixel de la zone de pixels, qui est définie pour recevoir le flux de lumière correspondant via une position de pupille de sortie différente du système optique d'imagerie ; et
le dispositif de focalisation comprend
une section de détection focale configurée pour sélectionner des données de pixel de chaque pixel qui sont obtenues à partir du flux de lumière incidente correspondant entrant dans le système optique d'imagerie, dans un état où les

EP 2 028 843 B1

distances entre le membre de matrice d'éléments optiques, le dispositif de prise d'image et le système optique d'imagerie sont maintenues constantes,

pour effectuer un traitement d'extraction pour générer une pluralité d'images focalisées présumées, qui sont focalisées différemment selon une distance présumée par rapport au système optique d'imagerie, et

pour obtenir une valeur d'évaluation de focalisation pour évaluer un état focalisé sur la base des images focalisées présumées générées, et

une section de pilotage configuré pour piloter le système optique d'imagerie afin de focaliser le système optique d'imagerie sur le sujet sur la base de la valeur d'évaluation de focalisation obtenue par la section de détection focale.

10. Appareil d'imagerie comprenant le dispositif de focalisation selon l'une des revendications 1 à 9, et une section de génération d'image configurée pour générer l'image de champ à l'aide de données de pixel de pixels qui ne sont pas couverts avec les microlentilles, dans lequel la section de génération d'image comprend une section configurée pour interpoler des données de pixel des pixels couverts avec les éléments optiques à l'aide des données de pixel de pixels circonvoisins qui ne sont pas couverts avec le membre de matrice d'éléments optiques.

11. Appareil d'imagerie comprenant le dispositif de focalisation selon l'une des revendications 1 à 9, et une section de génération d'image configurée pour générer l'image de champ à l'aide de données de pixel de pixels qui ne sont pas couverts avec les microlentilles, dans lequel la matrice de microlentilles image est pourvue intégralement de la partie de réception de lumière du dispositif de prise d'image ; et

la section de génération d'image comprend une section configurée

pour imager au moins deux fois sur les positions différentes en déplaçant la matrice de microlentilles et la partie de réception de lumière du dispositif de prise d'image dans une direction croisant une direction où les microlentilles sont agencées en matrice, et

pour obtenir l'image de champ comprenant les données de pixel correspondant aux pixels couverts avec les microlentilles.

12. Appareil d'imagerie comprenant le dispositif de focalisation selon l'une des revendications 1 à 9, et une section de génération d'image configurée pour générer l'image de champ à l'aide de données de pixel de pixels qui ne sont pas couverts avec les microlentilles, dans lequel la matrice de microlentilles est pourvue séparément de la partie de réception de lumière du dispositif de prise d'image ; et

la section de génération d'image comprend une section configurée

pour imager au moins deux fois sur les positions différentes en déplaçant la matrice de microlentilles par rapport à la partie de réception de lumière du dispositif de prise d'image dans une direction croisant une direction où les microlentilles sont agencées en matrice, et

pour obtenir l'image de champ comprenant les données de pixel correspondant aux pixels couverts avec les microlentilles.

# FIG. 1

AXIS
APERTURE
TURRET

32

31

O₁

O₂

MAIN LIGHT
AXIS OF
IMAGING LENS

IMAGE PICKUP
DEVICE

IMAGING LENS

# FIG. 2

IMAGING PLANE

2

G3

G2

G1

G4

1

# FIG. 3

3

LIGHT
SHIELDING

MICROLENS
ARRAY

32

31

# FIG. 4

1

32

31

$2\,\mu\mathrm{m} \times 10 = 20\,\mu$

$f = 56\,\mu\mathrm{m}$
$2.8 = f/20\,\mu$

# FIG. 5

IMAGING LENS

1

POINT a

32    31

ML β    m TH PIXEL

ML α    n TH PIXEL

FIRST PIXEL

# FIG. 6

3

A LINE

4

# FIG. 7A

# FIG. 7B

PIXEL RECEIVING LIGHT FROM POINT a

| MICROLENS NUMBER | M1 | M2 | M3 | ... | ... | ... | Mx |
|---|---|---|---|---|---|---|---|
| PIXEL NUMBER | Na1 | Na2 | Na3 | ... | ... | ... | Nax |

# FIG. 8A

# FIG. 8B

PIXEL RECEIVING LIGHT FROM POINT b

| MICROLENS NUMBER | M1 | M2 | M3 | ⋯ | ⋯ | ⋯ | Mx |
|---|---|---|---|---|---|---|---|
| PIXEL NUMBER | Nb1 | Nb2 | Nb3 | ⋯ | ⋯ | ⋯ | Nbx |

# FIG. 9

EP 2 028 843 B1

# FIG. 10

bY LIGHT RAY

ML β

Y POINT

Y MAIN LIGHT RAY

aY LIGHT RAY

X MAIN LIGHT RAY

bX LIGHT RAY

bZ LIGHT RAY

aX LIGHT RAY

X POINT

Z POINT

Z MAIN LIGHT RAY

IMAGE MISALIGNMENT AMOUNT

aZ LIGHT RAY

FOCAL PLANE

POINT-a IMAGE

POINT-b IMAGE

POINT-c IMAGE

Z POINT

BRIGHTNESS

BRIGHTNESS

BRIGHTNESS

0

0

0

EP 2 028 843 B1

# FIG. 11

aY LIGHT RAY

Y MAIN LIGHT RAY

bY LIGHT RAY

aX LIGHT RAY

X MAIN LIGHT RAY

bX LIGHT RAY

aZ LIGHT RAY

Z MAIN LIGHT RAY

bZ LIGHT RAY

FOCAL PLANE

31

32

Y POINT

X POINT

Z POINT

IMAGE MISALIGNMENT AMOUNT

POINT-a IMAGE

BRIGHTNESS

0

POINT-b IMAGE

BRIGHTNESS

0

POINT-c IMAGE

BRIGHTNESS

0

EP 2 028 843 B1

# FIG. 12A

FAR FIELD POINT

FOCUSED FIELD POINT

NEAR FIELD POINT

POINT c

POINT a

POINT b

1

fm

32

31

## FIG. 12B

<NEAR FIELD POINT>

POINT-a IMAGE

POINT-b IMAGE

POINT-c IMAGE

CORRELATED
EVALUATION WINDOW

## FIG. 12C

<FOCUSED FIELD POINT>

## FIG. 12D

<FAR FIELD POINT>

EP 2 028 843 B1

# FIG. 13A

# FIG. 13B

# FIG. 13C

# FIG. 13D

<NEAR FIELD POINT>

<FOCUSED FIELD POINT>

<FAR FIELD POINT>

POINT-a IMAGE

POINT-b IMAGE

POINT-c IMAGE

CORRELATED
EVALUATION WINDOW

# FIG. 14

# FIG. 15

G + R

# FIG. 16

# FIG. 17

# FIG. 18

# FIG. 19

# FIG. 20

# FIG. 21

EP 2 028 843 B1

# FIG. 22

AC
CONTRAST AREA

103

Aa
A LINE

# FIG. 23A

FOCUSING

MAIN LENS    IMAGING
PLANE

CONDENSER
LENS

INTERVAL
BETWEEN
FOCUSED
IMAGES

SEPARATOR
LENS

# FIG. 23B

FRONT FOCUS

# FIG. 23C

BACK FOCUS

# FIG. 24

## FIG. 25

BOUNDARY
LIGHT FROM
LIGHT OUTSIDE
OPENING

32    31

IMAGING
LENS 1

POINT b

D

POINT a

BOUNDARY
LIGHT FROM
LIGHT OUTSIDE
OPENING

## FIG. 26

BOUNDARY LIGHT
FROM LIGHT
OUTSIDE
OPENING

POINT b

D

POINT a

1

BOUNDARY
LIGHT FROM LIGHT
OUTSIDE OPENING

32

31

# FIG. 27

# FIG. 28

# FIG. 29

# FIG. 30

# FIG. 31

# FIG. 32

LIGHT
SHIELDING

31

32

32a

32b

# FIG. 33

# FIG. 34

# FIG. 35

START AF
PROCESSING PART

↓

| DRIVE APERTURE FOR AF (Avaf) ※ 1 | S31 |

↓

| Tv = Tvo+Avo-Avaf | S32 |

↓

| IMAGE FOR WITH/ WITHOUT DETERMINATION | S33 |

↓

| DETERMINE WHETHER WITHIN OR WITHOUT OPENING DETERMINE PIXELS FOR POINT-a IMAGE AND POINT-b IMAGE | S34 |

↓

| DRIVE APERTURE FOR AF (OPEN) ※ 2 | S35 |

↓

| Tv = Tvo+Avo-Av OPEN | S36 |

↓

| IMAGE FOR AF | S37 |

↓

| RECONSTITUTE OF POINT-a IMAGE AND POINT-b IMAGE | S38 |

↓

| AF DETECTION ON EVALUATION WINDOW | S39 |

↓

S40
< AF RESULT > —— NG

↓ OK                    S41                    S43

| DRIVE FOCUS |        | AF NG DISPLAY |

↓

| AF OF DISPLAY | S42

↓

| DRIVE Avo SET Tvo ※ 3 | S44

↓

AF PROCESSING IS
FINISHED

# FIG. 36

※1 : Avo

: Avaf

※2 : Av OPEN

※3 : Avo

# FIG. 37

# FIG. 38

EP 2 028 843 B1

# FIG. 39

MAIN PROCESSING

S501 MONITORING STATE

DURING STOPPED STATE

S503 START THROUGH

S504 CHECK BATTERY CHARGE

S505 START BATTERY CHARGE

DURING MONITORING

S502 SW DETERMINATION

INVALID OPERATION

FIRST SW ON PROCESSING

SECOND SW ON PROCESSING

OTHER SW ON

S506 MONITORING STOP PROCESSING

S509 MONITORING STOP PROCESSING

S511 PROCESSING CORRESPONDING TO OTHER SW

S507 AE PROCESSING

S510 STILL IMAGE RECORDING PROCESSING

S508 FOCUS DETECTION

# FIG. 40

510

511a

511

512

513

G'4

SECOND
ZOOM
GROUP G'2

FOCUS
GROUP G'3

FIRST ZOOM
GROUP G'1

# FIG. 41

512i

513

512

512i

512i

# FIG. 42A

# FIG. 42B

EP 2 028 843 B1

# FIG. 43

EP 2 028 843 B1

MAIN LENS 10

m TH PIXEL
(FORMING
IMAGE OF X)

512i (MLβ')

514

n TH PIXEL
(FORMING
IMAGE OF Z)

514

512i (MLα')

X'

in α

in β

in β

in α

Z'

POINT a'

q

q

1

# FIG. 44

# FIG. 45

PIXEL RECEIVING LIGHT FROM POINT a

| MICROLENS NUMBER | $M_1$ | $M_2$ | $M_3$ | ⋯ | ⋯ | ⋯ | $M_x$ |
|---|---|---|---|---|---|---|---|
| PIXEL NUMBER | $Na_1'$ | $Na_2'$ | $Na_3'$ | ⋯ | ⋯ | ⋯ | $Na_x'$ |

EP 2 028 843 B1

# FIG. 46

513

512

Z' POINT

510

512i

X' MAIN LIGHT RAY    $O_2$

X' POINT

Z' MAIN LIGHT RAY

POINT C

aX' LIGHT RAY

aX' LIGHT RAY

POINT a'    aZ' LIGHT RAY

512i

Z' MAIN
LIGHT RAY

aZ' LIGHT RAY

fm

FOCAL PLANE

# FIG. 47

IMAGE DISTANCE L₄

H

IMAGE DISTANCE L₃

IMAGE DISTANCE L₂

POINT b

POINT a'

IMAGE DISTANCE L₁

510

Fb

LIGHT RAY a3'

LIGHT RAY b3'

LIGHT RAY a2'

LIGHT RAY b2'

LIGHT RAY a1'

LIGHT RAY b1'

Fa

C

O₂

ASSUMED POINT IMAGE a

ASSUMED POINT IMAGE b

a''

b''

IMAGE DISTANCE L₁'

fm'

fm

f

512i

513

q

Nj

Mj

Nk

Mk

Nl

Ml

Nm

Mm

Nn

Mn

Mp

Np

q

EP 2 028 843 B1

# FIG. 48

POINT c

POINT b'

Fb

510

LIGHT RAY b3

LIGHT RAY c3

C

LIGHT RAY c2

$O_2$

LIGHT RAY b2

LIGHT RAY c1

Fa

LIGHT RAY b1

POINT IMAGE b''

LIGHT RAY c1

LIGHT RAY b1

LIGHT RAY b3

LIGHT RAY c3

q

Nj'
Mj'
Nm
Mm
Nl'
Ml'
Nn
Mn
Nn'
Mn'
Np
Mp
Nq'
Mq'

4

POINT IMAGE c''

IMAGE DISTANCE $L_1$

IMAGE DISTANCE $L_3$

IMAGE DISTANCE $L_2$

IMAGE DISTANCE $L_4$

H

IMAGE DISTANCE $L_4'$

IMAGE DISTANCE $L_3'$

IMAGE DISTANCE $L_1'$

IMAGE DISTANCE $L_2'$

fm''

fm'

fm

f

Δ

PRESENT POSITION RP'

fp

STANDARD POSITION RP = 0

EP 2 028 843 B1

# FIG. 49

# FIG. 50

# FIG. 51

```
FOCUSING DETECTION
PROCESSING
        │
        ▼
ASSUMED FOCUSED IMAGE ─── S521
        │
        ▼
CALCULATION OF FOCUSING ─── S522
EVALUATION VALUE OF
CENTER AREA OF SCREEN
        │
        ▼
       S523
   PEAK OF                    NONEXISTENT                                    S526
FOCUSING EVALUATION ──────────────────────────┐
   VALUE                                       ▼
        │ EXISTENT            CALCULATION OF 2. 5M FOCUSING POINT fp
        │                              │
        ▼◄─────────────────────────────┘
DETERMINE TARGET POSITION fp ─── S524
        │
        ▼
DRIVE LENS ─── S525
STOP LENS
        │
        ▼
      END
```

# FIG. 52

FOCUSING EVALUATION VALUE

ASSUMED DISTANCE $L_1$ (IMAGE DISTANCE $L_1'$)    $L_2$ ($L_2'$)    $L_4$ ($L_4'$)    $L_5$ ($L_5'$)    $L_6$ ($L_6'$)    $L_7$ ($L_7'$)    $L_8$ ($L_8'$)    ASSUMED DISTANCE $L_{11}$ (IMAGE DISTANCE $L_{11}'$)

# FIG. 53

FOCUSING DETECTION
PROCESSING

N = 2 — S531

ASSUMED FOCUSED IMAGE OF
ASSUMED DISTANCE $L_N$ OF F11 — S532

CALCULATION OF FOCUSING
EVALUATION VALUE — S533

S534
DECLINE
AFTER PEAK OF FOCUSING
EVALUATION
VALUE?

NO

N = N+2 — S535

S536
N > Nmax?

NO

YES S542

CALCULATION 2. 5M
FOCAL POINT fp

YES

GENERATE ASSUMED FOCUSED
IMAGES OF F2. 8 ASSUMED
DISTANCES LN, LN-1, LN-2, LN-3 — S537

CALCULATION FOCUSING
EVALUATION VALUES OF
ASSUMED FOCUSED IMAGES OF
LN, LN-1, LN-2, LN-3 — S538

DETECT PEAK POSITION FROM
ASSUMED FOCUSED IMAGES OF
LN, LN-1, LN-2, LN-3 — S539

DETERMINE TARGET fp — S540

DRIVE LENS
STOP LENS — S541

END

FIG. 54A    FIG. 54B    FIG. 54C

EP 2 028 843 B1

# FIG. 55

FOCAL POINT
DETECTION PROCESSING

↓

GENERATE ASSUMED FOCUSED IMAGE — S541'

↓

FACIAL POSITION DETECTION FROM
A PLURALITY OF IMAGES IN
FOCUSED STATE — S542'

↓

CALCULATION OF FOCUSING
EVALUATION VALUE OF
FACIAL POSITION — S543'

↓

S544'

PEAK IN
FOCUSING EVALUATION
VALUES

NONEXISTENT → CALCULATION OF 2. 5M FOCAL POINT fp — S547'

EXISTENT

↓

DETERMINE TARGET fp — S545'

↓

DRIVE LENS
STOP LENS — S546'

↓

END

# FIG. 56

FOCAL POINT
DETECTION PROCESSING

GENERATE ASSUMED FOCUSED IMAGE
WITH LARGE F VALUE — S551

DETECT FACIAL POSITION — S552

GENERATE FOCUSED IMAGE — S553

CALCULATION OF FOCUSING
EVALUATION VALUE OF FACIAL
POSITION — S554

PEAK IN
FOCUSING EVALUATION
VALUES — S555

NONEXISTENT

CALCULATION OF 2. 5M FOCAL POINT fp — S558

EXISTENT

DETERMINE TARGET fp — S556

DRIVE LENS
STOP LENS — S557

END

# FIG. 57

# FIG. 58

# FIG. 59

# FIG. 60

# FIG. 61

# FIG. 62

FOCAL POINT
DETECTION PROCESSING

GENERATE ASSUMED FOCUSED IMAGE — S561

CALCULATE FOCUSING EVALUATION
VALUE OF EACH OF FOCUSED
IMAGES IN AREAS d1, d2, d3 — S562

POSSIBLE fp fp[0] = fp[1] = fp[2] = 0 — S563

i = 0 — S564

S565
PEAK OF
FOCUSING EVALUATION
VALUE OF AREA d1

S566
fp[i] = PEAK OF AREA d1
i = i+1

S567
PEAK OF
FOCUSING EVALUATION
VALUE OF AREA d2

S568
fp[i] = PEAK OF AREA d2
i = i+1

S569
PEAK OF
FOCUSING EVALUATION
VALUE OF AREA d3

S570
fp[i] = PEAK OF AREA d3

i = 0

S571

S572
CALCULATION OF fp[0] = 2. 5M FOCAL POINT fp

REARRANGE fp[*] IN DESCENDING ORDER — S573

DETERMINE TARGET fp = fp[0] — S574

DRIVE LENS
STOP LENS — S575

END

# FIG. 63

531  530  G  532

# FIG. 64

```
  ┌─────────────────────────┐
  │   IMAGE COMPENSATION     │
  │      PROCESSING          │
  └─────────────────────────┘
             │
             ▼
  ┌─────────────────────────┐
  │  GENERATE FOCUSED IMAGE  │──S581
  └─────────────────────────┘
             │
             ▼
  ┌─────────────────────────┐
  │   CALCULATE PEAK VALUE   │──S582
  │   fp [I, J] OF EACH AREA │
  └─────────────────────────┘
             │
             ▼
  ┌────────────────────────────────┐
  │      CALCULATE Δ fp [I, J] =    │──S583
  │ ABS (fpMAIN−fp) OR MORE FOR ALL AREA │
  └────────────────────────────────┘
             │
             ▼
  ┌─────────────────────────┐
  │ SMOOTHING PROCESSING OF Δ fp │──S584
  └─────────────────────────┘
             │
             ▼
  ┌─────────────────────────┐
  │ param [I, J] = f (Δ fp [I, J]) │──S585
  └─────────────────────────┘
             │
             ▼
        ┌─────────┐
        │   END   │
        └─────────┘
```

# FIG. 65

BACKGROUND IMAGE 31

BACKGROUND IMAGE 32

G

I = 0 ~

I max

J = 0 ~

J LINE

Jmax

MAIN SUBJECT 30

Ii

# FIG. 66

FOCUSING EVALUATION VALUE

fp(i, i)

fp main

$\Delta$ fp

BACKGROUND IMAGE 31

BACKGROUND IMAGE 32

J LINE

AREA Ii

MAIN SUBJECT 30

# FIG. 67

m

| $\alpha$ | $\alpha$ | $\alpha$ |
|---|---|---|
| $\alpha$ | 1 | $\alpha$ |
| $\alpha$ | $\alpha$ | $\alpha$ |

n

PIXEL

## FIG. 68A

## FIG. 68B

## REFERENCES CITED IN THE DESCRIPTION

**Patent documents cited in the description**

- JP 2004279688 A
- US 4185191 A
- JP 2004279683 A
- JP 2002328293 A
- JP 2002165126 A
- JP 2002166126 A

- JP 2007214650 A
- JP 2007011314 A
- WO 2007092545 A
- JP 2007184716 A
- US 20070252074 A